(19) Europäisches Patentamt / European Patent Office / Office européen des brevets

(11) **EP 3 740 814 B1**

(12) # EUROPÄISCHE PATENTSCHRIFT

(45) Veröffentlichungstag und Bekanntmachung des Hinweises auf die Patenterteilung:
**14.02.2024 Patentblatt 2024/07**

(21) Anmeldenummer: **18745881.5**

(22) Anmeldetag: **20.07.2018**

(51) Internationale Patentklassifikation (IPC):
**G02C 7/02** *(2006.01)* **G02C 7/06** *(2006.01)*

(52) Gemeinsame Patentklassifikation (CPC):
**G02C 7/024; G02C 7/022; G02C 7/061;**
G02C 2202/12

(86) Internationale Anmeldenummer:
**PCT/EP2018/069806**

(87) Internationale Veröffentlichungsnummer:
**WO 2019/141386 (25.07.2019 Gazette 2019/30)**

(54) **GLEITSICHT-BRILLENGLAS MIT VARIABLEM BRECHUNGSINDEX UND VERFAHREN ZU DESSEN ENTWURF UND HERSTELLUNG**

PROGRESSIVE SPECTACLE LENS HAVING A VARIABLE REFRACTIVE INDEX AND METHOD OF DESIGNING AND PRODUCING SAME

VERRE DE LUNETTE À FOYER PROGRESSIF AYANT UN INDICE DE RÉFRACTION VARIABLE ET SON PROCÉDÉ DE CONCEPTION ET DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2018 PCT/EP2018/000026**

(43) Veröffentlichungstag der Anmeldung:
**25.11.2020 Patentblatt 2020/48**

(73) Patentinhaber: **Carl Zeiss Vision International GmbH**
**73430 Aalen (DE)**

(72) Erfinder:
• **KELCH, Gerhard**
**73434 Aalen (DE)**
• **MENKE, Christoph**
**73447 Oberkochen (DE)**
• **WIETSCHORKE, Helmut**
**73433 Aalen (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
EP-A1- 0 318 035          EP-A1- 0 347 917
EP-A1- 2 177 943          EP-A1- 2 878 989
EP-A1- 3 273 292          WO-A1-99/13361
WO-A1-2011/093929          GB-A- 2 294 553
US-A- 4 762 408          US-A1- 2004 008 319
US-A1- 2010 238 400          US-B2- 8 186 829

• YUKI SHITANOKI ET AL: "Application of Graded-Index for Astigmatism Reduction in Progressive Addition Lens", APPLIED PHYSICS EXPRESS, Bd. 2, 1. März 2009 (2009-03-01), Seite 032401, XP055392139, JP ISSN: 1882-0778, DOI: 10.1143/APEX.2.032401
• Darryl Meister: "The Optics of Free-Form Progressive Lenses", , 1. Oktober 2008 (2008-10-01), XP055392812, Gefunden im Internet: URL:http://64.50.176.246/files/optics_of_f ree-form_lenses.pdf [gefunden am 2017-07-21]

**Beschreibung**

Die Erfindung betrifft ein computerimplementiertes Verfahren zum Entwerfen eines Gleitsicht-Brillenglases zum Zweck der Verwendung des Entwurfs für die Herstellung eines Gleitsicht-Brillenglases nach dem Oberbegriff des Patentanspruchs 1 sowie ein Verfahren zum Herstellen eines Gleitsicht-Brillenglases nach Anspruch 11 sowie ein Computerprogramm nach dem Patentanspruch 9 und ein computerlesbares Medium nach dem Patentanspruch 10.

Gleitsicht-Brillengläser sind seit Jahrzehnten in der Brillenoptik bekannt und verbreitet. Wie Mehrstärken-Brillengläser (i.A. Zwei- und Dreistärken-Brillengläser) stellen sie dem Alterssichtigen (Presbyopen) eine zusätzliche optische Wirkung im unteren Teil des Glases zum Betrachten naher Objekte, z.B. beim Lesen, zur Verfügung. Diese wird benötigt, da die Augenlinse mit zunehmendem Alter ihre Eigenschaft, auf nahe Objekte fokussieren zu können, mehr und mehr einbüßt. Gleitsichtgläser bieten gegenüber diesen Mehrstärkengläsern den Vorteil, eine stufenlose Zunahme der optischen Wirkung vom Fernteil zum Nahteil bereitzustellen, so dass nicht nur in Ferne und Nähe, sondern auch in allen Zwischenentfernungen ein scharfes Sehen gewährleistet ist.

Das Fernteil ist nach Abschnitt 14.1.1 der DIN EN ISO 13666:2013-10 das Teil eines Mehrstärken- oder Gleitsicht-Brillenglases, das die dioptrische Wirkung für das Sehen in die Ferne besitzt. Entsprechend ist das Nahteil nach Abschnitt 14.1.3 dieser Norm das Teil eines Mehrstärken- oder Gleitsicht-Brillenglases, das die dioptrische Wirkung für das Sehen in die Nähe besitzt.

Gleitsicht-Brillengläser werden bisher üblicherweise aus einem Material mit einheitlicher konstanter Brechzahl hergestellt. Das bedeutet, dass die dioptrische Wirkung des Brillenglases ausschließlich durch entsprechende Formgebung der beiden an Luft grenzenden Flächen (Vorder- bzw. objektseitige Fläche, sowie Rück- bzw. augenseitige Fläche entsprechend den in den Abschnitten 5.8 und 5.9 der DIN EN ISO 13666:2013-10 bereitgestellten Definitionen) des Brillenglases festgelegt ist. Unter dioptrischer Wirkung ist nach der Definition des Abschnitts 9.3 der DIN EN ISO 13666:2013-10 der Sammelbegriff für die fokussierende und die prismatische Wirkung eines Brillenglases zu verstehen.

Um die stufenlose Zunahme der fokussierenden Wirkung in einem Gleitsicht-Brillenglas aus einem Material mit einheitlicher konstanter Brechzahl zu erzeugen, muss auf mindestens einer der beiden Brillenglasflächen eine entsprechende kontinuierliche Änderung der Flächenkrümmung vorhanden sein, wie dies auch Abschnitt 8.3.5 der Norm DIN EN ISO 13666:2013-10 reflektiert, welcher den Begriff "Gleitsicht-Brillenglas" als "Brillenglas mit mindestens einer Gleitsichtfläche und einer zunehmenden (positiven) Wirkung, wenn der Brillenträger nach unten blickt" definiert. Eine Gleitsichtfläche ist nach Abschnitt 7.7 eine nichtrotationssymmetrische Fläche mit einer kontinuierlichen Änderung der Krümmung über die gesamte Gleitsichtfläche oder einen Teil davon, die im Allgemeinen dazu dient, einen zunehmenden Nahzusatz oder eine Degressionswirkung bereitzustellen.

Für eine vorgegebene Verordnung lässt sich nach diesem vorstehend beschriebenen Stand der Technik ein Gleitsichtglas optimieren, das unter Berücksichtigung von Gebrauchsbedingungen, Dickenvorgaben usw. und Verwendung eines Materials mit konstanter Brechzahl auf ein bestimmtes Design führt. Als Design bezeichnen wir hierbei die Verteilung der sphärischen und astigmatischen Restfehler für den Brillenträger über das gesamte Glas.

Für dieses Gleitsichtglas lässt sich eine Hauptblicklinie bestimmen, welche die Gesamtheit aller Durchblickpunkte durch eine der beiden Flächen, z.B. die Vorderfläche oder die Rückfläche, insbesondere die Gleitsichtfläche bei der Blickbewegung des Auges auf Objektpunkte geradeaus vor dem Brillenträger von der Ferne zur Nähe darstellt und für die insbesondere im Zwischenteil geringe astigmatische Restfehler erzielt werden können. Zwischenteil ist der gesamte Übergangsbereich zwischen Fernteil (Bereich für das Sehen in die Ferne; siehe 14.1.1 in DIN EN ISO 13666:2013-10: Teil eines Mehrstärken- oder Gleitsicht-Brillenglases, das die dioptrische Wirkung für das Sehen in die Ferne besitzt) und Nahteil (Bereich für das Sehen in der Nähe; siehe 14.1.3 DIN EN ISO 13666:2013-10: Teil eines Mehrstärken- oder Gleitsicht-Brillenglases, das die dioptrische Wirkung für das Sehen in die Nähe besitzt). In 14.1.2 der DIN EN ISO 13666:2013-10 ist der Zwischenteil definiert als Teil eines Dreistärken-Brillenglases, das die dioptrische Wirkung für das Sehen in eine Entfernung besitzt, die zwischen Ferne und Nähe liegt.

Allerdings werden die astigmatischen Restfehler neben der Hauptblicklinie wegen dem Gesetz von Minkwitz in horizontaler Richtung ansteigen (bedingt durch den Wirkungsanstieg in vertikaler Richtung).

Die WO 89/04986 A1 geht zunächst von Gleitsicht-Brillengläsern (in diesem Dokument wird der Ausdruck "progressive Brillengläser" verwendet) der vorstehend beschriebenen Art aus. Dem Dokument entnimmt man auf Seite 1, 2. und 3. Abschnitt, dass "der Herstellvorgang und insbesondere das Polieren" von Gleitsichtflächen von Gleitsicht-Brillengläsern aufgrund deren "sehr stark von der sphärischen Form abweich[enden]" Flächengestaltung "schwierig" sei und dass die hergestellte Fläche stark von der berechneten Soll-Form abweiche. "Darüber hinaus" sei "es - zumindest mit einer progressiven Fläche - nicht möglich, die Abbildungsfehler und insbesondere den Astigmatismus und die Verzeichnung über das gesamte Glas klein zu halten."

Die WO 89/04986 A1 führt weiter auf Seite 2 aus, dass zwar Brillengläser mit sich änderndem Brechungsindex bekannt seien, die Realisierung von progressiven Brillengläsern durch Ersatz der komplizierten Flächengestaltung der Gleitsichtfläche durch einen variierenden Brechungsindex in der Vergangenheit vermutlich an dessen erwarteter ähnlich komplizierter Brechungsindex-Funktion gescheitert sei.

Die WO 89/04986 A1 behauptet, "bei vergleichbaren Abbildungseigenschaften eine vereinfachte Herstellung" zu erreichen, "wenn [...] ein sich wenigstens längs der Hauptblicklinie im Zwischenteil ändernder Brechungsindex des Glasmaterials zumindest teilweise zur Zunahme des Brechwerts beiträgt." Dies wird allerdings unter der Zielsetzung realisiert, dass "die Unterschiede der Krümmungsradien zwischen Fernteil und Nahteil abgebaut [werden], so dass zum einen die Bearbeitung eines Rohlings mit sphärischen Begrenzungsflächen zur Herstellung einer progressiven Fläche verkürzt wird" und "zum anderen [...] der Poliervorgang, der bei progressiven Brillengläsern gemäß dem Stand der Technik wesentlichen dem eines sphärischen Glases entspricht, vereinfacht und das Ergebnis des Poliervorgangs verbessert [wird]". Zum Zeitpunkt des Anmeldetags der WO 89/04986 A1 war es nämlich üblich, großflächige Polierwerkzeuge einzusetzen, deren Polierflächen in etwa die Größe der zu polierenden Gleitsichtfläche aufwiesen.

Weiter führt das Dokument auf Seite 5, Zeile 15ff aus: Wenn zusätzlich auch der Astigmatismus entlang des Hauptmeridians durch die Variation des Brechungsindex verringert wird, so bedeutet dies, dass auch die Einschränkung bei der Gestaltung des Brillenglases, dass der Flächenastigmatismus längs des Hauptmeridians bzw. der Hauptblicklinie klein sein soll, wegfällt, so dass das [...] Brillenglas nicht dem Satz von Minkwitz unterworfen ist, und das Brillenglas unter anderen Gesichtspunkten wesentlich günstiger gestaltet werden kann.

Erklärtes Ziel dieses Dokuments ist es, auf einfache Weise polierbare Flächen zu erhalten, indem die Brechungsindexvariation entsprechend kompliziert gestaltet wird. Ausdrücklich wird auf Seite 6, zweitletzter Absatz erklärt: "Dabei ist es im Extremfall sogar möglich, dass beide Flächen des progressiven Brillenglases sphärische Flächen sind. Selbstverständlich ist es aber auch möglich, rotationssymmetrische asphärische Flächen zu verwenden." Andererseits äußert das Dokument keine Einschränkung hinsichtlich der Komplexität der Brechungsindexfunktion, die sich ausweislich des letzten Satzes auf der Seite 6 im Falle einer eindimensionalen "Funktion n(y) [...] beispielsweise mittels Spline-Funktionen beschreiben" lassen kann.

Das Dokument offenbart zwei Ausführungsbeispiele. Beim zweiten Ausführungsbeispiel "[sind] sowohl die Vorderfläche als auch die augenseitige Fläche [...] sphärische Flächen" (siehe ebd., S. 11, letzter Satz). Beim ersten Ausführungsbeispiel besitzt die Vorderfläche einen Hauptmeridian in Form eines Kreises (vgl. ebd. S. 10, Z. 6-13) und senkrecht dazu die Gestalt von Kegelschnitten (vgl. ebd., S. 11, Z. 6-14). Die Rückseite ist bei dem ersten Ausführungsbeispiel sphärisch.

Zum ersten Ausführungsbeispiel weist das Dokument "ausdrücklich [...] daraufhin [...], dass bei der Optimierung die Korrektur von Abbildungsfehlern nicht beachtet worden ist, und dass sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion".

Die WO 99/13361 A1 beschreibt ein sogenanntes "MIV" -Linsenobjekt, welches alle funktionellen Merkmale von Gleitsichtgläsern aufweisen soll, nämlich ein Fernteil, ein Nahteil und eine Progressionszone, deren Randbereiche aber frei von astigmatischen Aberrationen sein sollen. Dieses Dokument beschreibt, dass ein derartiges Linsenobjekt eine sphärische Vorder- und eine sphärische Rückfläche aufweisen kann. Das Linsenobjekt soll eine Progressionszone mit vom Fernteil zum Nahteil kontinuierlich zunehmendem Brechungsindex aufweisen. Mit einer derartigen Ausführung lassen sich allerdings in der Regel nicht alle gewünschten Additionen realisieren. Das Dokument führt daher aus: "Falls gewünscht, kann der Bereich von Zusätzen überbrückt werden, falls dies durch den einzigen variablen Brechungsindex unmöglich ist, auch durch Herstellen der Linsen mit einem Materialrohblock mit variablem Brechungsindex, wie oben beschrieben, und Bilden von Kurven mit variabler Geometrie wie die herkömmlicher progressiver Linsen, wodurch das Ergebnis erzielt wird, dass sie im Vergleich zu diesen letzteren eine viel höhere Wirkung aufweisen, da die Linse mit variierendem Brechungsindex in den verschiedenen Bereichen die gewünschte Addition unter Verwendung viel weniger differenzierter Kurven zwischen der Fernteilwirkung und der Nahteilwirkung mit einer Verringerung der Aberrationsfläche und einer Vergrößerung der Nutzsichtfläche bereitstellt."

Die US 2010/238400 A1, von der die Erfindung ausgeht, beschreibt jeweils aus mehreren Schichten bestehende Gleitsicht-Brillengläser. Wenigstens eine der Schichten kann einen variierenden Brechungsindex aufweisen, welcher bezüglich zweier orthogonal zueinander verlaufenden Meridianen beschrieben wird. Darüber hinaus kann zumindest eine der Flächen einer der Schichten eine progressive Flächengestalt aufweisen. Es ist beschrieben, dass der Brechungsindexverlauf in horizontaler Richtung zur Vollkorrektur der durch die Geometrie der Flächen verwendet werden kann.

Yuki Shitanoki et al: "Application of Graded-Index for Astigmatism Reduction in Progressive Addition Lens", Applied Physics Express, Bd. 2, 1. März 2009, Seite 032401 beschreibt durch Vergleich zweier mit Hilfe derselben Formschale abgegossener Gleitsicht-Brillengläser, dass der Astigmatismus bei einem Gleitsicht-Brillenglas mit einem Brechungsindexgradienten gegenüber einem Gleitsicht-Brillenglas ohne einen Brechungsindexgradienten verringert werden kann.

Insbesondere im Hinblick auf die Unterscheidbarkeit des Gegenstands der vorliegenden Erfindung von den in der US 2010/238400 A1 beschriebenen Mehrschichtbrillengläsern wird hiermit ausgeführt, dass Brillengläser regelmäßig einem oder mehreren Veredelungsprozessen unterzogen werden. Insbesondere werden ein- oder beidseitig Funktionsschichten appliziert. Derartige Funktionsschichten sind Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsschichten ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1. Diese Funktionsschichten haben keinen oder einen vernachlässigbaren Einfluss auf die im Rahmen der vorliegenden Patentanmeldung diskutierten dioptrischen Eigenschaften des Brillenglases. Die in der US 2010/238400 A1 beschriebenen Schichten haben demgegenüber einen nicht zu vernachlässigenden Einfluss auf die dioptrische Wirkung des Gleitsicht-Brillenglases.

Die EP 2 177 943 A1 beschreibt ein Verfahren zum Berechnen durch Optimierung eines optischen Systems, zum Beispiel einer ophthalmischen Linse gemäß wenigstens einem Kriterium aus einer Liste von für den Seheindruck eines Probanden beeinflussenden Kriterien. Das Dokument schlägt vor, eine Kostenfunktion unter Berücksichtigung von Zielwerten und Kriteriumswerten zu minimieren. Es ist eine allgemeine Formel für eine derartige Kostenfunktion angegeben. Es werden u.a. die beiden Beispiele angegeben:

Abschnitt [0016]: In einer Ausführungsform umfasst das zu optimierende arbeitende optische System mindestens zwei optische Oberflächen und die modifizierten Parameter sind mindestens die Koeffizienten der Gleichungen von zwei optischen Oberflächen des arbeitenden optischen Systems.

Abschnitt [0018]: In einer Ausführungsform, in der das zu optimierende optische System mindestens zwei optische Oberflächen aufweist, wird die Modifikation des optischen Bearbeitungssystems so betrieben, dass zumindest der Index des arbeitenden optischen Systems modifiziert wird. Es ist möglich, eine Linse aus einem inhomogenen Material herzustellen, in dem sich ein Gradient im Brechungsindex befindet (bekannt als GRIN-Linse). Zum Beispiel kann die Verteilung des Index, der optimiert wird, axial oder radial sein und / oder kann von der Wellenlänge abhängen.

Zwei weitere relevante Dokumente sind die Patentschriften EP3352001 B1 und EP3591458 B1.

Die Aufgabe der Erfindung wird nunmehr darin gesehen, ein Gleitsicht-Brillenglas bereitzustellen, welches gegenüber den aus dem Stand der Technik bekannten Gleitsicht-Brillengläsern weiter verbesserte optische Eigenschaften für den Brillenträger aufweist und ein Verfahren bereitzustellen, mit welchem ein Gleitsicht-Brillenglas mit weiter verbesserten optischen Abbildungseigenschaften entworfen und hergestellt werden kann.

Diese Aufgabe wird durch ein computerimplementiertes Verfahren zum Entwerfen eines Gleitsicht-Brillenglases zum Zweck der Verwendung des Entwurfs für die Herstellung eines Gleitsicht-Brillenglases nach Patentanspruch 1 sowie ein Verfahren zum Herstellen eines Gleitsicht-Brillenglases nach Anspruch 11 gelöst. Die Erfindung ist in den Patentansprüchen definiert.

Vorteilhafte Ausführungen und Weiterbildungen sind Gegenstand der Unteransprüche. Während die WO 89/04986 A1 vorschlägt, durch Einführung einer komplizierten aber entgegen früheren Annahmen technisch realisierbaren Brechungsindexverteilung die Komplexität der notwendigen Flächengeometrie zu verringern, um deren Herstellung zu vereinfachen (siehe ebd., S. 2, 4. Abschnitt, letzte Zeile; S. 4, erster Abschnitt, letzter Satz; Seite 5, erster Abschnitt; Seite 5, zweiter Abschnitt; Seite 5, letzter Abschnitt, letzter Satz; Seite 6, zweitletzter Abschnitt) und auf diese Weise die die optischen Eigenschaften beeinträchtigenden großen Abweichungen der gefertigten Fläche von der berechneten Fläche zu reduzieren (siehe ebd. S. 1, 3. Abschnitt) haben die Erfinder erkannt, dass dieses Vorgehen nicht zwangsläufig zu Gleitsicht-Brillengläsern mit für den Brillenträger besseren optischen Eigenschaften führt. Die Erfinder haben erkannt, dass es auf das Zusammenspiel des Grads der Komplexität der Geometrie der Gleitsichtfläche und des Grads der Komplexität der Brechungsindexverteilung ankommt. Abweichend von der in der WO 89/04986 A1 beschriebenen Lösung ist Gegenstand der Offenbarung daher ein Erzeugnis umfassend ein Gleitsicht-Brillenglas oder auf einem Datenträger befindliche Darstellung des Gleitsicht-Brillenglases oder einen Datenträger mit einer virtuellen Repräsentation des Gleitsicht-Brillenglases vor. Das Gleitsicht-Brillenglas weist eine Vorderfläche und eine Rückfläche sowie einen räumlich variierenden Brechungsindex auf. Die Vorderfläche oder die Rückfläche oder Vorder- und Rückfläche sind als Gleitsichtfläche ausgebildet. Das Gleitsicht-Brillenglas zeichnet sich dadurch aus, dass die als Gleitsichtfläche ausgebildete Vorderfläche als Freiformfläche ausgebildet ist oder dass die als Gleitsichtfläche ausgebildete Rückfläche als Freiformfläche ausgebildet ist oder dass beide als Gleitsichtflächen ausgebildeten Flächen als Freiformflächen ausgebildet sind. Es ist also auch der Fall eingeschlossen, bei dem zwar beide Flächen, nämlich Vorder- und Rückfläche als Gleitsichtflächen ausgebildet sind, aber nur eine der beiden Flächen lediglich als Freiformfläche vorliegt.

Unter dem Ausdruck "auf einem Datenträger befindliche Darstellung eines Gleitsicht-Brillenglases" versteht man z.B. eine in einem Speicher eines Computers gespeicherte Darstellung des Gleitsicht-Brillenglases.

Die Darstellung des Gleitsicht-Brillenglases umfasst insbesondere eine Beschreibung der geometrischen Gestalt und des Mediums des Gleitsicht-Brillenglases. Eine derartige Darstellung kann z.B. eine mathematische Beschreibung der Vorderfläche, der Rückfläche, der Anordnung dieser Flächen zueinander (einschließlich der Dicke) und der Randbegrenzung des Gleitsicht-Brillenglases sowie der Brechzahlverteilung des Mediums, aus dem das Gleitsicht-Brillenglas bestehen soll, umfassen. Zu dieser Darstellung der geometrischen Gestalt des Brillenglases könnte auch die die Lage von bestimmten Konstruktionsbezugspunkten, Zentrierpunkten sowie von Markierungen zur Ausrichtung der Linse (Permanentmarkierung) siehe dazu Abschnitt 14.1.24 der DIN EN ISO 13666:2012) gehören. Die Darstellung kann in kodierter oder gar in verschlüsselter Form vorliegen. Unter Medium ist hier das Material/die Materialien bzw. der Stoff gemeint, aus dem das Gleitsicht-Brillenglas gefertigt ist. Das Gleitsicht-Brillenglas kann auch aus mehreren Schichten bestehen, z.B. auch aus einem Dünnstglas mit einer Dicke zwischen 10 $\mu m$ und 500 $\mu m$ und darauf aufgebrachtem Kunststoff.

Die Darstellung, insbesondere die vorstehend im Detail erläuterte Beschreibung der geometrischen Gestalt des Gleitsicht-Brillenglases und des Mediums, aus dem das Gleitsicht-Brillenglas gebildet wird, kann auch durch eine Transformation in Fertigungsdaten zum Herstellen des Gleitsicht-Brillenglases transformierbar sein. Die Darstellung kann alternativ oder zusätzlich die transformierten Fertigungsdaten zum Herstellen des Gleitsicht-Brillenglases umfassen.

Unter Fertigungsdaten versteht man die Daten, die (i) in die Ansteuereinrichtung der Fertigungsmaschine oder (ii) in die Ansteuereinrichtung oder die Ansteuereinrichtungen der Fertigungsmaschinen geladen werden können, um das Gleitsicht-Brillenglas mit der erfindungsgemäßen geometrischen Gestalt und dem Medium zu fertigen.

Unter virtueller Repräsentation versteht man eine Beschreibung der geometrischen Gestalt und des Mediums, insbesondere dessen Brechungsindexprofils, des Gleitsicht-Brillenglases. Eine derartige Darstellung kann z.B. eine mathematische Beschreibung der Vorderfläche, der Rückfläche, der Anordnung dieser Flächen zueinander (einschließlich der Dicke) und der Randbegrenzung des Gleitsicht-Brillenglases sowie der Brechzahlverteilung des Mediums, aus dem das Gleitsicht-Brillenglas bestehen soll, umfassen. Die Darstellung kann in kodierter oder gar in verschlüsselter Form vorliegen. Unter Medium ist hier das Material/die Materialien bzw. der Stoff gemeint, aus dem das Gleitsicht-Brillenglas gefertigt ist.

Die Vorderfläche oder objektseitige Fläche eines Brillenglases ist nach Abschnitt 5.8 der DIN EN ISO 13666:2013-10 die Fläche eines Brillenglases, die bestimmungsgemäß in der Brille vom Auge abgewandt liegt. Demgemäß ist nach Abschnitt 5.9 dieser Norm die Rückfläche die augenseitige Fläche, also die Fläche eines Brillenglases, die bestimmungsgemäß in der Brille dem Auge zugewandt liegt.

Eine Gleitsichtfläche ist nach Abschnitt 7.7 der DIN EN ISO 13666:2013-10 eine nichtrotationssymmetrische Fläche mit einer kontinuierlichen Änderung der Krümmung über die gesamte Fläche oder einen Teil davon, die im Allgemeinen dazu dient, einen zunehmenden Nahzusatz oder eine Degressionswirkung bereitzustellen. Eine kontinuierliche Änderung schließt sprunghafte Änderungen aus. Im Allgemeinen bedeutet insbesondere im Rahmen der Erfindung, dass der Nahzusatz oder die Degressionswirkung bereitgestellt werden kann aber nicht muss. Insbesondere kann im Rahmen der vorliegenden Erfindung der räumlich variierende Brechungsindex zumindest teilweise diese Aufgabe übernehmen. Jede Freiformfläche ist nach dieser Definition eine Gleitsichtfläche aber nicht umgekehrt.

Unter einer Freiformfläche versteht man im weiteren Sinn eine komplexe Fläche, die sich insbesondere mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)) darstellen lässt. Hiervon zu unterscheiden sind einfache Flächen, wie z.B. sphärische Flächen, rotationssymmetrische asphärische Flächen, zylindrische Flächen, torische Flächen oder auch die in der WO 89/04986 A1 beschriebenen Flächen, die zumindest längs des Hauptmeridians als Kreis beschrieben sind (vgl. ebd. S. 12, Z. 6-13). Anders ausgedrückt lassen sich Freiformflächen nicht in Form klassischer Regelkörper wie z.B. sphärische Flächen, asphärische Flächen, zylindrische Flächen, torische Flächen oder auch die in der WO 89/04986 A1 beschriebenen Flächen, darstellen (siehe z.B. https://www.computerwoche.de/a/die-natur-kennt-auch-nur-freiformflaechen, 1176029 heruntergeladen am 18.1.2018; http://www.megacad.de/kennenlernen/megacadschulungen/schulungsinhalte/schulung-freiformflaechen.html heruntergeladen am 18.1.2018) jedoch beispielsweise mittels ausschließlich (insbesondere stückweise) polynomialer Funktionen (insbesondere polynomiale Splines, wie z.B. bikubische Splines, höhergradige Splines vierten Grades oder höher, Zernike-Polynome, Forbes-Flächen, Tschebyschew-Polynome, Fourierreihen, polynomiale Non-uniform rational B-Splines (NURBS)). Freiformflächen sind demnach Flächen, die keiner Regelgeometrie entsprechen (siehe z.B. https://www.infograph.de/de/nurbs heruntergeladen am 18.1.2018; https://books.google.de/books?id=QpugBwAAQBAJ&pg=PA101&lpg=PA101&dq=regelgeome trie+definition&source=bl&ots=CJjmQwghvo&sig=MvsGv0sqbAVEygCaW-JQhfJ99jw&hl=de&sa=X&ved=0ahUKEwi_jcD5y-HYAhXDXCwKHUaQCBw4ChDoAQgsMAI#v=onepage&q=regelgeometrie%20definition&f= false heruntergeladen am 18.1.2018) oder die nicht mittels Formen der analytischen Geometrie beschreibbar sind (siehe z.B. https://books.google.de/books?id=LPzBgAAQBAJ&pg= PA26&lpg=PA26&dq=regelgeometrie+definition& source=bl&ots=e 1 upLSj inn& sig=hUNimu8d eH5x8OvCiYsa242ddn8&hl=de&sa=X&ved=0ahUKEwi_jcD5y-HYAhXDXCwKHUaQCBw4ChDoAQgvMAM#v=onepage&q=regelgeometrie%20definition& f=false heruntergeladen am 18.1.2018).

Nach der Erfindung ist vorgesehen, dass die Freiformfläche eine Freiformfläche im engeren Sinn entsprechend dem Abschnitt 2.1.2 der DIN SPEC 58194 vom Dezember 2015 ist, nämlich eine in Freiformtechnologie gefertigte Brillenglasfläche, die im Rahmen der Grenzen der Differentialgeometrie mathematisch beschrieben wird und weder punkt- noch achsensymmetrisch ist.

Weiter insbesondere kann in einer vorteilhaften Ausführungsvariante die Freiformfläche nicht nur keine Punktsymmetrie und keine Achsensymmetrie aufweisen, sondern auch keine Rotationssymmetrie und keine Symmetrie bzgl. einer Symmetrieebene. Obwohl es günstig ist, jede Beschränkung hinsichtlich der Flächengeometrie aufzuheben, ist es in Anbetracht derzeit üblicher Anforderungen an die optischen Eigenschaften von Gleitsicht-Brillengläsern hinreichend, nur Freiformflächen mit einem hohen Grad an Komplexität als Gleitsichtflächen zuzulassen. Lässt man darüber hinaus dasselbe Maß an Komplexität für die Brechungsindexverteilung über das Gleitsicht-Brillenglas zu und zwar zumindest in zwei oder vorzugsweise in drei Raumdimensionen, so werden diese Gleitsicht-Brillengläser den Anforderungen der Brillenträger an deren optischen Eigenschaften in höchstem Maße gerecht.

Die Erfindung ist nunmehr durch eine der folgenden Alternativen gekennzeichnet:

(a) Der Brechungsindex ändert sich nur in einer ersten Raumdimension und in einer zweiten Raumdimension und ist in einer dritten Raumdimension konstant, wobei eine Verteilung des Brechungsindex in der ersten Raumdimension und der zweiten Raumdimension weder eine Punkt- noch eine Achsensymmetrie aufweist.

(b) Der Brechungsindex ändert sich in einer ersten Raumdimension und in einer zweiten Raumdimension und in einer dritten Raumdimension. Eine Verteilung des Brechungsindex in der ersten Raumdimension und der zweiten Raumdimension weist in allen Ebenen senkrecht zu der dritten Raumdimension weder eine Punkt- noch eine Achsensymmetrie auf.

(c) Der Brechungsindex ändert sich in einer ersten Raumdimension und in einer zweiten Raumdimension und in einer dritten Raumdimension. Eine Verteilung des Brechungsindex weist überhaupt keine Punkt- und keine Achsensymmetrie auf.

Die dritte Raumdimension im Fall (a) oder (b) verläuft in einer bevorzugten Ausführungsvariante in einer Richtung, die

- um nicht mehr als 5° von der Nullblickrichtung bei bestimmungsgemäßem Gebrauch differiert oder
- um nicht mehr als 10° von der Nullblickrichtung bei bestimmungsgemäßem Gebrauch differiert oder
- um nicht mehr als 20° von der Nullblickrichtung bei bestimmungsgemäßem Gebrauch differiert oder
- um nicht mehr als 5° von der Hauptblickrichtung bei bestimmungsgemäßem Gebrauch differiert oder
- um nicht mehr als 10° von der Hauptblickrichtung bei bestimmungsgemäßem Gebrauch differiert oder
- um nicht mehr als 20° von der Hauptblickrichtung bei bestimmungsgemäßem Gebrauch differiert oder
- um nicht mehr als 5° von der Richtung des Normalenvektors der Vorderfläche in der geometrischen Mitte des Gleitsicht-Brillenglases differiert oder
- um nicht mehr als 10° von der Richtung des Normalenvektors der Vorderfläche in der geometrischen Mitte des Gleitsicht-Brillenglases differiert oder
- um nicht mehr als 20° von der Richtung des Normalenvektors der Vorderfläche in der geometrischen Mitte des Gleitsicht-Brillenglases differiert oder
- um nicht mehr als 5° von der Richtung des Normalenvektors am prismatischen Messpunkt differiert oder
- um nicht mehr als 10° von der Richtung des Normalenvektors am prismatischen Messpunkt differiert oder
- um nicht mehr als 20° von der Richtung des Normalenvektors am prismatischen Messpunkt differiert oder
- um nicht mehr als 5° von der Richtung des Normalenvektors am Zentrierpunkt differiert oder
- um nicht mehr als 10° von der Richtung des Normalenvektors am Zentrierpunkt differiert oder
- um nicht mehr als 20° von der Richtung des Normalenvektors am Zentrierpunkt differiert.

Der prismatische Messpunkt ist nach DIN EN ISO 13666:2013-10 - 14.2.12 (bei einem Gleitsicht-Brillenglas oder einem Gleitsicht-Brillenglasblank) vom Hersteller angegebener Punkt auf der Vorderfläche, in dem die prismatischen Wirkungen des fertigen Glases bestimmt werden müssen. Die Definition des Zentrierpunkts findet sich in der DIN EN ISO 13666:2013-10 im Abschnitt 5.20.

In einer weiteren Ausführungsvariante ist vorgesehen, dass

(i) die als Freiformfläche ausgebildete Vorderfläche so gestaltet ist, dass das Maximum des Betrags der mittleren Krümmung der Vorderfläche im Progressionskanal ist, und/oder

(ii) die als Freiformfläche ausgebildete Rückfläche so gestaltet ist, dass das Minimum des Betrags der mittleren Krümmung der Rückfläche im Progressionskanal ist, oder

(iii) die Rückfläche eine sphärische, rotationssymmetrisch asphärische oder torische Flächengeometrie aufweist und die als Freiformfläche ausgebildete Vorderfläche so gestaltet ist, dass das Maximum des Betrags der mittleren Krümmung der Vorderfläche im Progressionskanal ist, oder

(iv) die Vorderfläche eine sphärische, rotationssymmetrisch asphärische oder torische Flächengeometrie aufweist und die als Freiformfläche ausgebildete Rückfläche so gestaltet ist, dass das Minimum des Betrags der mittleren Krümmung der Rückfläche im Progressionskanal ist, oder

(v) die Rückfläche nicht als Freiformfläche ausgebildet ist und die als Freiformfläche ausgebildete Vorderfläche so gestaltet ist, dass das Maximum des Betrags der mittleren Krümmung der Vorderfläche im Progressionskanal ist, oder

(vi) die Vorderfläche nicht als Freiformfläche ausgebildet ist und die als Freiformfläche ausgebildete Rückfläche so gestaltet ist, dass das Minimum des Betrags der mittleren Krümmung der Rückfläche im Progressionskanal ist.

Der Progressionskanal ist dabei nach DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen.

Derartige Flächen können mit den heute verfügbaren Produktionsmethoden mit höchster Genauigkeit hergestellt werden. Insbesondere bei der Wahl dieser Flächengeometrie für die Vorderfläche ergeben sich Vorteile bei der Herstellung. Der Polierabtrag unter Verwendung derzeit gängiger Polierwerkzeuge, deren wenigstens annähernd sphärische Polierfläche in etwa einem Drittel der zu polierenden Brillenglasfläche entspricht, kann hinreichend homogen über der zu polierenden Brillenglasfläche gehalten werden, so dass die Abweichung von der berechneten Brillenglasgeometrie vergleichsweise gering ist. Die Abweichung der tatsächlichen optischen Eigenschaften von den berechneten optischen Eigenschaften des Brillenglases ist damit höchst gering.

Eine weitere Variante der Erfindung ist dadurch gekennzeichnet, dass das Gleitsicht-Brillenglas so gestaltet ist, dass es für den Gleitsicht-Brillenträger die nachfolgend beschriebenen gegenüber einem Vergleichs-Gleitsicht-Brillenglas, welches keine räumliche Brechungsindexvariation aber eine identische Verteilung des sphärischen Äquivalents aufweist, vorteilhafteren optischen Eigenschaften besitzt.

Erläuternd wird ausgeführt, dass ein Brillenglas für eine vorbestimmte Anordnung vor einem Auge eines Brillenträgers und für eine oder mehrere vorbestimmte Objektentfernungen, unter denen der Brillenträger ein Objekt scharf wahrnehmen soll, konzipiert ist. In einer davon abweichenden Anordnung vor dem Auge des Brillenträgers und für andere Objektentfernungen ist das Brillenglas wertlos oder die optische Qualität ist für den Brillenträger stark eingeschränkt. Dies gilt umso mehr für Gleitsicht-Brillengläser. Demnach ist ein Gleitsicht-Brillenglas lediglich über die Kenntnis der vorbestimmten Anordnung vor dem Auge des Brillenträgers charakterisiert. Anders ausgedrückt ist die Kenntnis der Anordnung des Brillenglases in Ort und Ausrichtung im Raum in Bezug auf das Auge notwendig aber auch hinreichend, um dieses in eineindeutiger Weise in dessen optischer Wirkung für den Brillenträger zu charakterisieren. Darüber hinaus ist ein Optiker auch nur dann in der Lage, das Brillenglas lagerichtig in eine Brillenfassung einzusetzen, wenn er die Anordnung des Brillenglases in Ort und Ausrichtung in Bezug auf das Auge des Brillenträgers kennt. Eine Darstellung der vorbestimmten Anordnung des Gleitsicht-Brillenglases vor einem Auge eines Gleitsicht-Brillenträgers, für den das Gleitsicht-Brillenglas bestimmt ist, ist damit untrennbarer Bestandteil des Produkts (Erzeugnis) oder der Handelsware "Gleitsicht-Brillenglas".

Der Hersteller bringt zum Zweck der Gewährleistung einer lage- und orientierungsrichtigen Anordnung im Gleitsicht-Brillenglas durch den Optiker permanent vorhandene Markierungen an. Der DIN EN ISO 13666:2013-10 entnimmt man unter 14.1.24, dass diese als Markierung zur Ausrichtung oder Permanentmarkierung bezeichnet wird und vom Hersteller angebracht wurde, um die horizontale Orientierung des Brillenglases [...] oder die Rekonstruktion weiterer Bezugspunkte zu ermöglichen. Nach Abschnitt 6.1 der DIN EN ISO 14889:2009 muss der Hersteller rohkantiger fertiger Brillengläser durch Angaben auf der Einzelverpackung oder in einem Begleitdokument eine Identifizierung ermöglichen. Insbesondere hat er Korrekturwerte für Gebrauchssituationen, die Nahzusatzwirkung, die Typbezeichnung oder den Handelsnamen und die notwendige Information, um den Nahzusatz zu messen. Aus der Typbezeichnung oder dem Handelsnamen ergibt sich das von dem Hersteller dem Gleitsicht-Brillenglas zugrunde gelegte Objektabstandsmodell. Evtl. ist der Objektabstand für den Fern- oder Nahbereich auch ein Bestellparameter, der vom Optiker angegeben werden kann oder muss. Unter Hersteller ist nach 3.1 dieser Norm eine natürliche oder juristische Person, die das rohkantige fertige Brillenglas auf den Markt bringt, zu verstehen.

Bei dieser Variante umfasst das Erzeugnis ferner eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist. Wie bereits ausgeführt weist das Gleitsicht-Brillenglas (nicht nur) bei dieser Variante eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, auf. Ferner weist das Gleitsicht-Brillenglas einen Progressionskanal mit einer Breite auf. Das nach dieser Variante konzipierte Gleitsicht-Brillenglas besitzt einen Brechungsindex, der räumlich derart variiert, dass die Breite des Progressionskanals des Gleitsicht-Brillenglases wenigstens in einem Schnitt (z.B. in einem horizontalen Schnitt bzw. im Bereich des Progressionskanals, in dem der Wirkungszuwachs zwischen 2 5% und 75 % der Addition liegt oder über die gesamte Länge; die Breite des Progressionskanals am Anfang und am Ende des Progressionskanals hängt mitunter noch von der Ausgestaltung des Fern- bzw. Nahteil ab) oder über die gesamte Länge des Progressionskanals größer ist, als die Breite des Progressionskanals eines Vergleichs-Gleitsicht-Brillenglases für eine gleiche Verordnung und bei gleichem Objektabstandsmodell mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Der Begriff "sphärisches Äquivalent" ist hierbei definiert als das arithmetische Mittel der fokussierenden Wirkung, wie dies beispielsweise aus Albert J. Augustin: Augenheilkunde. 3., komplett überarbeitete und erweiterte Auflage. Springer, Berlin u. a. 2007, ISBN 978-3-540-30454-8, S. 1272 oder Heinz Diepes, Ralf Blendowske: Optik und Technik der Brille. 1. Auflage, Optische Fachveröffentlichung GmbH, Heidelberg 2002, ISBN 3-922269-34-6, S. 482 hervorgeht:

$$Sph\ddot{a}risches\ \ddot{A}quivalent = Sph\ddot{a}re + \frac{1}{2} \times Zylinder$$

Die fokussierende Wirkung ist nach Abschnitt 9.2 der DIN EN ISO 13666:2013-10 der Sammelbegriff für die sphärische und astigmatische Wirkung eines Brillenglases. Die sphärische Wirkung ist in der Gleichung durch "Sphäre" abgekürzt, die astigmatische Wirkung ist repräsentiert durch "Zylinder". Für den Begriff sphärisches Äquivalent wird auch der Begriff mittlere sphärische Wirkung verwendet.

Der Progressionskanal ist -wie oben bereits ausgeführt wurde- nach der DIN EN ISO 13666:2013-10 Absatz 14.1.25 der Bereich eines Gleitsicht-Brillenglases, der scharfes Sehen für Entfernungen ermöglicht, die zwischen der Ferne und der Nähe liegen. In der Mitte des Progressionskanals verläuft die Hauptblicklinie, welche die Gesamtheit aller Durchblickpunkte durch eine der beiden begrenzenden Flächen, d.h. die Vorderfläche oder die Rückfläche des Gleitsicht-Brillenglases bei der Blickbewegung des Auges auf Objektpunkte geradeaus vor dem Brillenträger von der Ferne zur Nähe darstellt. Die Hauptblicklinie wird regelmäßig auf der Vorderfläche angenommen. Anders ausgedrückt wird als Hauptblicklinie diejenige Linie auf der Vorderfläche eines Brillenglases bezeichnet, die die Hauptdurchblickpunkte durch das Gleitsichtglas für das Sehen in die Ferne und in die Nähe miteinander verbindet und auf der die Durchstoßpunkte der Sehstrahlen für Zwischenentfernungen in Richtung "geradeaus" liegen (Anmerkung: die Verwendung der Rückfläche als Bezugsfläche, auf der die Hauptblicklinie liegt ist eher unüblich). Die Hauptblicklinie ist regelmäßig eine im Fern- und im Nahteil angenähert senkrecht und im Progressionskanal, also dem Teil eines Gleitsicht-Brillenglases, das die dioptrische Wirkung für das Sehen in Entfernungen besitzt, die zwischen Ferne und Nähe liegen, gewunden verlaufende Linie. Die Länge des Progressionskanals kann sich z.B. durch die Lage der Fern- und Nah-Konstruktionsbezugspunkte oder die Lage der Fern- und Nah-Bezugspunkte ergeben. Der Fern-Konstruktionsbezugspunkt ist nach 5.13 der DIN EN ISO 13666:2013-10 der Punkt auf der Vorderfläche eines fertigen Brillenglases oder der fertig bearbeiteten Fläche eines Brillenglasblanks, in dem nach Angabe des Herstellers die Konstruktions-Sollwerte für das Fernteil vorliegen. Entsprechend ist nach 5.14 dieser Norm der Nah-Konstruktionsbezugspunkt der Punkt auf der Vorderfläche eines fertigen Brillenglases oder der fertig bearbeiteten Fläche eines Brillenglasblanks, in dem nach Angabe des Herstellers die Konstruktions-Sollwerte für das Nahteil vorliegen. Nach 5.15 ist der Fern-Bezugspunkt bzw. Hauptbezugspunkt der Punkt auf der Vorderfläche eines Brillenglases, in dem die dioptrische Wirkung für das Fernteil erreicht werden muss und nach 5.17 ist der Nah-Durchblickpunkt die angenommene Lage des Durchblickpunktes auf einem Brillenglas für das Sehen in die Nähe unter bestimmten Bedingungen.

Grundsätzlich ist es möglich, anhand der vorstehenden Angabe die Eigenschaften des Gleitsicht-Brillenglases im Verhältnis zu einem Vergleichs-Gleitsicht-Brillenglas in eineindeutiger Weise festzulegen und festzustellen. Ein einfaches Kriterium ergibt sich, wenn man annimmt, dass der wenigstens eine Schnitt eine Variante aus der Gruppe

- horizontaler Schnitt,
- Schnitt bei halber Addition (insbesondere auf der Hauptblicklinie),
- horizontaler Schnitt bei halber Addition (insbesondere auf der Hauptblicklinie)
- horizontaler Schnitt bei halber Addition (insbesondere auf der Hauptblicklinie) und horizontaler Schnitt bei 25 % der Addition (insbesondere auf der Hauptblicklinie)
- horizontaler Schnitt bei halber Addition (insbesondere auf der Hauptblicklinie) und horizontaler Schnitt bei 75 % der Addition (insbesondere auf der Hauptblicklinie)
- horizontaler Schnitt bei halber Addition (insbesondere auf der Hauptblicklinie) und horizontaler Schnitt bei 25 % der Addition (insbesondere auf der Hauptblicklinie) und horizontaler Schnitt bei 75 % der Addition (insbesondere auf der Hauptblicklinie)

ist.

Die DIN EN ISO 13666:2013-10 definiert in Abschnitt 14.2.1 den Nahzusatz bzw. die Addition als Differenz zwischen dem Scheitelbrechwert des Nahteiles und dem Scheitelbrechwert des Fernteiles gemessen mit festgelegten Verfahren. Diese Norm gibt an, dass entsprechende Messverfahren in der für Brillengläser maßgebenden Norm enthalten seien. Als maßgebende Norm wird in der DIN EN ISO 13666:2013-10 auf die DIN EN ISO 8598-1:2012, "Optik und optische Instrumente - Scheitelbrechwert-Messgeräte - Teil 1: Instrumente für den allgemeinen Gebrauch" verwiesen. Der Scheitelbrechwert ist in der DIN EN ISO 13666:2013-10, Abschnitt 9.7 wie folgt definiert. Es wird unterschieden zwischen bildseitigem Scheitelbrechwert, welcher definiert ist als Kehrwert der paraxialen Schnittweite des bildseitigen Brennpunktes, gemessen in Metern und objektseitigem Scheitelbrechwert, welcher definiert ist als Kehrwert der paraxialen Schnittweite des objektseitigen Brennpunktes, gemessen in Metern. Es wird angemerkt, dass nach Übereinkunft in der Augenoptik der bildseitige Scheitelbrechwert der "Scheitelbrechwert" eines Brillenglases verwendet wird, für bestimmte Zwecke aber auch der objektseitige Scheitelbrechwert benötigt wird, z. B. zur Messung der Addition bei einigen Mehrstärken- und Gleitsicht-Brillengläsern.

Eine weitere Variante, die Eigenschaften des Gleitsicht-Brillenglases über einen Vergleich mit den Eigenschaften eines Vergleichs-Gleitsicht-Brillenglases mit in eineindeutiger Weise vorbestimmbaren Eigenschaften, nämlich derselben Verteilung des sphärischen Äquivalents über das Glas unter der derselben Position des Brillenglases vor dem Auge des selben Gleitsicht-Brillenträgers unter Zugrundelegung des selben Objektabstandsmodells, zu definieren, besteht darin, wenn das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist.

Bei dieser Variante eines Gleitsicht-Brillenglases, welches ein Fernteil und ein Nahteil aufweist, wird die Breite des Progressionskanals durch die Abmessung quer zu einer zwischen Fernteil und Nahteil verlaufenden Längsrichtung des Progressionskanals definiert, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

Unter Restastigmatismus versteht man den Astigmatismus (nach Betrag und Achsrichtung), um den der Astigmatismus bzw. die astigmatische Wirkung des Gleitsicht-Brillenglases an einem jeweiligen Ort auf einer Gleitsicht-Brillenglasfläche für ein das Gleitsicht-Brillenglas an diesem Ort durchdringenden Strahlenbündels für den Gleitsicht-Brillenträger, für den das Gleitsicht-Brillenglas bestimmt ist, wenn der Gleitsicht-Brillenträger das Gleitsicht-Brillenglas bestimmungsgemäß trägt (so dass es in vorbestimmter Weise vor dem Auge des Gleitsicht-Brillenträgers angeordnet ist), von der für eine Vollkorrektion geforderten astigmatischen Wirkung abweicht. Der Begriff "Verteilung" stellt klar, dass dieser Restastigmatismus lokal über das Brillenglas unterschiedlich sein kann und im Regelfall auch sein wird.

Anders formuliert versteht man unter Restastigmatismus die Abweichung der astigmatischen Wirkung (astigmatische Ist-Wirkung) des Gleitsicht-Brillenglases von der "verordneten" astigmatischen Wirkung bezüglich Betrag und Achslage. Anders ausgedrückt ist der Restastigmatismus die blickrichtungsabhängige Differenz zwischen der astigmatischen Ist-Wirkung und der astigmatischen Soll-Wirkung für den Träger des Gleitsicht-Brillenglases in Gebrauchsstellung. Berücksichtigt wird bei der Gebrauchsstellung die Position und Orientierung des Brillenglases zum Auge bei bestimmungsgemäßem Gebrauch. Die Blickrichtungsabhängigkeit der astigmatischen Wirkung kann insbesondere aus der Blickrichtungsabhängigkeit der Objektentfernung und der Blickrichtungsabhängigkeit der astigmatischen Wirkung des Auges resultieren. Der Ausdruck "verordnete Wirkung" ist also im weitesten Sinn als Soll-Wirkung zu verstehen, die das Brillenglas aufgrund seiner zugrunde gelegten Position und Orientierung in Bezug auf das Auge für die jeweilige Blickrichtung und die Entfernung, in welcher der Brillenträger das Objekt für diese Blickrichtung scharf sehen soll, haben soll.

Für die konkrete Berechnung der Restastigmatismusverteilung (oder anderer Fehlerverteilungen, wie z.B. der sphärischen Fehlerverteilung oder sonstigen z.B. in der EP 2 115 527 B1 beschriebenen Fehlerverteilungen höherer Ordnung oder von Ist-Wirkungsverteilungen, wie z.B. der astigmatischen Ist-Wirkung, der sphärischen Ist-Wirkung oder der prismatischen Ist-Wirkung) wird beispielsweise regelmäßig der Hornhautscheitelabstand, die Pupillendistanz, die Vorneigung des Brillenglases, der Fassungsscheibenwinkel des Brillenglases und die Brillenglasgröße, dazu gehört insbesondere auch die Dicke und/oder die Berandung (Randverlauf), berücksichtigt. Darüber hinaus wird regelmäßig ein Objektabstandsmodell zugrunde gelegt, welches die Position von Objektpunkten im Blickfeld des Brillenträgers relativ zu dessen Augendrehpunkten beschreibt.

Die Restastigmatismusverteilung kann bereits als errechnete mathematische Beschreibung vorliegen (wie im Fall (i)) oder sie lässt sich aus der Verordnung (häufig wird auch der Begriff Rezept verwendet) und einem Objektabstandsmodell (wie im Fall (iii)) oder einer bereits berechneten astigmatischen Wirkungsverteilung für Vollkorrektion (wie im Fall (ii)) ermitteln.

Die Verordnung kann neben den herkömmlichen Refraktionswerten auch weitere dem Brillenträger inhärente physiologische Parameter (also allgemein solche Parameter, die dem Brillenträger eigen sind) sowie die Gebrauchsbedingungen (also allgemein solche Parameter, die der Umgebung des Brillenträgers zuordenbar sind), unter denen das verordnete Gleitsicht-Brillenglas getragen werden soll, umfassen. Zu den inhärenten physiologischen Parametern gehören u.a. die Fehlsichtigkeit, die Akkommodationsfähigkeit und die (ggf. auch monokulare) Pupillendistanz des Brillenträgers. Zu den Gebrauchsbedingungen gehören Informationen zum Sitz der Gläser vor dem Auge und auch Daten, die das Objektabstandsmodell charakterisieren, wie z.B. ob es sich um eine Bildschirmarbeitsplatzbrille handeln soll, welches für die Fernblickrichtung ein Objekt, nämlich den Bildschirm, in einer von unendlich abweichenden Entfernung zugrunde legt. Für den Fall, dass die individuell gemessene oder bestimmte Verordnung bestimmte Gebrauchsbedingungen nicht enthält, werden gewisse Standardwerte angenommen (z.B. Standardvorneigung 9°)

Unter Objektabstandsmodell versteht man eine Annahme für Entfernungen im Raum unter denen der Brillenträger Objekte scharf sehen soll. Ein Objektabstandsmodell kann z.B. durch die Verteilung der Objektentfernungen von der Vorderseite des Brillenglases über die verschiedenen Blickrichtungen bzw. für die Durchstoßpunkte der Strahlen durch die Vorderfläche charakterisiert werden. Bei dem Objektabstandsmodell wird die Objektlage im Allgemeinen auf den Augendrehpunkt bezogen, wie dies oben bereits ausgeführt wurde.

Die Modellrechnung kann berücksichtigen, dass sich die Wirkung und Achslage des Auges bei unterschiedlichen Objektentfernungen und Blickrichtungen ändert. Die Modellrechnung kann insbesondere die sogenannte Listing'sche Regel berücksichtigen. Die Modellrechnung kann z.B. auch die Änderung der astigmatischen Wirkung des Auges für die Nähe und die Ferne berücksichtigen, beispielsweise in der Art wie dies in der DE 10 2015 205 721 A1 beschrieben ist.

Vollkorrektion bezeichnet eine durch das bestimmungsgemäße Tragen der Gleitsicht-Brille bewirkte Korrektion, die es dem Gleitsicht-Brillenträger unter Berücksichtigung der durch die Verordnung repräsentierten Seheigenschaften seines Auges erlaubt, in den Entfernungen angeordnete Objekte, die dem Objektabstandsmodell zugrunde gelegt sind, scharf zu sehen.

Es sei der Vollständigkeit halber darauf hingewiesen, dass der Datenträger, auf dem sich die vorbestimmte Darstellung befindet z.B. anstelle eines Speichers eines Computers auch ein Blatt Papier sein kann. Dies betrifft insbesondere den o.a. Fall (iii), in dem die Verordnung auch auf einem Blatt Papier notiert sein kann.

Eine weitere Ausführungsform des Erzeugnisses umfasst folgende Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, sowie
- eine oder mehrere der folgenden Darstellungen auf einem Datenträger:

    (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

    (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

    (iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

    (iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsform weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Der Brechungsindex des Gleitsicht-Brillenglases variiert bei dieser Ausführungsform räumlich derart, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung, mit gleicher Verteilung des sphärischen Äquivalents bei gleicher Anordnung des Vergleichs-Gleitsicht-Brillenglases vor dem Auge des Gleitsicht-Brillenträgers und mit gleichem Objektabstandsmodell aber räumlich nicht variierendem Brechungsindex.

Die für den Brillenträger wahrnehmbaren optischen Eigenschaften des Gleitsicht-Brillenglases sind verbessert gegenüber allen Gleitsicht-Brillengläsern konventionellen Typs.

Eine andere Variante des Erzeugnisses umfasst die nachfolgend angegebenen Bestandteile:

- eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist,
- wenigstens eine der nachfolgenden Darstellungen auf einem Datenträger:

  (i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

  (ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

  (iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

  (iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist.

Das Gleitsicht-Brillenglas nach dieser Ausführungsvariante weist eine Verteilung eines sphärischen Äquivalents für die vorbestimmte Anordnung des Gleitsicht-Brillenglases vor dem Auge des Gleitsicht-Brillenträgers, für den das Gleitsicht-Brillenglas bestimmt ist, auf. Das Gleitsicht-Brillenglas besitzt einen Progressionskanal. Der Brechungsindex des Gleitsicht-Brillenglases variiert räumlich derart, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals (z.B. dort, wo die Isoastigmatismuslinien für 1 dpt den geringsten Abstand zueinander haben) oder auf einem horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents in Richtung der Hauptblicklinie des Gleitsicht-Brillenglases auf dem Punkt auf der Hauptblicklinie an der schmalsten Stelle des Progressionskanals oder in dem Punkt auf der Hauptblicklinie in dem die halbe Addition erreicht wird, B die Breite des Bereichs im Gleitsicht-Brillenglas, in dem der Restastigmatismus $A_{Rest} \leq A_{Rest,Grenz}$ ist, wobei c eine Konstante gewählt ist aus der Gruppe:

(a) 1,0 < c
(b) 1,1 < c
(c) 1,2 < c

(d) 1,3 < c

Die für den Brillenträger wahrnehmbaren optischen Eigenschaften des Gleitsicht-Brillenglases sind verbessert gegenüber allen Gleitsicht-Brillengläsern konventionellen Typs.

Eine weitere Variante eines Erzeugnisses umfasst (i) ein Gleitsicht-Brillenglas oder (ii) eine auf einem Datenträger befindliche Darstellung des Gleitsicht-Brillenglases oder (iii) einen Datenträger mit einer virtuellen Repräsentation des Gleitsicht-Brillenglases, wobei das Gleitsicht-Brillenglas eine Vorderfläche und eine Rückfläche sowie einen räumlich variierenden Brechungsindex aufweist. Es sind entweder die Vorderfläche oder die Rückfläche oder beide Flächen als Gleitsichtfläche ausgebildet. Die als Gleitsichtfläche ausgebildete Vorderfläche ist als Freiformfläche ausgebildet und/oder die als Gleitsichtfläche ausgebildete Rückfläche ist als Freiformfläche ausgebildet.

Das Gleitsicht-Brillenglas besteht aus einem keine Einzelschichten aufweisenden Substrat sowie einer eine oder mehrere Einzelschichten umfassenden Vorderflächenbeschichtung auf der Vorderfläche des Substrats und/oder einer eine oder mehrere Einzelschichten umfassenden Rückflächenbeschichtung auf der Rückfläche des Substrats. Nur das Substrat weist den räumlich variierenden Brechungsindex auf.

Es ist ein Unterschied zwischen dem sphärischen Äquivalent gemessen in jedem Punkt auf der Vorderfläche des Gleitsicht-Brillenglases mit der Vorderflächenbeschichtung und/oder der Rückflächenbeschichtung und dem sphärischen Äquivalent gemessen in jedem korrespondierenden Punkt auf der Vorderfläche eines Vergleichs-Gleitsicht-Brillenglases ohne Vorderflächenbeschichtung und ohne Rückflächenbeschichtung aber identischem Substrat (mit identischer Geometrie und identischem Brechungsindex) kleiner als ein Wert aus der nachfolgend angegebenen Gruppe:

(a) der Unterschiedswert ist kleiner als 0,001 dpt
(b) der Unterschiedswert ist kleiner als 0,002 dpt
(c) der Unterschiedswert ist kleiner als 0,003 dpt
(d) der Unterschiedswert ist kleiner als 0,004 dpt.

Diese Variante kann selbstverständlich auch eine oder mehrere der vorstehend beschriebenen Merkmale aufweisen.

Eine erste Weiterbildung des unmittelbar vorstehend beschriebenen Erzeugnisses ist dadurch gekennzeichnet, dass wenigstens eine der Freiformflächen keine Punktsymmetrie und keine Achsensymmetrie aufweist oder dass wenigstens eine der Freiformflächen keine Punktsymmetrie und keine Achsensymmetrie und keine Rotationssymmetrie und keine Symmetrie bzgl. einer Symmetrieebene aufweist.

Eine zweite ggf. mit der ersten kombinierte Weiterbildung ist dadurch gekennzeichnet, dass

(a) der Brechungsindex sich nur in einer ersten Raumdimension und in einer zweiten Raumdimension verändert und in einer dritten Raumdimension konstant ist, wobei eine Verteilung des Brechungsindex in der ersten Raumdimension und der zweiten Raumdimension weder eine Punkt- noch eine Achsensymmetrie aufweist oder
(b) der Brechungsindex sich in einer ersten Raumdimension und in einer zweiten Raumdimension und in einer dritten Raumdimension verändert, wobei eine Verteilung des Brechungsindex in der ersten Raumdimension und der zweiten Raumdimension in allen Ebenen senkrecht zu der dritten Raumdimension weder eine Punkt- noch eine Achsensymmetrie aufweist oder
(c) der Brechungsindex sich in einer ersten Raumdimension und in einer zweiten Raumdimension und in einer dritten Raumdimension verändert, wobei eine Verteilung des Brechungsindex überhaupt keine Punkt- und keine Achsensymmetrie aufweist.

Die dritte Raumdimension verläuft im Fall (a) oder im Fall (b) vorzugsweise in eine Richtung, die

-  um nicht mehr als 5° von der Nullblickrichtung bei bestimmungsgemäßem Gebrauch differiert oder

-  um nicht mehr als 10° von der Nullblickrichtung bei bestimmungsgemäßem Gebrauch differiert oder

-  um nicht mehr als 20° von der Nullblickrichtung bei bestimmungsgemäßem Gebrauch differiert oder

-  um nicht mehr als 5° von der Hauptblickrichtung bei bestimmungsgemäßem Gebrauch differiert oder

-  um nicht mehr als 10° von der Hauptblickrichtung bei bestimmungsgemäßem Gebrauch differiert oder

-  um nicht mehr als 20° von der Hauptblickrichtung bei bestimmungsgemäßem Gebrauch differiert oder

- um nicht mehr als 5° von der Richtung des Normalenvektors der Vorderfläche in der geometrischen Mitte des Gleitsicht-Brillenglases differiert oder

- um nicht mehr als 10° von der Richtung des Normalenvektors der Vorderfläche in der geometrischen Mitte des Gleitsicht-Brillenglases differiert oder

- um nicht mehr als 20° von der Richtung des Normalenvektors der Vorderfläche in der geometrischen Mitte des Gleitsicht-Brillenglases differiert oder

- um nicht mehr als 5° von der Richtung des Normalenvektors am prismatischen Messpunkt differiert oder

- um nicht mehr als 10° von der Richtung des Normalenvektors am prismatischen Messpunkt differiert oder

- um nicht mehr als 20° von der Richtung des Normalenvektors am prismatischen Messpunkt differiert oder

- um nicht mehr als 5° von der Richtung des Normalenvektors am Zentrierpunkt differiert oder

- um nicht mehr als 10° von der Richtung des Normalenvektors am Zentrierpunkt differiert oder

- um nicht mehr als 20° von der Richtung des Normalenvektors am Zentrierpunkt differiert.

In weiterer Ausgestaltung weist das Gleitsicht-Brillenglas einen Progressionskanal auf. Bei dem Gleitsicht-Brillenglas kann

(i) die als Freiformfläche ausgebildete Vorderfläche so gestaltet sein, dass der Betrag der mittleren Krümmung im Progressionskanal maximal ist, und/oder
(ii) die als Freiformfläche ausgebildete Rückfläche so gestaltet sein, dass der Betrag der mittleren Krümmung im Progressionskanal minimal ist, oder
(iii) die Rückfläche eine sphärische, rotationssymmetrisch asphärische oder torische Flächengeometrie aufweisen und die als Freiformfläche ausgebildete Vorderfläche so gestaltet sein, dass das Maximum des Betrags der mittleren Krümmung der Vorderfläche im Progressionskanal ist, oder
(iv) die Vorderfläche eine sphärische, rotationssymmetrisch asphärische oder torische Flächengeometrie aufweisen und die als Freiformfläche ausgebildete Rückfläche so gestaltet sein, dass das Minimum des Betrags der mittleren Krümmung der Rückfläche im Progressionskanal ist, oder
(v) die Rückfläche nicht als Freiformfläche ausgebildet sein und die als Freiformfläche ausgebildete Vorderfläche so gestaltet sein, dass das Maximum des Betrags der mittleren Krümmung der Vorderfläche im Progressionskanal ist, oder
(vi) die Vorderfläche nicht als Freiformfläche ausgebildet sein und die als Freiformfläche ausgebildete Rückfläche so gestaltet sein, dass das Minimum des Betrags der mittleren Krümmung der Rückfläche im Progressionskanal ist.

Das vorstehend beschriebene Erzeugnis kann zusätzlich auch dadurch gekennzeichnet sein, dass

- das Erzeugnis ferner (i) eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst oder (ii) einen Datenträger mit Daten zu einer vorbestimmten Anordnung des Gleitsicht-Brillenglases vor einem Auge eines Gleitsicht-Brillenträgers, umfasst, dass
- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass
- das Gleitsicht-Brillenglas einen Progressionskanal mit einer Breite aufweist, und dass der Brechungsindex des Gleitsicht-Brillenglases räumlich derart variiert, dass die Breite des Progressionskanals des Gleitsicht-Brillenglases wenigstens in einem Schnitt oder über die gesamte Länge des Progressionskanals größer ist, als die Breite des Progressionskanals eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Die zuletzt beschriebene Ausgestaltung des Erzeugnisses kann in weiterer Ausgestaltung, dadurch gekennzeichnet sein, dass der wenigstens eine Schnitt eine Variante aus der Gruppe

- horizontaler Schnitt,
- Schnitt bei halber Addition,
- horizontaler Schnitt bei halber Addition
- horizontaler Schnitt bei halber Addition und horizontaler Schnitt bei 25 % der Addition
- horizontaler Schnitt bei halber Addition und horizontaler Schnitt bei 75 % der Addition
- horizontaler Schnitt bei halber Addition und horizontaler Schnitt bei 25 % der Addition und horizontaler Schnitt bei 75 % der Addition

gewählt ist.

Alternativ oder zusätzlich kann das Erzeugnis ferner aufweisen:

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und/oder

(v) einen Datenträger mit Daten zu einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(vi) einen Datenträger mit Daten zu einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(vii) einen Datenträger mit Daten zu einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(viii) einen Datenträger mit Daten zu einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, wobei

- das Gleitsicht-Brillenglas ein Fernteil und ein Nahteil aufweist und
- die Breite des Progressionskanals der Abmessung quer zu einer zwischen Fernteil und Nahteil verlaufenden Längsrichtung des Progressionskanals entspricht, innerhalb der der Wert des Betrags des Restastigmatismus unterhalb eines vorbestimmten Grenzwerts liegt, der innerhalb eines Bereichs aus der nachfolgend angegebenen Gruppe ausgewählt ist:

(a) der Grenzwert liegt im Bereich zwischen 0,25 dpt und 1,5 dpt
(b) der Grenzwert liegt im Bereich zwischen 0,25 dpt und 1,0 dpt
(c) der Grenzwert liegt im Bereich zwischen 0,25 dpt und 0,75 dpt
(d) der Grenzwert liegt im Bereich zwischen 0,25 dpt und 0,6 dpt
(e) der Grenzwert liegt im Bereich zwischen 0,25 dpt und 0,5 dpt
(f) der Grenzwert beträgt 0,5 dpt.

Die oben beschriebene weitere Variante des Erzeugnisses und ggf. deren vorstehend beschriebenen Weiterbildungen können dadurch gekennzeichnet sein, dass

- das Erzeugnis ferner (i) eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, oder (ii) einen Datenträger mit Daten zu einer vorbestimmten Anordnung des Gleitsicht-Brillenglases vor einem Auge eines Gleitsicht-Brillenträgers, umfasst, dass
- das Gleitsicht-Brillenglas eine Verteilung eines sphärisches Äquivalents für die vorbestimmte Anordnung des Gleitsicht-Brillenglases vor dem Auge des Gleitsicht-Brillenträgers, für den das Gleitsicht-Brillenglas bestimmt ist, aufweist, dass

- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und/oder

(v) einen Datenträger mit Daten zu einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(vi) einen Datenträger mit Daten zu einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(vii) einen Datenträger mit Daten zu einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(viii) einen Datenträger mit Daten zu einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und dass

- der Brechungsindex des Gleitsicht-Brillenglases räumlich derart variiert, dass der Maximalwert des Restastigmatismus des Gleitsicht-Brillenglases kleiner ist, als der Maximalwert des Restastigmatismus eines Vergleichs-Gleitsicht-Brillenglases mit gleicher Verteilung des sphärischen Äquivalents bei gleicher Anordnung des Vergleichs-Gleitsicht-Brillenglases vor dem Auge des Gleitsicht-Brillenträgers aber räumlich nicht variierendem Brechungsindex.

Die oben beschriebene weitere Variante des Erzeugnisses und ggf. deren vorstehend beschriebenen Weiterbildungen können auch dadurch gekennzeichnet sein, dass

- das Erzeugnis ferner (i) eine auf einem Datenträger befindliche Darstellung einer vorbestimmten Anordnung des Gleitsicht-Brillenglases vor einem Auge eines Gleitsicht-Brillenträgers, für den das Gleitsicht-Brillenglas bestimmt ist, umfasst, oder (ii) einen Datenträger mit Daten zu einer vorbestimmten Anordnung des Gleitsicht-Brillenglases vor einem Auge eines Gleitsicht-Brillenträgers, umfasst, dass
- das Gleitsicht-Brillenglas eine Verteilung eines sphärisches Äquivalent (W) für die vorbestimmte Anordnung des Gleitsicht-Brillenglases vor dem Auge des Gleitsicht-Brillenträgers, für den das Gleitsicht-Brillenglas bestimmt ist, aufweist, dass
- das Erzeugnis ferner

(i) eine auf einem Datenträger befindliche Darstellung einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(ii) eine auf einem Datenträger befindliche Darstellung einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(iii) eine auf einem Datenträger befindliche Darstellung einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, und/oder

(iv) eine auf einem Datenträger befindliche Darstellung einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, aufweist, und/oder

(v) einen Datenträger mit Daten zu einer Restastigmatismusverteilung für die vorbestimmte Anordnung des Gleitsicht-Brillenglases vor dem Auge des Gleitsicht-Brillenträgers, für den das Gleitsicht-Brillenglas bestimmt ist, und/oder

(vi) einen Datenträger mit Daten zu einer für eine Vollkorrektion geforderte astigmatische Wirkungsverteilung für die vorbestimmte Anordnung des Gleitsicht-Brillenglases vor dem Auge des Gleitsicht-Brillenträgers, für den das Gleitsicht-Brillenglas bestimmt ist, und/oder

(vii) einen Datenträger mit Daten zu einer Verordnung und eines Objektabstandsmodells für die vorbestimmte Anordnung des Gleitsicht-Brillenglases vor dem Auge eines Gleitsicht-Brillenträgers, für den das Gleitsicht-Brillenglas bestimmt ist, aufweist, und/oder

(viii) einen Datenträger mit Daten zu einer Verteilung des sphärischen Äquivalents für die vorbestimmte Anordnung des Gleitsicht-Brillenglases vor dem Auge des Gleitsichtbrillenträgers, für den das Gleitsichtbrillenglas bestimmt ist, und dass

- das Gleitsicht-Brillenglas einen Progressionskanal und eine Hauptblicklinie aufweist, und dass der Brechungsindex des Gleitsicht-Brillenglases räumlich derart variiert, dass für einen vorgegebenen Restastigmatismuswert $A_{Rest,Grenz}$ aus der Gruppe

(a) der Restastigmatismuswert $A_{Rest,Grenz}$ liegt im Bereich zwischen 0,25 dpt und 1,5 dpt
(b) der Restastigmatismuswert $A_{Rest,Grenz}$ liegt im Bereich zwischen 0,25 dpt und 1,0 dpt
(c) der Restastigmatismuswert $A_{Rest,Grenz}$ liegt im Bereich zwischen 0,25 dpt und 0,75 dpt
(d) der Restastigmatismuswert $A_{Rest,Grenz}$ liegt im Bereich zwischen 0,25 dpt und 0,6 dpt
(e) der Restastigmatismuswert $A_{Rest,Grenz}$ liegt im Bereich zwischen 0,25 dpt und 0,5 dpt
(f) der Restastigmatismuswert $A_{Rest,Grenz}$ beträgt 0,5 dpt

auf einem horizontalen Schnitt an der schmalsten Stelle des Progressionskanals oder für einen horizontalen Schnitt durch den Punkt auf der Hauptblicklinie in dem die halbe Addition erreicht wird, innerhalb eines Bereichs mit einem horizontalen Abstand von 10 mm beidseits von der Hauptblicklinie folgende Beziehung gilt:

$$B > c \times \frac{A_{Rest,Grenz}}{grad\,W}$$

wobei grad W der Wirkungsgradient des sphärischen Äquivalents des Gleitsicht-Brillenglases an der schmalsten Stelle des Progressionskanals auf der Hauptblicklinie oder in einem Punkt auf der Hauptblicklinie in dem die halbe Addition erreicht wird, B die Breite des Bereichs im Gleitsicht-Brillenglas, in dem der Restastigmatismus $A_{Rest} \le A_{Rest,Grenz}$ ist, wobei c eine Konstante gewählt ist aus der Gruppe:

(a) 1,0 < c
(b) 1,1 < c
(c) 1,2 < c
(d) 1,3 < c.

Oben wurde ausgeführt, dass die Erfinder erkannt haben, dass es auf das Zusammenspiel des Grads der Komplexität der Geometrie der Gleitsichtfläche und des Grads der Komplexität der Brechungsindexverteilung ankommt. Sie schlagen daher abweichend von der in der WO 89/04986 A1 beschriebenen Lösung ein computerimplementiertes Verfahren zum Entwerfen eines Gleitsicht-Brillenglases mit einer Vorderfläche und einer Rückfläche und einem räumlich variierenden Brechungsindex, bei dem entweder die Vorderfläche oder die Rückfläche oder beide Flächen als Gleitsichtfläche ausgebildet sind, in Form eines Strahldurchrechnungsverfahrens vor. Mittels des Strahldurchrechnungsverfahrens werden optische Eigenschaften des Gleitsicht-Brillenglases an einer Vielzahl von Bewertungsstellen, durch die Sehstrahlen das Gleitsicht-Brillenglas durchsetzen, berechnet. Bei diesem Strahldurchrechnungsverfahren wird wenigstens eine optische Soll-Eigenschaft für das Gleitsicht-Brillenglas an der jeweiligen Bewertungsstelle festgelegt. Zunächst wird ein Entwurf für das Gleitsicht-Brillenglas festgelegt, wobei dieser Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst. Der Entwurf des Gleitsicht-Brillenglases wird im Hinblick auf eine Approximierung der wenigstens einen optischen Soll-Eigenschaft des Gleitsicht-Brillenglases modifiziert. Das Modifizieren umfasst erfindungsgemäß nicht nur ein Modifizieren der Repräsentation der lokalen Flächengeometrie der Gleitsichtfläche, sondern auch des lokalen Brechungsindex des Gleitsicht-Brillenglases im jeweiligen Sehstrahlengang durch die Bewertungsstellen, wobei die wenigstens eine optische Soll-Eigenschaft einen Soll-Restastigmatismus des Gleitsicht-Brillenglases umfasst.

Die der modifizierten Gleitsichtfläche gegenüberliegende Fläche wird in der Regel fest vorgegeben. Diese weist im Allgemeinen eine einfache Flächengeometrie, wie z.B. eine sphärische, rotationssymmetrisch asphärische oder torische Geometrie auf. Im Fall einer torischen Fläche ist die Flächengeometrie und Achslage häufig so gewählt, dass sie (abgesehen vom unerwünschten Rest-Astigmatismus) das astigmatische Refraktionsdefizit des Auges des Gleitsicht-Brillenträgers ausgleicht. Die der modifizierten Gleitsichtfläche gegenüberliegende Fläche kann auch eine Gleitsichtfläche, ggf. auch eine Freiformfläche, mit fest vorgegebener Flächengeometrie sein. Diese kann zu dem zur Bereitstellung der Addition notwendigen Wirkungsanstieg beitragen. Auch die modifizierte Gleitsichtfläche kann zu dem zur Bereitstellung der Addition notwendigen Wirkungsanstieg beitragen. Es ist auch möglich, dass beide Flächen, nämlich Vorder- und Rückfläche zusammen mit der Brechungsindexverteilung zur Approximierung der Soll-Restastigmatismusverteilung modifiziert werden. Strahldurchrechnungsverfahren zur Verwendung beim Entwurf von Gleitsicht-Brillengläsern sind bekannt. Es wird insbesondere auf Werner Köppen: Konzeption und Entwicklung von Progressivgläsern, in Deutsche Optiker Zeitung DOZ 10/95, S. 42-46 sowie die EP 2 115 527 B1 und die darin genannten Druckschriften hingewiesen. berücksichtigt. Die Berechnung optimierter ortsabhängiger Brechungsindexverteilungen mittels optischer Rechenprogramme, wie beispielsweise das Rechenprogramm ZEMAX von der Firma Zemax, LLC, ist ebenfalls bekannt. Es wird z.B. auf deren Internetauftritt unter http://www.zemax.com/ verwiesen.

Die Festlegung von Soll-Eigenschaften für ein Brillenglas bezieht sich auf das sogenannte Design eines Brillenglases. Ein Design eines Brillenglases umfasst üblicherweise die Verteilung der Soll-Werte für einen oder mehrere Abbildungsfehler, welche vorzugsweise in die Optimierung des Brillenglases als Zielwerte oder bei der Bestimmung der Zielwerte eingehen. Insbesondere wird ein Brillenglasdesign durch die Verteilung des Refraktionsfehlers (d.h. die Differenz des sphärischen Äquivalents des Gleitsicht-Brillenglases im Strahlengang in Gebrauchsstellung von dem sphärischen Äquivalent, welches mittels Refraktionsbestimmung ermittelt wird) und/oder die Verteilung des Restastigmatismus (d.h. die Differenz des Astigmatismus des Brillenglases von dem Astigmatismus, welcher mittels Refraktionsbestimmung ermittelt wird) charakterisiert. Anstelle des Begriffs Restastigmatismusverteilung werden in der Literatur auch die Begriffe Astigmatismusfehlerverteilung und astigmatische Abweichung verwendet. Ferner kann ein Brillenglasdesign ebenfalls die Verteilung der Soll-Werte für Vergrößerungs-, Verzerrungs- oder anderen Abbildungsfehler, insbesondere von Abbildungsfehlern höherer Ordnung, wie dies in der EP 2 115 527 B1 beschrieben ist, umfassen. Dabei kann es sich um Flächenwerte oder vorzugsweise um Gebrauchswerte, d.h. Werte in Gebrauchsstellung des Brillenglases handeln.

Nach der Erfindung wird der Entwurf des Gleitsicht-Brillenglases mit dem Ziel, dem vorgegebenen Soll-Restastigmatismus möglichst nahe zu kommen modifiziert. Der Soll-Restastigmatismus kann beispielsweise an allen Bewertungsstellen zu Null gesetzt werden. Es ist auch möglich, eine Restastigmatismusverteilung vorzugeben, die vorzugsweise weit niedrigere Werte hat, als die, die mit einem herkömmlichen Gleitsicht-Brillenglas mit räumlich nicht variierendem Brechungsindex aber freigeformter Rück- (und/oder Vorderfläche) theoretisch überhaupt erreichbar ist bzw. für die Optimierung eines derartigen Gleitsicht-Brillenglases vorgegeben wird. Die Zahl der Bewertungsstellen liegt nach Werner Köppen: Konzeption und Entwicklung von Progressivgläsern, in Deutsche Optiker Zeitung DOZ 10/95, S. 42-46 üblicherweise im Bereich zwischen 1000 und 1500. Die EP 2 115 527 B1 schlägt eine Zahl von über 8000 Bewertungsstellen vor.

Um diesem Ziel möglichst nahe zu kommen wird nach der Erfindung nicht nur die Flächengeometrie der (späteren) Gleitsichtfläche an der Bewertungsstelle lokal verändert, sondern auch der lokale Brechungsindex in dem vom Strahlengang durchsetzten Medium des Gleitsicht-Brillenglases bei der Bewertungsstelle. Unter Medium versteht man das Material oder die Materialien, aus denen das Gleitsicht-Brillenglas besteht.

Erfindungsgemäß erfolgt das Modifizieren der Gleitsichtfläche frei in zwei Raumdimensionen und auch das Modifizieren des lokalen Brechungsindex erfolgt frei in wenigstens zwei Raumdimensionen.

Um dem Ziel möglichst nahe zu kommen, muss dieser Vorgang des Modifizierens in der Regel mehrfach, d.h. iterativ durchgeführt werden. Es soll dabei noch einmal klar gestellt werden, dass beim Modifizieren, insbesondere bei der Iteration sowohl die lokale Flächengeometrie als auch der lokale Brechungsindex frei variieren können und weder die lokale Flächengeometrie noch der lokale Brechungsindex festgehalten wird. Demgegenüber lehrt die WO 89/04986 A1 die Vorgabe vergleichsweise einfacher Geometrien für Vorder- und Rückfläche und die Suche nach einer geeigneten Brechungsindexverteilung, um den für die Bereitstellung der Addition notwendigen Wirkungsanstieg herzustellen und um ggf. den (Rest-)Astigmatismus entlang der Hauptblicklinie ganz oder teilweise zu beheben sowie weiter ggf. Korrekturen von Abbildungsfehlern seitlich des Hauptmeridians vorzunehmen.

Obwohl der Brechungsindex in der Regel wellenlängenabhängig ist, wird im Allgemeinen die Dispersion nicht berücksichtigt und die Durchrechnung erfolgt für eine sogenannte Designwellenlänge. Es ist aber nicht ausgeschlossen, dass ein Optimierungsprozess unterschiedliche Designwellenlängen berücksichtigt, wie z.B. in der EP 2 383 603 B1 beschrieben ist.

Da die Modifikation mit dem Ziel erfolgt, optischen Soll-Eigenschaften möglichst nahe zu kommen, spricht der Fachmann auch von Optimierung. Die Modifikation wird so lange durchgeführt, bis ein Abbruchkriterium erfüllt ist. Im Idealfall besteht das Abbruchkriterium darin, dass das entworfene Gleitsicht-Brillenglas die vorgegebenen optischen Soll-Eigenschaften aufweist. In dem Fall, in dem der Restastigmatismus an allen Bewertungsstellen zu Null gesetzt wird, wäre dieser Idealfall, dass der Restastigmatismus des berechneten Brillenglases tatsächlich an allen Bewertungsstellen Null ist. Da dies jedoch regelmäßig, insbesondere in dem beschriebenen Fall, nicht gegeben sein wird, erfolgt ein Abbruch der Berechnung z.B. nach Erreichen eines oder mehrerer Grenzwerte in der Umgebung der Soll-Eigenschaft(en) oder nach Erreichen einer vorgegebenen Anzahl an Iterationen.

Üblicherweise basiert die Ermittlung der Soll-Eigenschaften und die Berechnung der Ist-Eigenschaften auf Modellrechnungen, die die Gebrauchsbedingungen, nämlich z.B. den Sitz der Brillengläser vor dem Auge und ein Objektabstandsmodell sowie physiologische Parameter des Brillenträgers, nämlich z.B. die Fehlsichtigkeit, die Akkommodationsfähigkeit und die Pupillendistanz berücksichtigen. Details wurden oben bereits beschrieben.

Ergebnis der Approximierung der wenigstens einen optischen Soll-Eigenschaft(en) des Gleitsicht-Brillenglases durch Modifikation des lokalen Brechungsindex und der lokalen Flächengeometrie ist in der Regel, dass die als Gleitsichtfläche ausgebildete Vorderfläche als Freiformfläche ausgebildet ist und/oder dass die als Gleitsichtfläche ausgebildete Rückfläche als Freiformfläche ausgebildet ist.

Die eingangs gestellte Aufgabe wird durch das vorstehend beschriebene erfindungsgemäße Verfahren vollumfänglich gelöst.

In einer vorteilhaften Ausgestaltung des erfindungsgemäßen Verfahrens erfolgt das Modifizieren der Gleitsichtfläche derart, dass eine Freiformfläche entsteht, die weder eine Punkt- noch eine Achsensymmetrie aufweist. Das Modifizieren des lokalen Brechungsindex erfolgt des Weiteren derart, dass

(a) sich der Brechungsindex nur in einer ersten Raumdimension und in einer zweiten Raumdimension verändert und in einer dritten Raumdimension konstant bleibt, so dass eine Verteilung des Brechungsindex in der ersten Raumdimension und der zweiten Raumdimension weder eine Punkt- noch eine Achsensymmetrie aufweist oder

(b) sich der Brechungsindex in einer ersten Raumdimension und in einer zweiten Raumdimension und in einer dritten Raumdimension verändert, so dass eine Verteilung des Brechungsindex in der ersten Raumdimension und der zweiten Raumdimension in allen Ebenen senkrecht zu der dritten Raumdimension weder eine Punkt- noch eine Achsensymmetrie aufweist oder

(c) sich der Brechungsindex in einer ersten Raumdimension und in einer zweiten Raumdimension und in einer dritten Raumdimension verändert, so dass eine Verteilung des Brechungsindex im Gleitsicht-Brillenglas überhaupt keine Punkt- und keine Achsensymmetrie aufweist.

Ziel der Erfindung ist es, die astigmatischen Restfehler und ggf. auch die sphärischen Restfehler, neben der Hauptblicklinie (d.h. im zentralen Bereich des Zwischenteils) zu reduzieren. Ausgehend von (i) einem Design eines herkömmlichen Gleitsicht-Brillenglases mit räumlich konstantem Brechungsindex oder (ii) einem Zieldesign für ein herkömmlichen Gleitsicht-Brillenglas mit räumlich konstantem Brechungsindex (das heißt das Zieldesign, das für die Optimierung des Gleitsicht-Brillenglases mit konstanter Brechzahl verwendet wurde) lässt sich ein neues Zieldesign für ein Gleitsicht-Brillenglas mit räumlich variierendem Brechungsindex erzeugen, das die bisherige Verteilung der sphärischen und astigmatischen Restfehler enthält, die aber speziell im zentralen Zwischenteil reduziert werden. Vorzugsweise werden dabei die astigmatischen Restfehler in einem Bereich um die Hauptblicklinie (z.B. der Bereich mit einem Abstand von 5, 10 bis 20 mm von der Hauptblicklinie) reduziert z.B. indem sie mit einen Faktor von 0,5 bis 0,8 multipliziert werden, um zu einem verbesserten Zieldesign zu kommen.

Eine Ausführungsvariante dieses erfindungsgemäßen Verfahrens ist dadurch gekennzeichnet, dass die Modifikation des Entwurfs des Gleitsicht-Brillenglases im Hinblick auf eine Minimierung einer Zielfunktion erfolgt. In der deutschsprachigen Literatur wird eine derartige Zielfunktion auch als Kostenfunktion und in der angelsächsischen Literatur als Merit-Function bezeichnet. Sehr häufig wird beim Entwerfen von Gleitsicht-Brillengläsern als Methode zur Minimierung einer Zielfunktion die Methode der kleinsten Fehlerquadrate angewandt, wie dies z.B. auch in der EP 0 857 993 B2, der EP 2 115 527 B1, der EP 2 878 989 A1 oder auch in Werner Köppen: Konzeption und Entwicklung von Progressivgläsern, in Deutsche Optiker Zeitung DOZ 10/95, S. 42-46 praktiziert wird. Die erfindungsgemäße Ausführungsvariante wendet diese Methode mit der nachfolgend wiedergegebenen Zielfunktion

$$F = \sum_{m} P_m \sum_{n} W_n \, (T_n - A_n)^2$$

an. In dieser Zielfunktion F ist $P_m$ die Gewichtung an der Bewertungsstelle m, $W_n$ die Gewichtung der optischen Eigenschaft n, $T_n$ der Soll-Wert der optischen Eigenschaft n an der jeweiligen Bewertungsstelle m und $A_n$ der Ist-Wert der optischen Eigenschaft n an der Bewertungsstelle m.

Die Anwendung dieser Methode hat sich zum Entwurf von Gleitsicht-Brillengläsern herkömmlicher Art bewährt.

Die Erfindung schlägt vor, diese Methode auch zum Entwerfen von erfindungsgemäßen Gradientenindex (GRIN) Gleitsicht-Brillengläsern zu verwenden.

Das Zieldesign kann z.B. auch durch die Vorgabe von optischen, insbesondere sphärischen und astigmatischen Restfehlern an vielen Punkten festgelegt werden, die über die Vorderfläche des gesamten Glases verteilt sind.

Dabei kann es Festlegungen für die Entfernungen der Objekte geben, für die die Wirkungen bzw. sphärischen und astigmatischen Restfehler für den Brillenträger beim Blick durch das Brillenglas bestimmt werden.

Darüber hinaus kann es Vorgaben für die Flächenkrümmungen an weiteren Punkten auf der Gleitsichtfläche, Dickenforderungen (insbesondere in der geometrischen Mitte und am Rand des Gleitsichtglases) und prismatische Forderungen an weiteren Punkten geben.

Jedem dieser optischen und geometrischen Vorgaben kann an jedem der genannten Punkte eine individuelle Gewichtung zugeordnet werden. Bestimmt man für ein Ausgangsglas (z.B. das für die konstante Brechzahl optimierte Gleitsichtglas) die Restfehler, Flächenkrümmungen, prismatische Wirkungen und Dicken für die Vorgabe an dem Punkt, so kann man damit einen Gesamtfehler F entsprechend vorstehend angegebener bestimmen. Dieser von den optischen und geometrischen Glaseigenschaften abhängige Funktionswert F kann mittels bekannter mathematischer Methoden durch simultane Änderung der Flächengeometrie und der Brechzahlverteilung minimiert werden. Auf diese Weise erhält man ein Gleitsichtglas mit verbesserten Eigenschaften bzgl. der zuvor festgesetzten Forderungen.

Alternativ kann für die Optimierung des Gleitsichtglases mit einem Material mit variabler Brechzahl auch das ursprüngliche Zieldesign herangezogen werden, das heißt das Zieldesign, das für die Optimierung des Glases mit konstanter Brechzahl verwendet wurde.

Dabei können die bei der Optimierung mit dem ursprünglichen Design verwendeten Gewichtungen verwendet bzw. auch verändert werden. Insbesondere kann die Gewichtung für die astigmatischen und sphärischen Restfehler im Progressionskanal erhöht werden, um verbesserte Eigenschaften des Gleitsichtglases im Progressionsbereich zu erzielen.

Eine Erhöhung der Gewichtung im Progressionskanal ist dabei aber nur sinnvoll, falls die astigmatischen und sphärischen Fehler des optimierten Glases mit einem Material mit konstantem Brechzahl nicht schon mit den Vorgaben des (neuen) Zieldesigns übereinstimmen. Falls das ursprüngliche Design vom Brillenträger bereits akzeptiert wurde, erhält man mit diesem Vorgehen auf jeden Fall ein verträglicheres Design für den Brillenträger, da die optischen Restfehler mit dem neuen Design reduziert werden.

Insgesamt erreicht man ein neues verbessertes Zieldesign, das mit einem Material mit konstanter Brechzahl nicht erreichbar ist, aber mit diesem Zieldesign und durch simultane Optimierung der Gestalt der Freiformflächen und der Verteilung der Brechzahl für ein Material mit nichtkonstanter Brechzahl sich ein verbessertes Gleitsichtglasdesign erreichen lässt, das insbesondere einen breiteren Progressionskanal, geringere maximale astigmatische Restfehler im Zwischenbereich und damit auch eine geringere Verzeichnung im Zwischenbereich aufweist.

Dieses neue Gleitsichtglasdesign lässt sich dabei unter Berücksichtigung der ursprünglichen Gebrauchsbedingungen, Dickenvorgaben usw. realisieren.

Eine besonders vorteilhafte Ausführungsvariante des erfindungsgemäßen Verfahrens ist dadurch gekennzeichnet, dass für wenigstens eine Bewertungsstelle ein Soll-Restastigmatismus vorgegeben wird, der kleiner ist, als der kleinste theoretisch erreichbare Restastigmatismus an der wenigstens einen entsprechenden Bewertungsstelle bei einem Vergleichs-Gleitsicht-Brillenglas für eine gleiche Verordnung und gleichem Objektabstandsmodell, aber mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex und dass das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen erst dann abgebrochen wird, wenn der für das entworfene Gleitsicht-Brillenglas erreichte Restastigmatismus an der wenigstens einen Bewertungsstelle kleiner ist als der theoretisch erreichbare Restastigmatismus an der wenigstens einen entsprechenden Bewertungsstelle bei dem Vergleichs-Gleitsicht-Brillenglas.

Man kann -wie oben bereits ausgeführt wurde- den Soll-Restastigmatismus an allen Bewertungsstellen zu Null setzen. Um ein Gleitsicht-Brillenglas zu entwerfen, welches ganzflächig bessere optische Eigenschaften hat, als eine Vergleichs-Gleitsicht-Brillenglas der herkömmlichen Art, wird man den Soll-Restastigmatismus an allen Bewertungsstellen zumindest um einen signifikanten Prozentsatz, von z.B. 10 - 50 % geringer wählen, als zum Entwurf des Vergleichs-Gleitsicht-Brillenglases üblicherweise angesetzt wird. Im Allgemeinen wird an wenigstens den Bewertungsstellen ein Soll-Restastigmatismus vorgegeben werden, der kleiner ist, als der theoretisch erreichbare Restastigmatismus an den wenigstens entsprechenden Bewertungsstellen bei dem Vergleichs-Gleitsicht-Brillenglas, welche innerhalb des späteren Progressionskanals liegen sollen. Eine Verbreiterung des Progressionskanals ist nämlich stets wünschenswert.

Zusätzlich oder alternativ zu der vorstehend beschriebenen vorteilhaften Ausführungsvariante besteht eine Verfahrensvariante darin, das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen, mit der Maßgabe durchzuführen, dass der Maximalwert des Restastigmatismus des Gleitsicht-Brillenglases kleiner ist, als der Maximalwert des Restastigmatismus eines Vergleichs-Gleitsicht-Brillenglases für eine gleiche Verordnung mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex. Grundsätzlich muss der Maximalwert für den Restastigmatismus bei dem erfindungsgemäß entworfenen Gleitsicht-Brillenglas nicht am "gleichen" Ort bzw. an der "gleichen" Bewertungsstelle gelegen sein wie der Maximalwert für den Restastigmatismus beim Vergleichs-Gleitsicht-Brillenglas. Als Zusatzbedingung kommt dies bei der Durchführung des Verfahrens aber auch in Betracht. Durch diese Vorgaben werden die optischen Eigenschaften des erfindungsgemäßen Gleitsicht-Brillenglases gegenüber einem Vergleichs-Gleitsicht-Brillenglas herkömmlicher Fabrikationsart weiter verbessert.

Das erfindungsgemäße Verfahren kann in einer Ausführungsvariante so durchgeführt werden, dass beim Entwerfen des Gleitsicht-Brillenglases ein Gleitsicht-Brillenglas entsprechend einem Erzeugnis der vorstehend beschriebenen Arten resultiert. Die Vorteile dieser Erzeugnisse wurden oben bereits im Detail beschrieben.

Es ist in einer weiteren erfindungsgemäßen Verfahrensvariante sogar vorgesehen, dass das Entwerfen des Gleitsicht-Brillenglases gerade mit der Maßgabe erfolgt, ein Gleitsicht-Brillenglas entsprechend einem Erzeugnis nach einem der der vorstehend beschriebenen Arten zu erzeugen. Die Soll-Eigenschaften und die Abbruchbedingungen werden bei dieser weiteren Variante so gewählt, dass zwangsläufig das entsprechende Gleitsicht-Brillenglas mit den oben beschriebenen optischen Eigenschaften bei der durch die Darstellung vorgegebenen Anordnung vor dem Auge des zukünftigen Brillenträgers beim Entwerfen entsteht.

Die Erfindung sieht weiter ein Computerprogramm mit Programmcode zur Durchführung aller Verfahrensschritte nach einem der vorstehend beschriebenen Verfahren vor, wenn das Computerprogramm in einem Computer geladen und/oder in einem Computer ausgeführt wird. Das Computerprogramm kann auf jedem computerlesbaren Medium, insbesondere auf einer Festplatte eines Computers, auf einem USB-Stick oder auch in einer Cloud abgelegt sein. Demnach such die Erfindung auch Schutz für ein computerlesbares Medium mit einem Computerprogramm der vorstehend beschriebenen Art.

Die Erfindung bezieht sich auch auf ein Verfahren zum Herstellen eines Gleitsicht-Brillenglases eines unter Verwendung eines Verfahrens der vorstehend beschriebenen Varianten entworfenen Gleitsicht-Brillenglases durch ein additives Verfahren.

Additive Verfahren sind Verfahren, bei denen das Gleitsicht-Brillenglas sequentiell aufgebaut wird. Insbesondere ist in diesem Zusammenhang bekannt, dass insbesondere sogenannte digitale Fabrikatoren Fertigungsmöglichkeiten für nahezu beliebige Strukturen bieten, die mit den klassischen abrasiven Verfahren nicht oder nur schwer realisierbar sind. Innerhalb der Maschinenklasse der digitalen Fabrikatoren stellen die 3D-Drucker die wichtigste Teilklasse der additiven, also anhäufenden, aufbauenden Fabrikatoren dar. Die wichtigsten Techniken des 3D-Druckens sind das selektive Laserschmelzen (SLM) und das Elektronenstrahlschmelzen für Metalle und das selektive Lasersintern (SLS) für Polymere, Keramik und Metalle, die Stereolithografie (SLA) und das Digital Light Processing für flüssige Kunstharze und das Multijet- oder Polyjet-Modeling (z.B. Tintenstrahldrucken) sowie das Fused Deposition Modeling (FDM) für Kunststoffe und teilweise Kunstharze. Weiter bekannt ist auch ein Aufbau mit Hilfe von Nanoschichten, wie dies z.B. unter http://peaknano.com/wpcontent/uploads/PEAK-1510-GRINOptics-Overview.pdf, heruntergeladen am 12.1.2017 beschrieben ist.

Ausgangsmaterialien für die Fertigung mittels 3D-Druck sowie Möglichkeiten für das 3D-Fertigungsverfahren selbst entnimmt man z.B. der europäischen Patentanmeldung Nr. 16195139.7.

Eine Weiterbildung der Erfindung besteht in einem Verfahren zum Herstellen eines Gleitsicht-Brillenglases umfassend ein Verfahren zum Entwerfen eines Gleitsicht-Brillenglases wie oben beschrieben und Fertigen des Gleitsicht-Brillenglases nach dem Entwurf.

Das Fertigen des Gleitsicht-Brillenglases nach dem Entwurf kann erfindungsgemäß wiederum durch ein additives Verfahren erfolgen.

Eine andere Weiterbildung der Erfindung besteht in einem Computer mit einem Prozessor, der eingerichtet ist, ein Verfahren zum Entwerfen eines Gleitsicht-Brillenglases nach einem der oben beschriebenen Arten oder Varianten auszuführen.

Die Erfindung wird nachfolgend anhand der Zeichnungen näher beschrieben. Es zeigen:

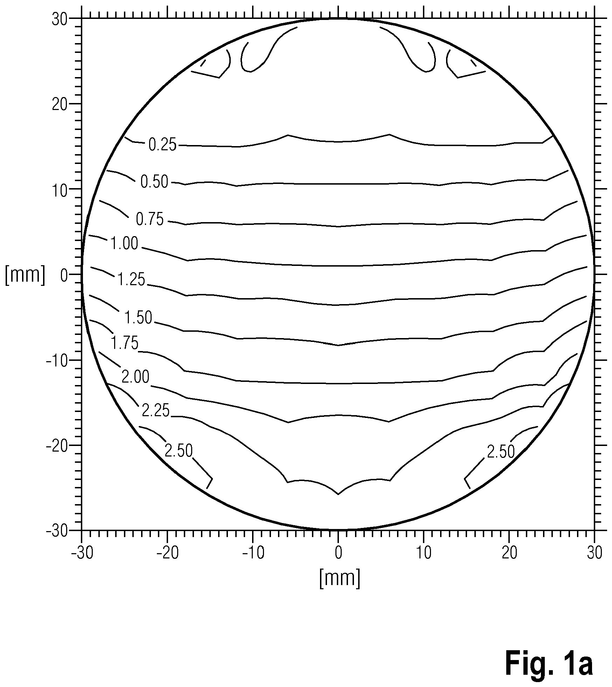

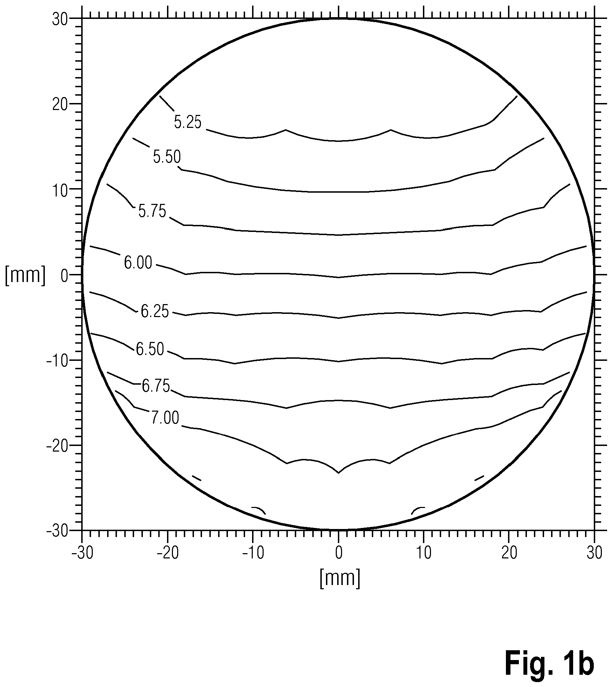

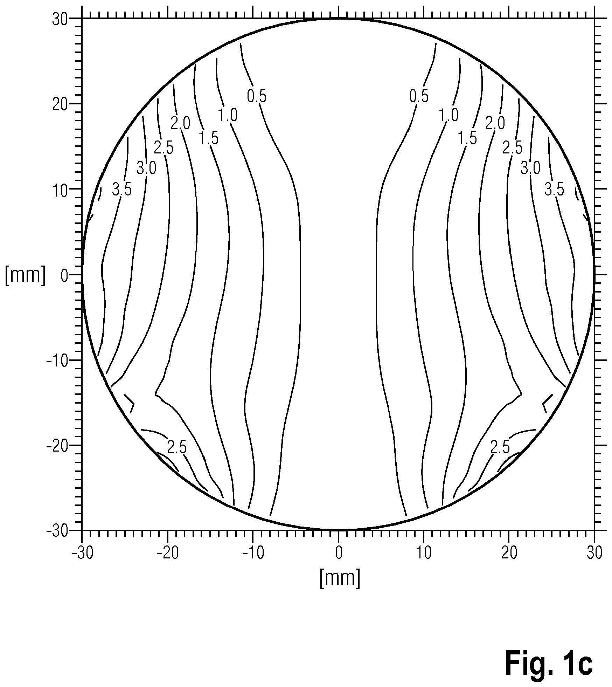

Figur 1    optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem ersten Ausführungsbeispiel nach der Erfindung

a: mittlere sphärische Wirkung des Vergleichs-Gleitsicht-Brillenglases

b: mittlerer Flächenbrechwert des Vergleichs-Gleitsicht-Brillenglases, objektseitige Freiformfläche

c: Flächenastigmatismus der objektseitigen Freiformfläche des Vergleichs-Gleitsicht-Brillenglases der Figur 1a

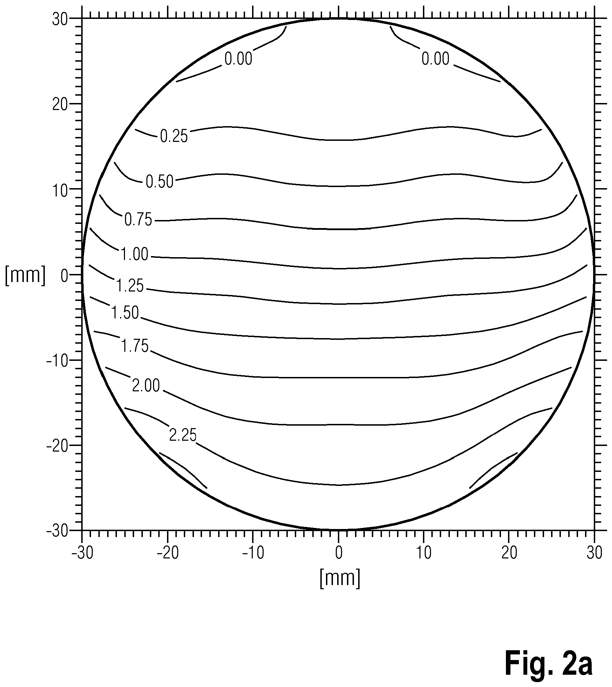

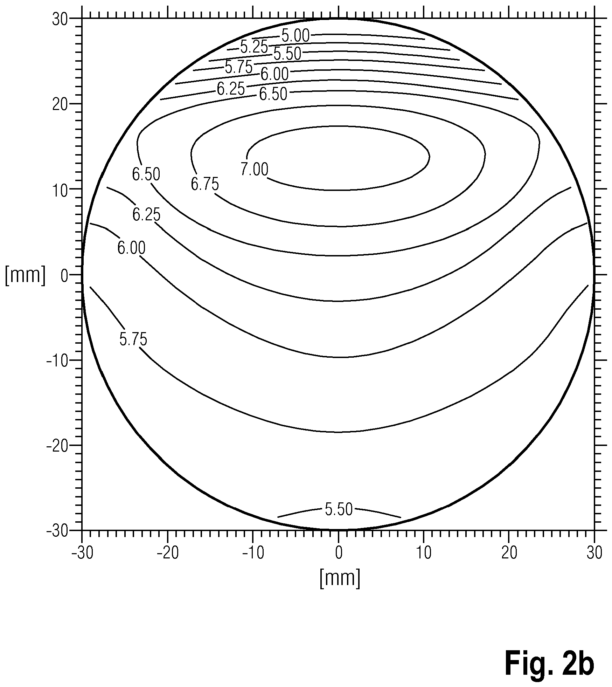

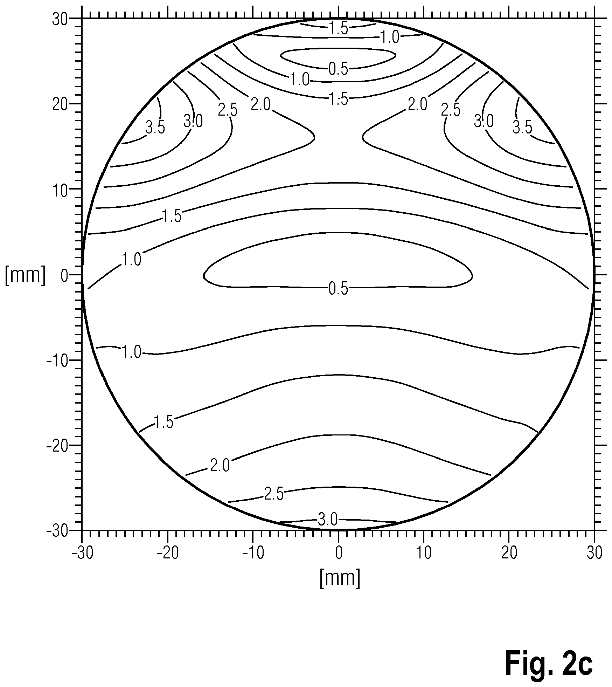

Figur 2    optische Eigenschaften des GRIN-Gleitsicht-Brillenglases nach dem ersten Ausführungsbeispiel

a: mittlere sphärische Wirkung
b: mittlerer Flächenbrechwert gerechnet für eine konstante Brechzahl n=1.600 für die objektseitige Freiformfläche
c: Flächenastigmatismus für n=1.600 der objektseitigen Freiformfläche des GRIN-Gleitsicht-Brillenglases der Figur 2a

Figur 3    die Verteilung der Brechzahl des GRIN-Gleitsicht-Brillenglases nach dem ersten Ausführungsbeispiel

Figur 4    Vergleich der Restastigmatismusverteilung des GRIN-Gleitsicht-Brillenglases nach dem ersten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des GRIN-Gleitsicht-Brillenglases nach dem ersten Ausführungsbeispiel

Figur 5    Vergleich des Restastigmatismusverlaufs des GRIN-Gleitsicht-Brillenglases nach dem ersten Ausführungsbeispiel mit dem Restastigmatismusverlauf des Vergleichs-Gleitsicht-Brillenglases längs eines Schnitts bei y=0 nach der Figur 4

a: Restastigmatismusverlauf des Vergleichs-Gleitsicht-Brillenglases
b: Restastigmatismusverlauf des GRIN-Gleitsicht-Brillenglases nach dem ersten Ausführungsbeispiel

Figur 6    Vergleich der Kontur der Vorderfläche des GRIN-Gleitsicht-Brillenglases nach dem ersten Ausführungsbeispiel mit der Kontur der Vorderfläche des Vergleichs-Gleitsicht-Brillenglases

a: Pfeilhöhen der Vorderfläche des Vergleichs-Gleitsicht-Brillenglases
b: Pfeilhöhen der Vorderfläche des GRIN-Gleitsicht-Brillenglases nach dem ersten Ausführungsbeispiel

Figur 7    optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas mit vertikaler Symmetrieebene nach einem zweiten Ausführungsbeispiel nach der Erfindung

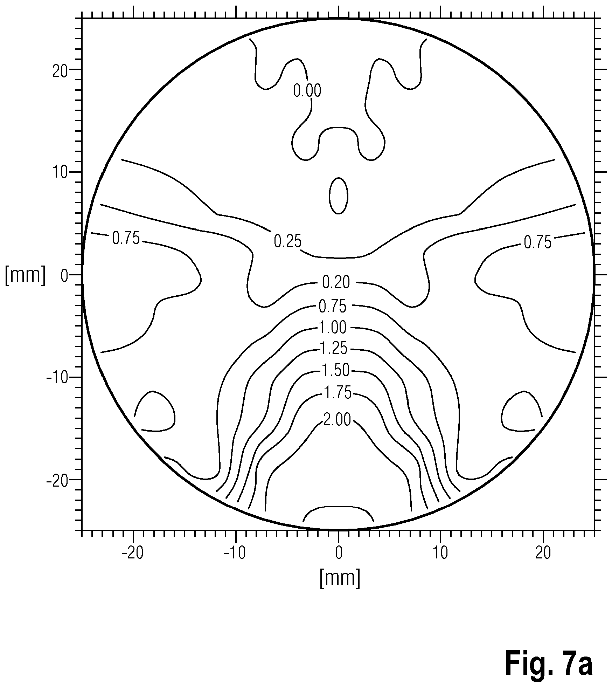

a: mittlere sphärische Wirkung
b: mittlerer Flächenbrechwert, objektseitige Freiformfläche
c: Flächenastigmatismus der objektseitigen Freiformfläche des Vergleichs-Gleitsicht-Brillenglases der Figur 7a

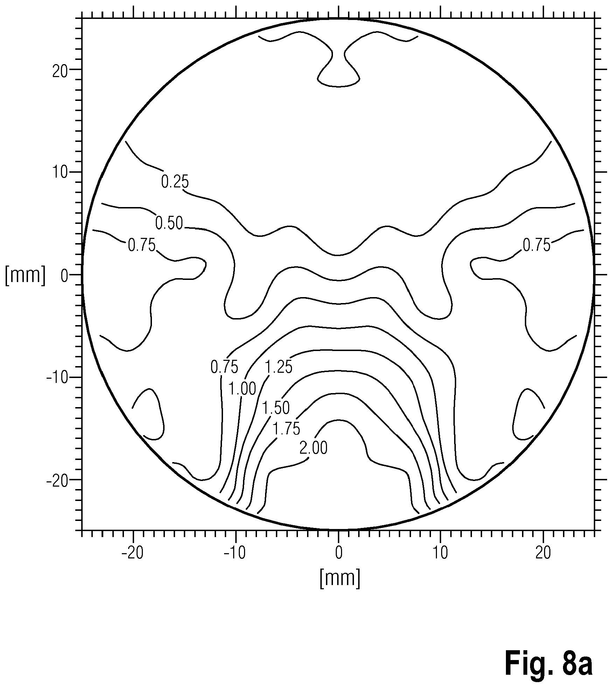

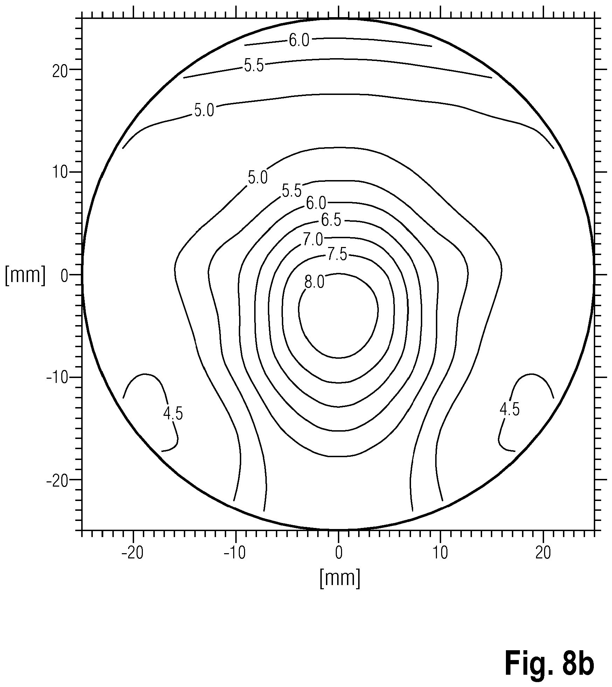

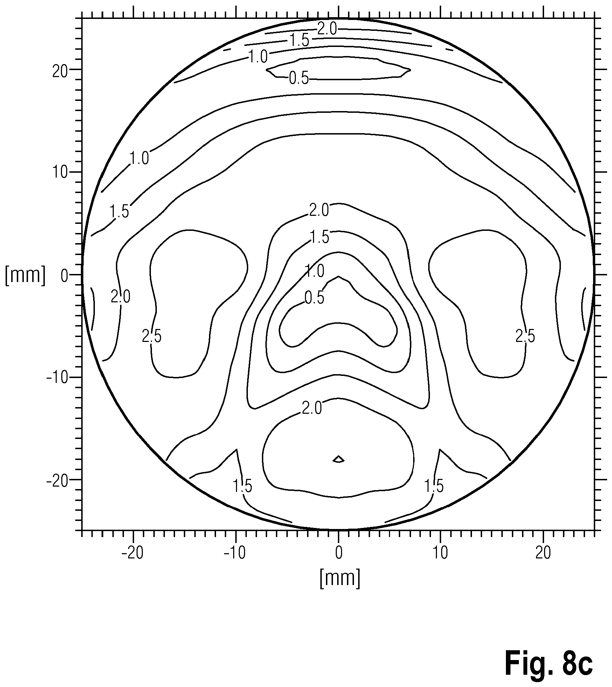

Figur 8    optische Eigenschaften des GRIN-Gleitsicht-Brillenglases nach dem zweiten Ausführungsbeispiel

a: mittlere sphärische Wirkung

b: mittlerer Flächenbrechwert gerechnet für eine Brechzahl n=1.600 für die objektseitige Fläche

c: Flächenastigmatismus für n=1.600 der objektseitigen Freiformfläche des GRIN-Gleitsicht-Brillenglases der Figur 8a

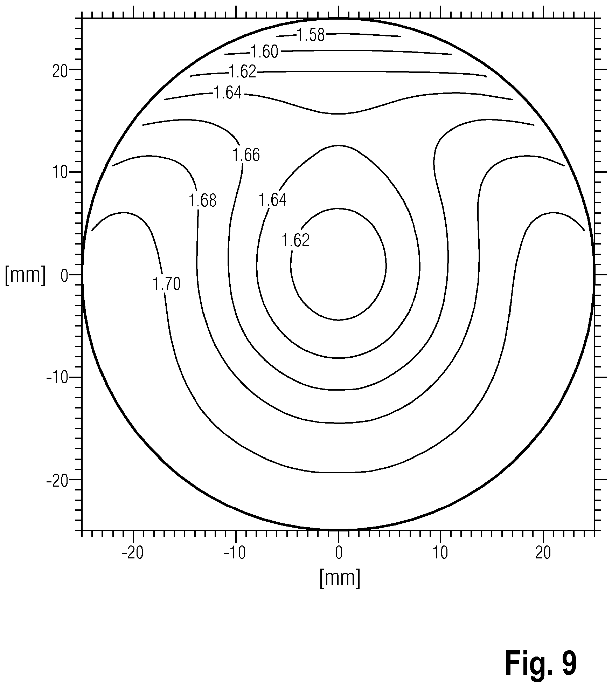

Figur 9    die Verteilung der Brechzahl des GRIN-Gleitsicht-Brillenglases nach dem zweiten Ausführungsbeispiel

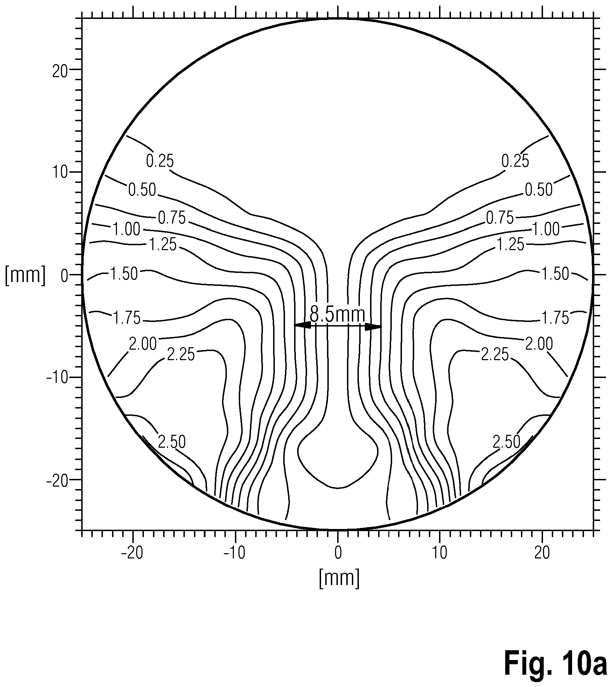

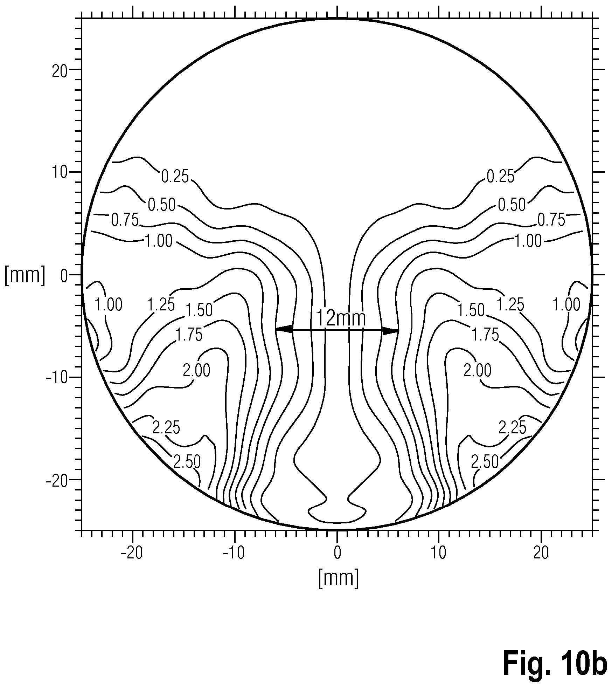

Figur 10    Vergleich der Restastigmatismusverteilung des GRIN-Gleitsicht-Brillenglases nach dem zweiten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des GRIN-Gleitsicht-Brillenglases nach dem zweiten Ausführungsbeispiel

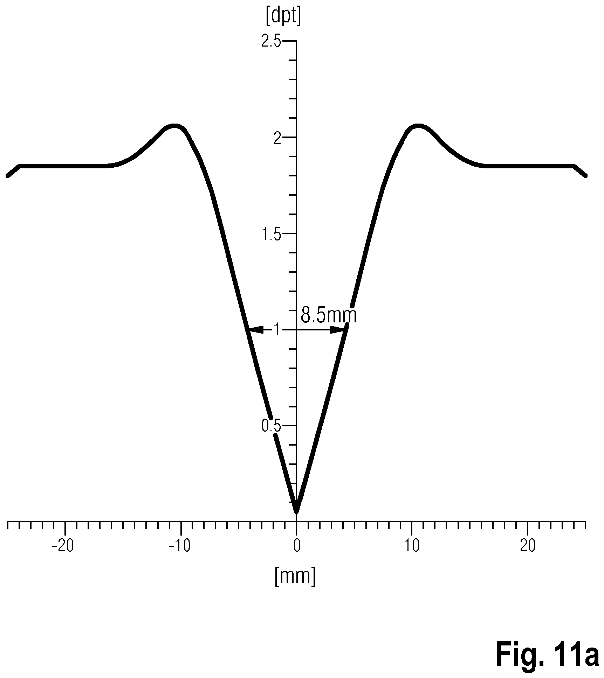

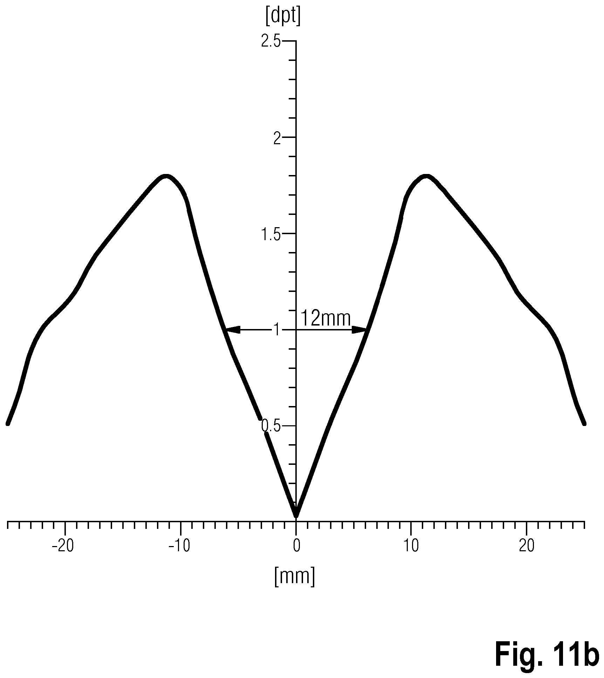

Figur 11    Vergleich des Restastigmatismusverlaufs des GRIN-Gleitsicht-Brillenglases nach dem zweiten Ausführungsbeispiel mit dem Restastigmatismusverlauf des Vergleichs-Gleitsicht-Brillenglases längs eines Schnitts bei y = -5 mm nach der Figur 10

a: Restastigmatismusverlauf des Vergleichs-Gleitsicht-Brillenglases
b: Restastigmatismusverlauf des GRIN-Gleitsicht-Brillenglases nach dem zweiten Ausführungsbeispiel

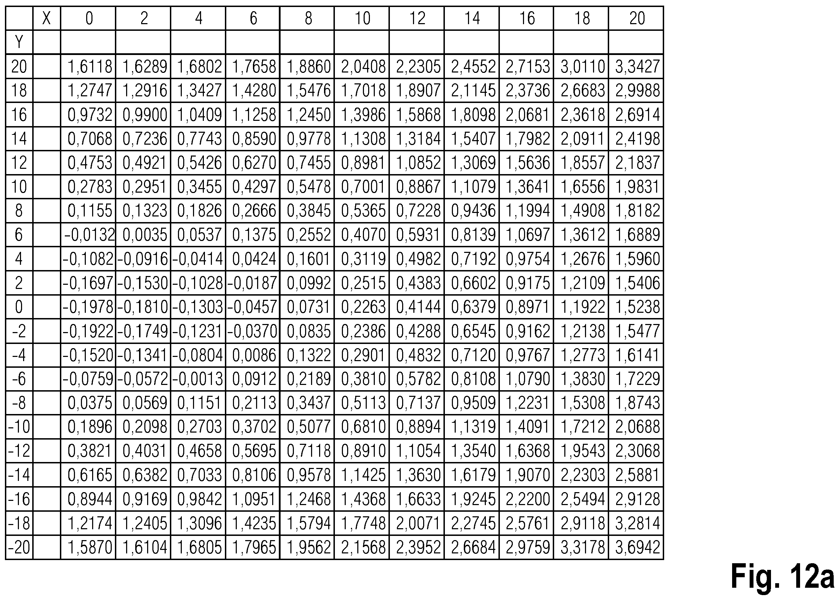

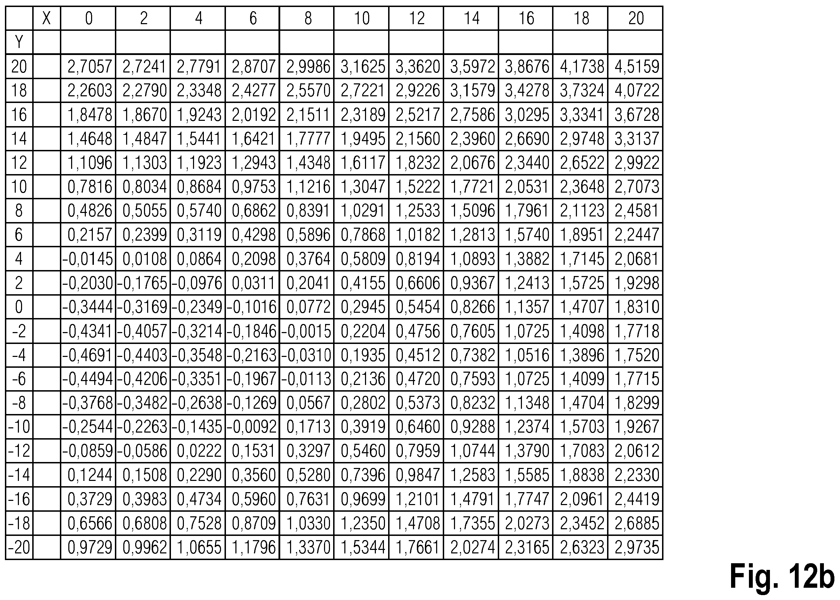

Figur 12     Vergleich der Kontur der Vorderfläche des GRIN-Gleitsicht-Brillenglases nach dem zweiten Ausführungsbeispiel mit der Kontur der Vorderfläche des Vergleichs-Gleitsicht-Brillenglases; die Pfeilhöhen sind gegenüber einer um -7,02° um die horizontale Achse verkippten Ebene angegeben

a: Pfeilhöhen der Vorderfläche des Vergleichs-Gleitsicht-Brillenglases
b: Pfeilhöhen der Vorderfläche des GRIN-Gleitsicht-Brillenglases nach dem zweiten Ausführungsbeispiel

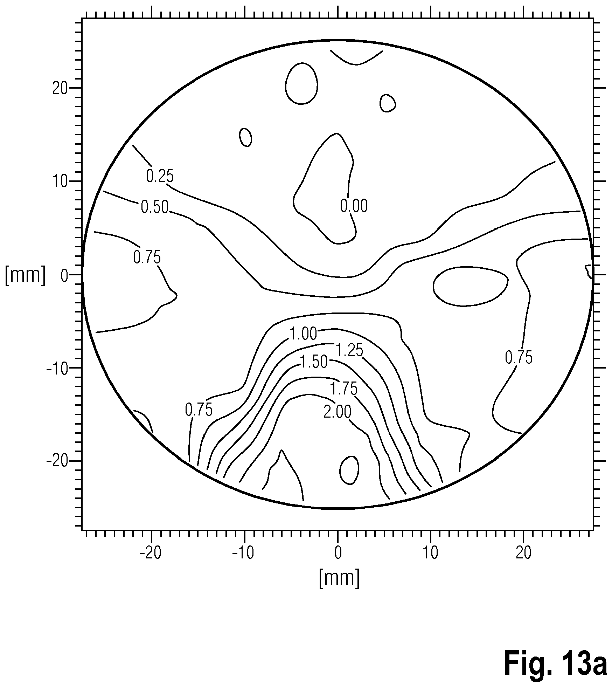

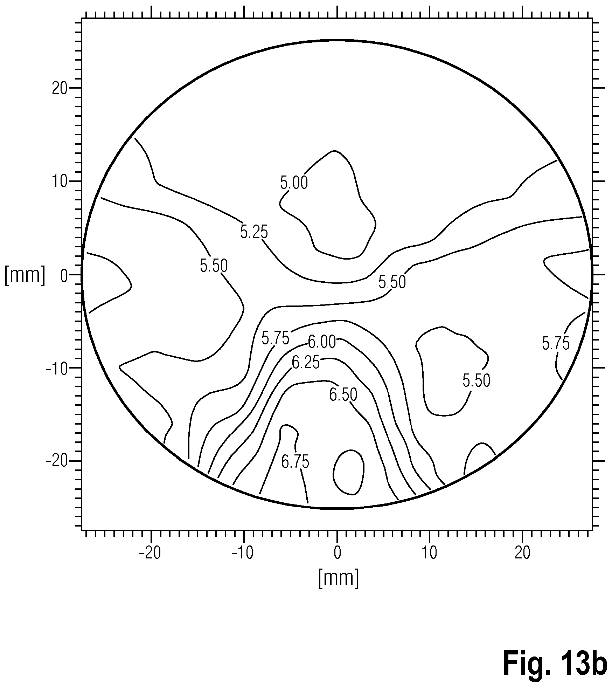

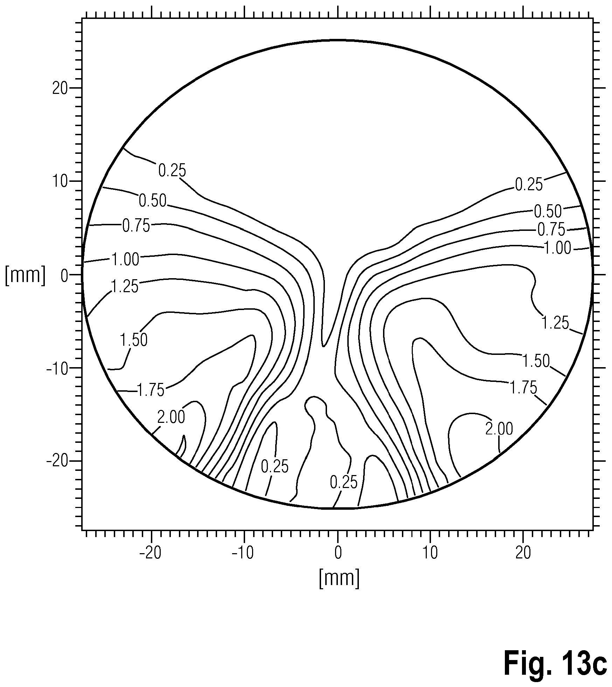

Figur 13     optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas ohne jegliche Symmetrie nach einem dritten Ausführungsbeispiel nach der Erfindung

a: mittlere sphärische Wirkung des Vergleichs-Gleitsicht-Brillenglases

b: mittlerer Flächenbrechwert des Vergleichs-Gleitsicht-Brillenglases, objektseitige Freiformfläche

c: Flächenastigmatismus der objektseitigen Freiformfläche des Vergleichs-Gleitsicht-Brillenglases der Figur 13a

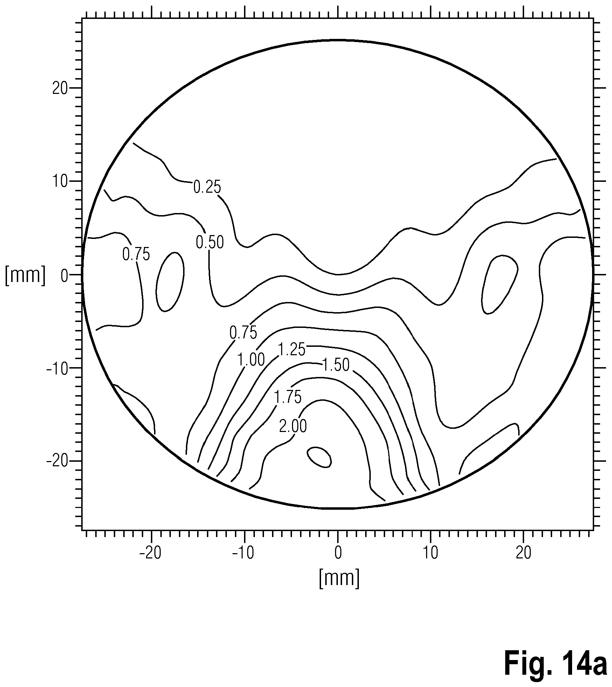

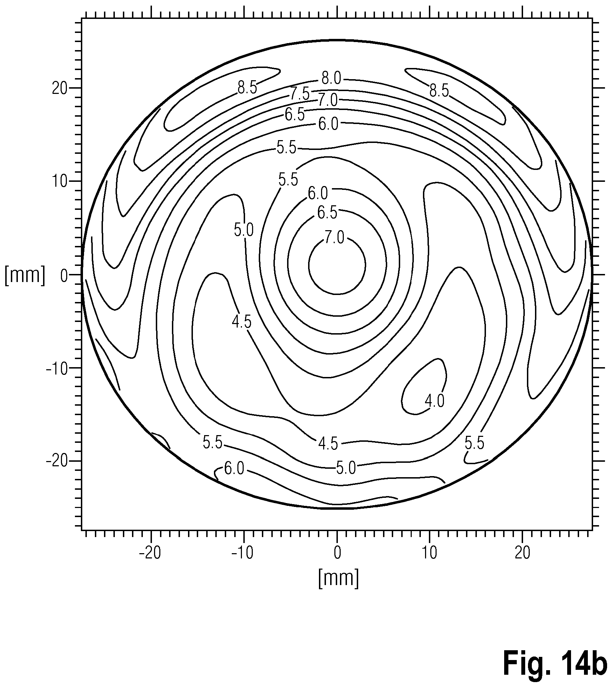

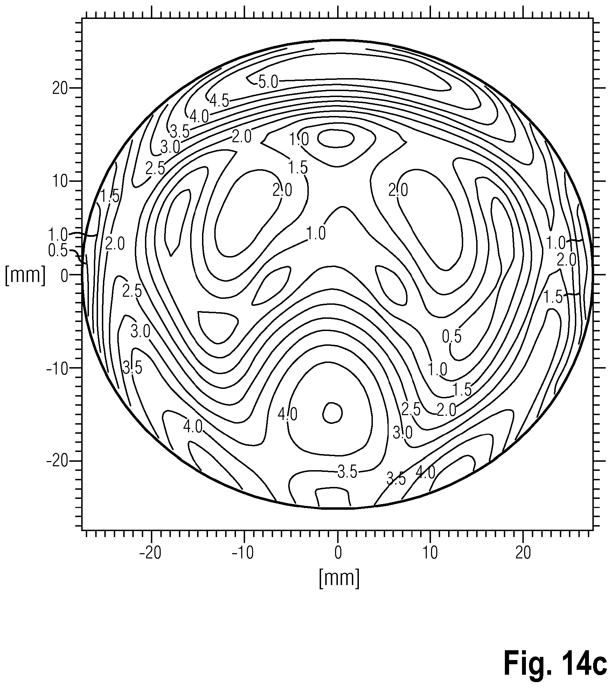

Figur 14     optische Eigenschaften des GRIN-Gleitsicht-Brillenglases nach dem dritten Ausführungsbeispiel

a: mittlere sphärische Wirkung

b: mittlerer Flächenbrechwert der objektseitigen Freiformfläche gerechnet für eine Brechzahl n=1.600

c: Flächenastigmatismus für n=1.600 der objektseitigen Freiformfläche des GRIN-Gleitsicht-Brillenglases der Figur 14a

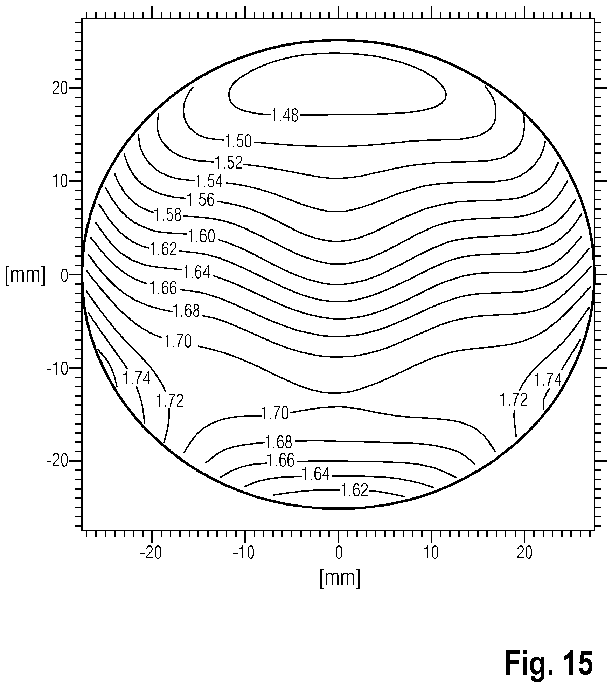

Figur 15     die Verteilung der Brechzahl des GRIN-Gleitsicht-Brillenglases nach dem dritten Ausführungsbeispiel

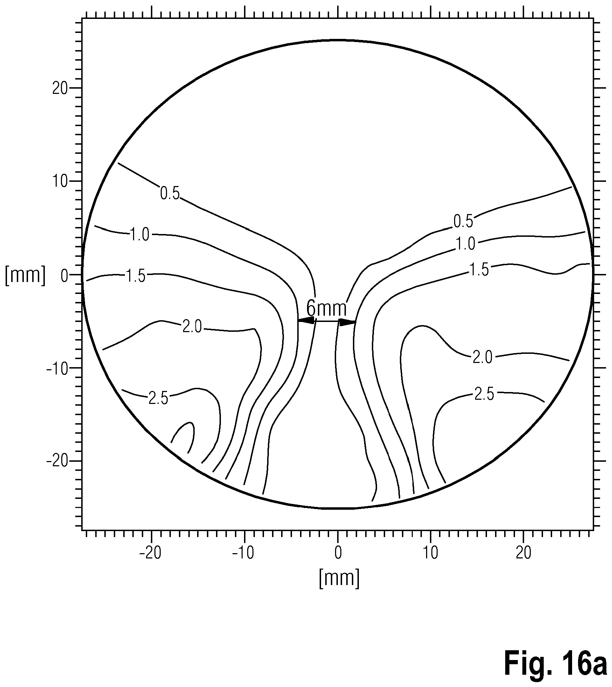

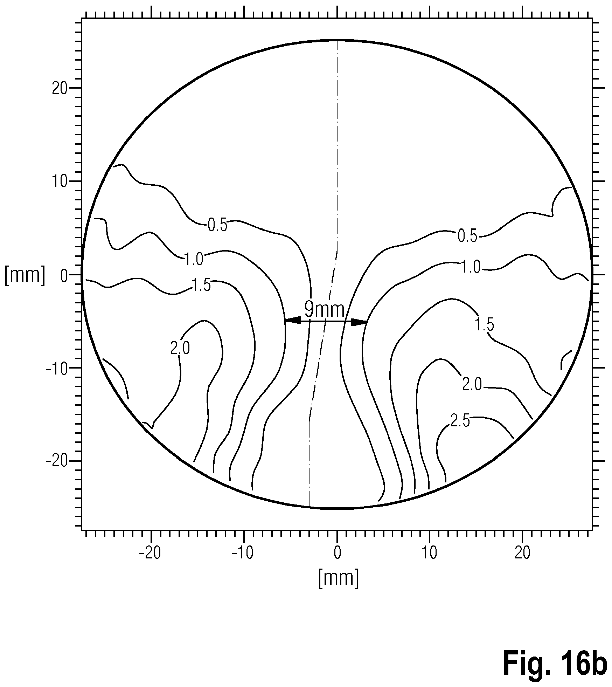

Figur 16     Vergleich der Restastigmatismusverteilung des GRIN-Gleitsicht-Brillenglases nach dem dritten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des GRIN-Gleitsicht-Brillenglases nach dem dritten Ausführungsbeispiel

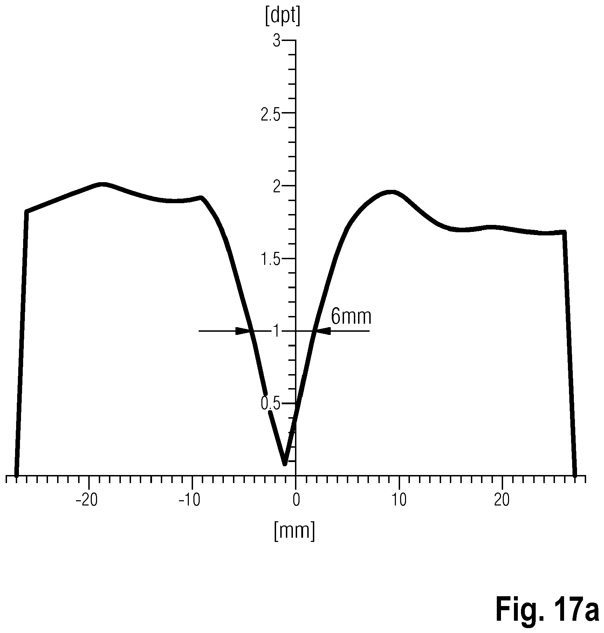

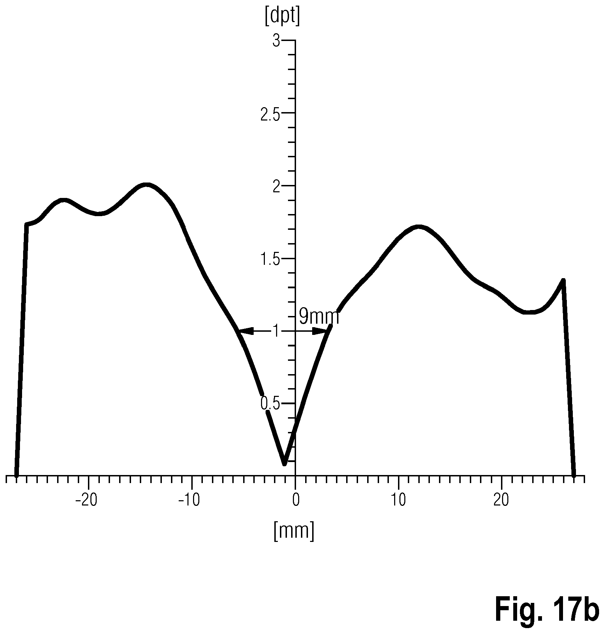

Figur 17     Vergleich des Restastigmatismusverlaufs des GRIN-Gleitsicht-Brillenglases nach dem dritten Ausführungsbeispiel mit dem Restastigmatismusverlauf des Vergleichs-Gleitsicht-Brillenglases längs eines Schnitts bei y = -5 mm nach der Figur 16

a: Restastigmatismusverlauf des Vergleichs-Gleitsicht-Brillenglases
b: Restastigmatismusverlauf des GRIN-Gleitsicht-Brillenglases nach dem dritten Ausführungsbeispiel

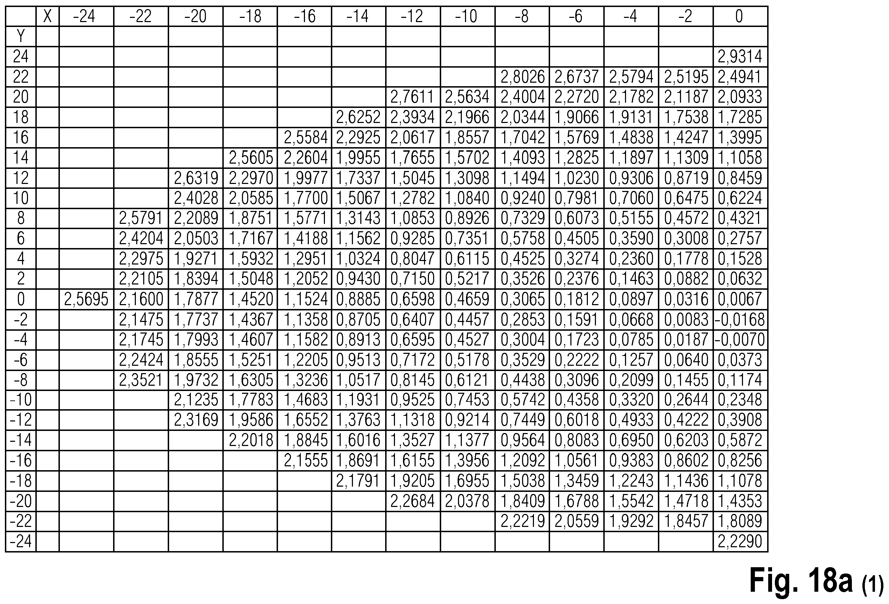

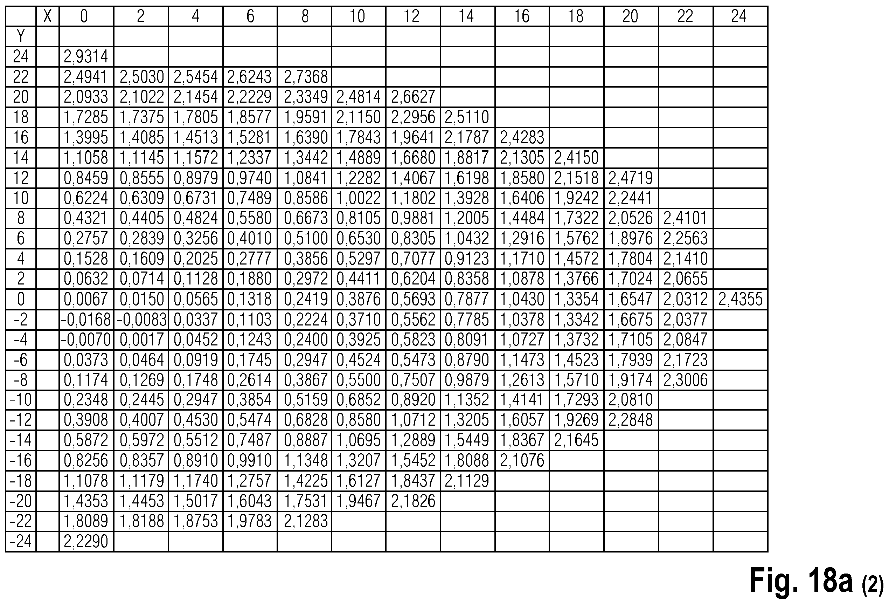

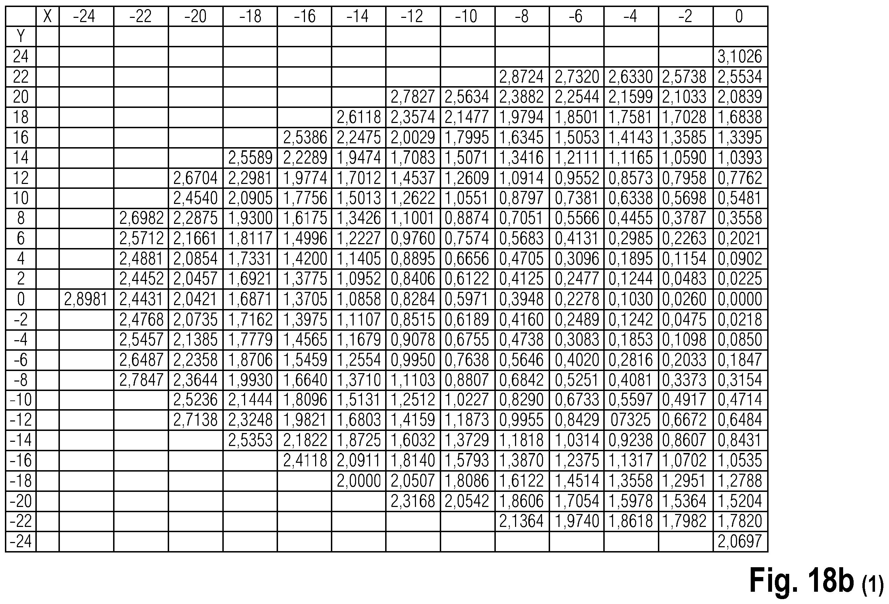

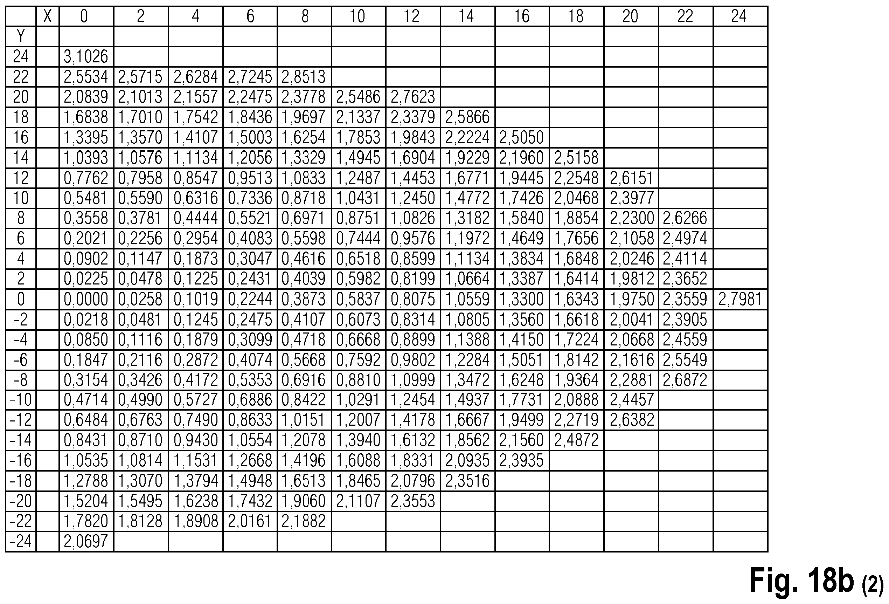

Figur 18     Vergleich der Kontur der Vorderfläche des GRIN-Gleitsicht-Brillenglases nach dem dritten Ausführungsbeispiel mit der Kontur der Vorderfläche des Vergleichs-Gleitsicht-Brillenglases

a: Pfeilhöhen der Vorderfläche des Vergleichs-Gleitsicht-Brillenglases
b: Pfeilhöhen der Vorderfläche des GRIN-Gleitsicht-Brillenglases nach dem dritten Ausführungsbeispiel

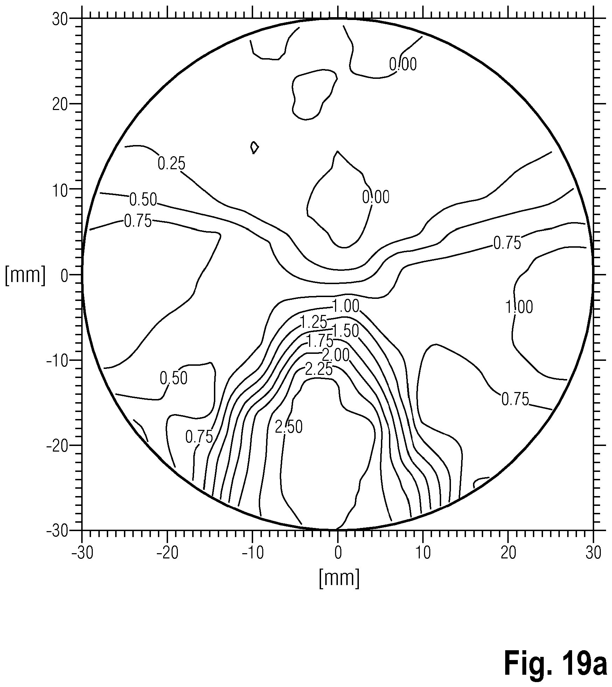

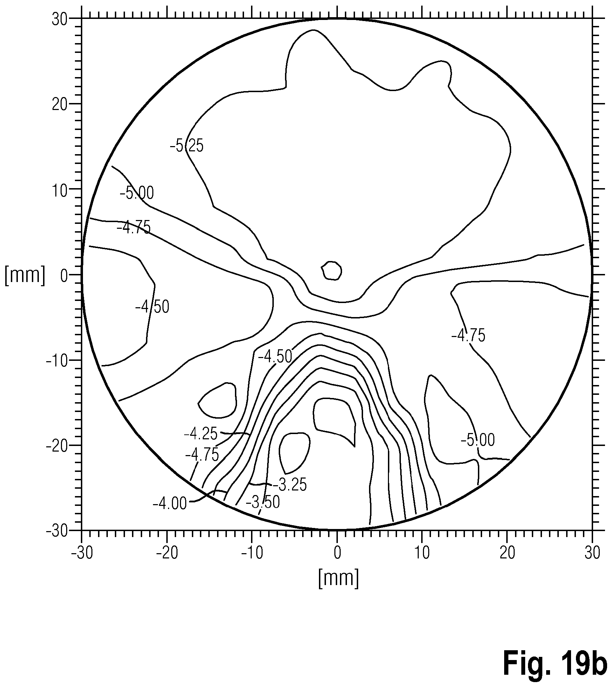

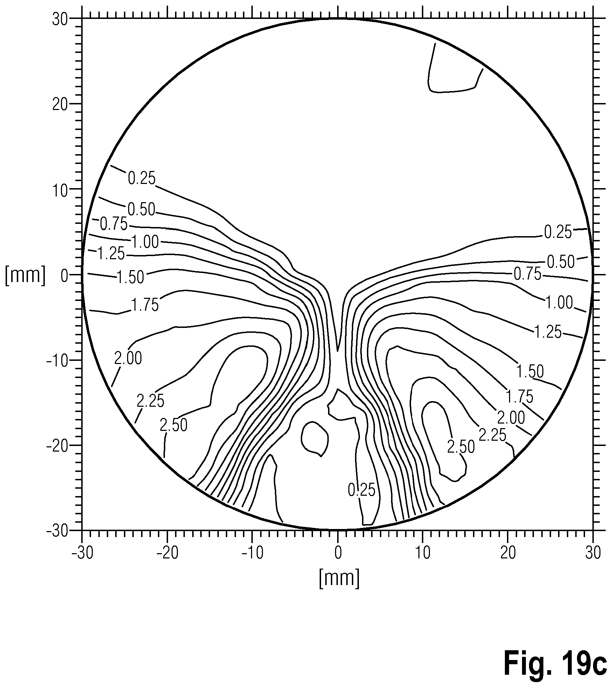

Figur 19     optische Eigenschaften eines Vergleichs-Gleitsicht-Brillenglases herkömmlicher Bauart aus einem Material mit einem Brechungsindex von n=1.600 zu einem GRIN-Gleitsicht-Brillenglas ohne jegliche Symmetrie nach einem vierten Ausführungsbeispiel nach der Erfindung

a: mittlere sphärische Wirkung des Vergleichs-Gleitsicht-Brillenglases

b: mittlerer Flächenbrechwert des Vergleichs-Gleitsicht-Brillenglases, augenseitige Freiformfläche

c: Flächenastigmatismus der augenseitigen Freiformfläche des Vergleichs-Gleitsicht-Brillenglases der Figur 19a

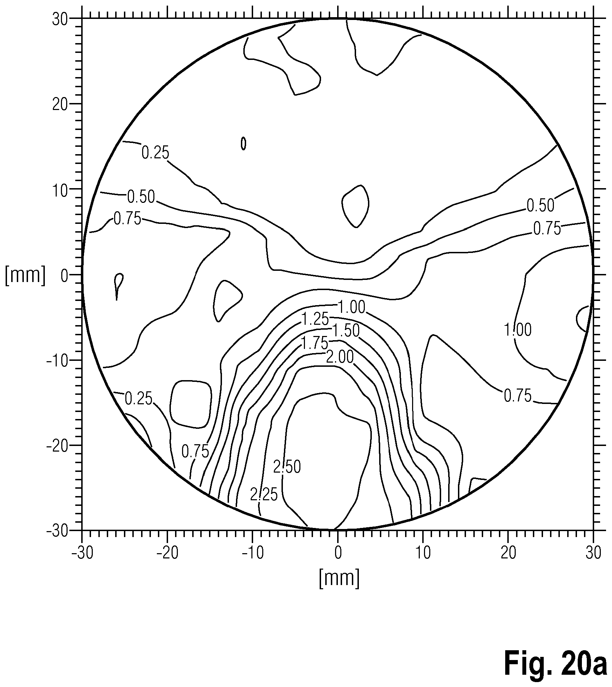

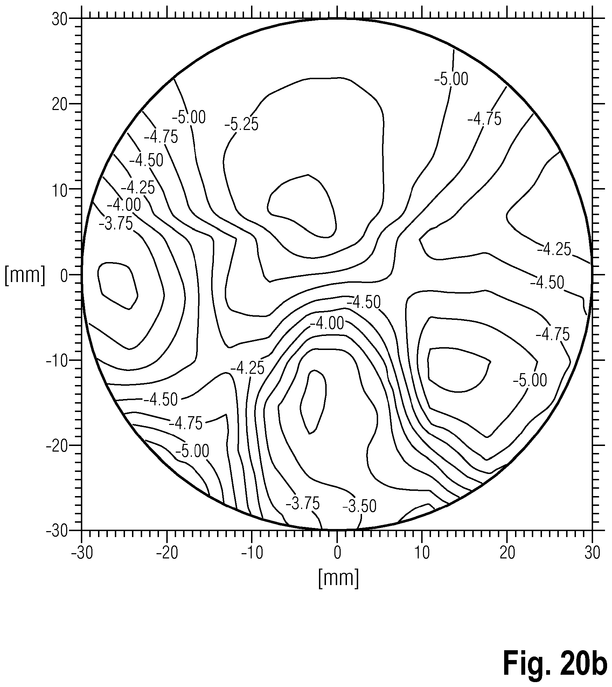

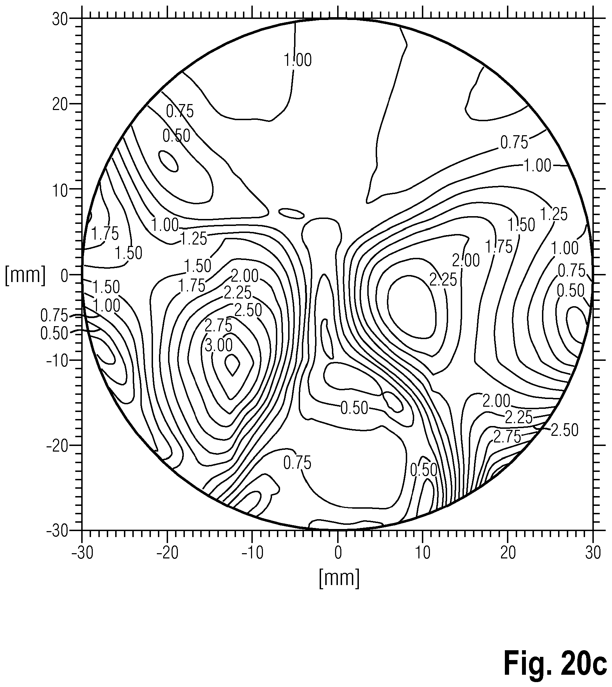

Figur 20 optische Eigenschaften des GRIN-Gleitsicht-Brillenglases nach dem vierten Ausführungsbeispiel

a: mittlere sphärische Wirkung
b: mittlerer Flächenbrechwert der augenseitigen Freiformfläche gerechnet für eine Brechzahl n=1.600
c: Flächenastigmatismus für n=1.600 der augenseitigen Freiformfläche des GRIN-Gleitsicht-Brillenglases der Figur 20a

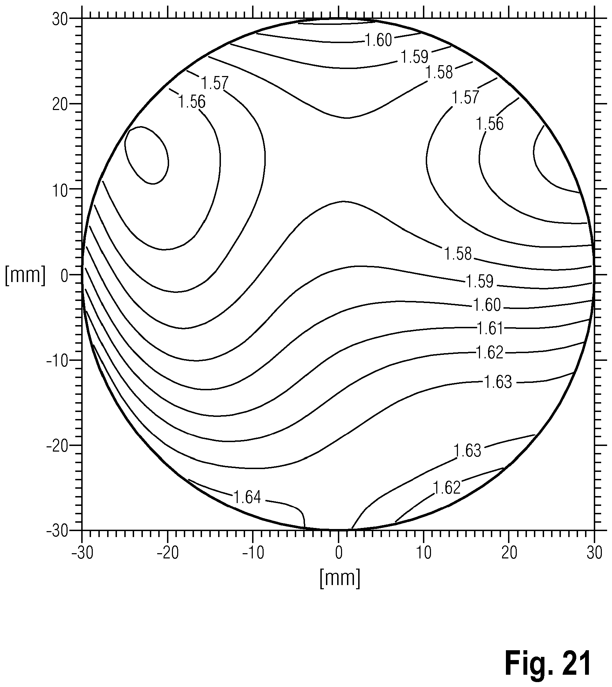

Figur 21 die Verteilung der Brechzahl des GRIN-Gleitsicht-Brillenglases nach dem vierten Ausführungsbeispiel

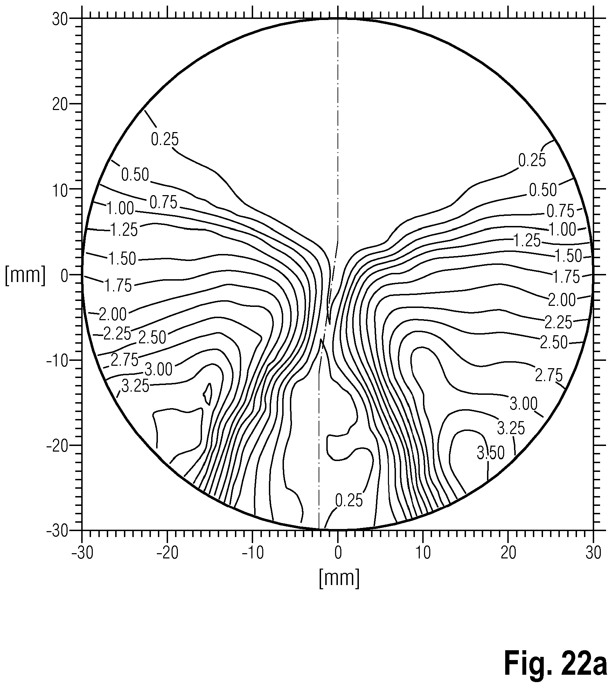

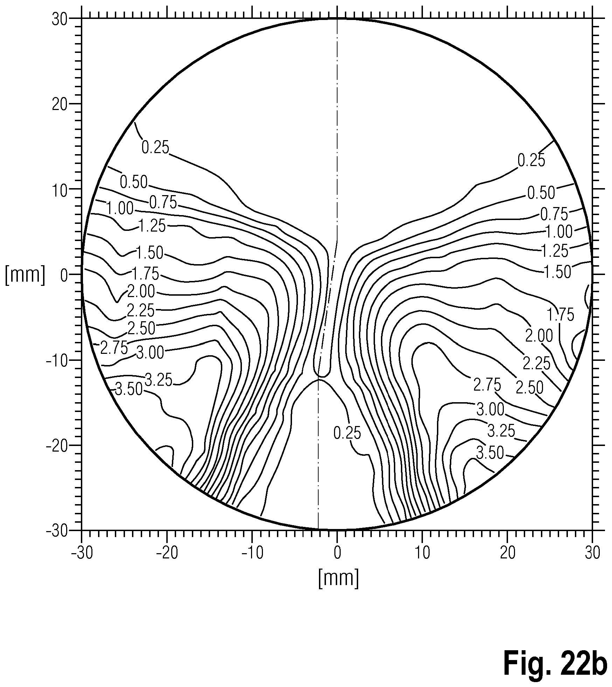

Figur 22 Vergleich der Restastigmatismusverteilung des GRIN-Gleitsicht-Brillenglases nach dem vierten Ausführungsbeispiel mit der Restastigmatismusverteilung des Vergleichs-Gleitsicht-Brillenglases

a: Restastigmatismusverteilung des Vergleichs-Gleitsicht-Brillenglases
b: Restastigmatismusverteilung des GRIN-Gleitsicht-Brillenglases nach dem vierten Ausführungsbeispiel

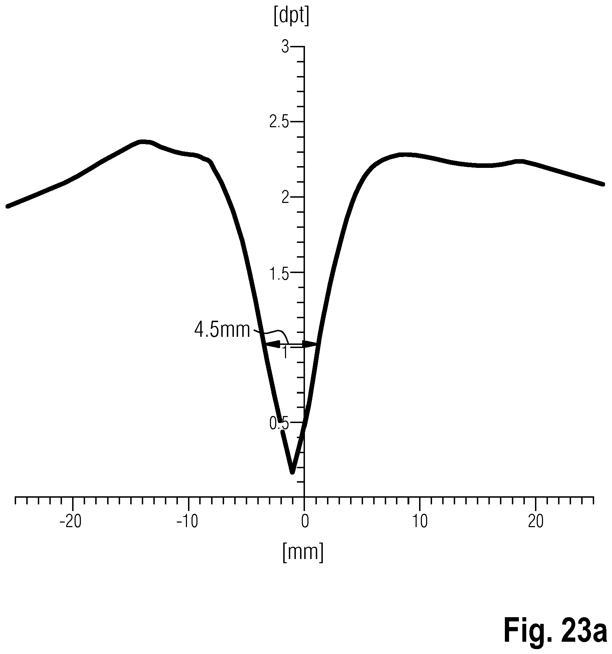

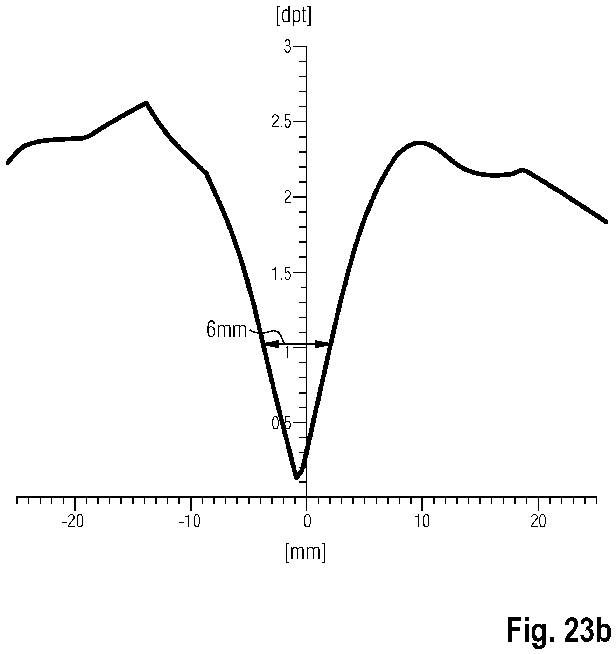

Figur 23 Vergleich des Restastigmatismusverlaufs des GRIN-Gleitsicht-Brillenglases nach dem vierten Ausführungsbeispiel mit dem Restastigmatismusverlauf des Vergleichs-Gleitsicht-Brillenglases längs eines Schnitts bei y = -4 mm nach der Figur 22

a: Restastigmatismusverlauf des Vergleichs-Gleitsicht-Brillenglases
b: Restastigmatismusverlauf des GRIN-Gleitsicht-Brillenglases nach dem vierten Ausführungsbeispiel

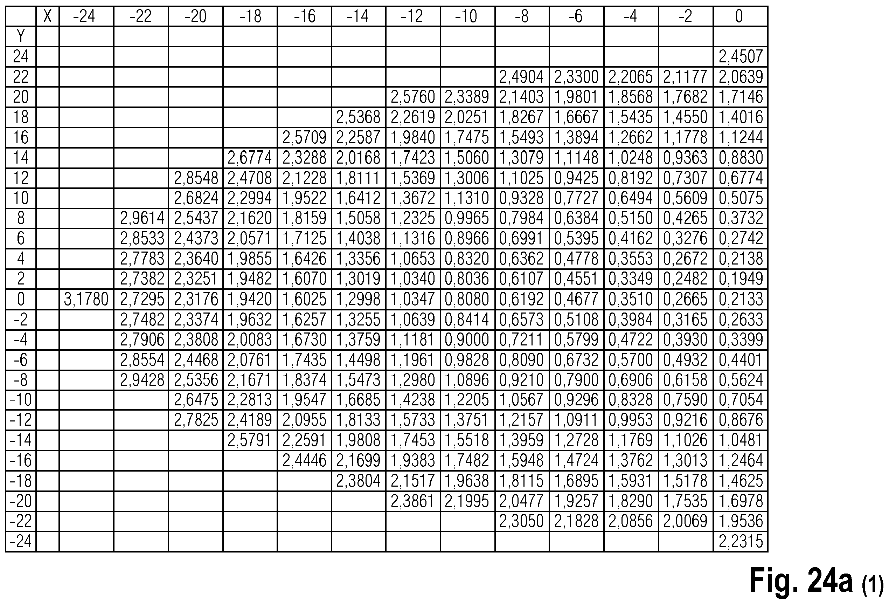

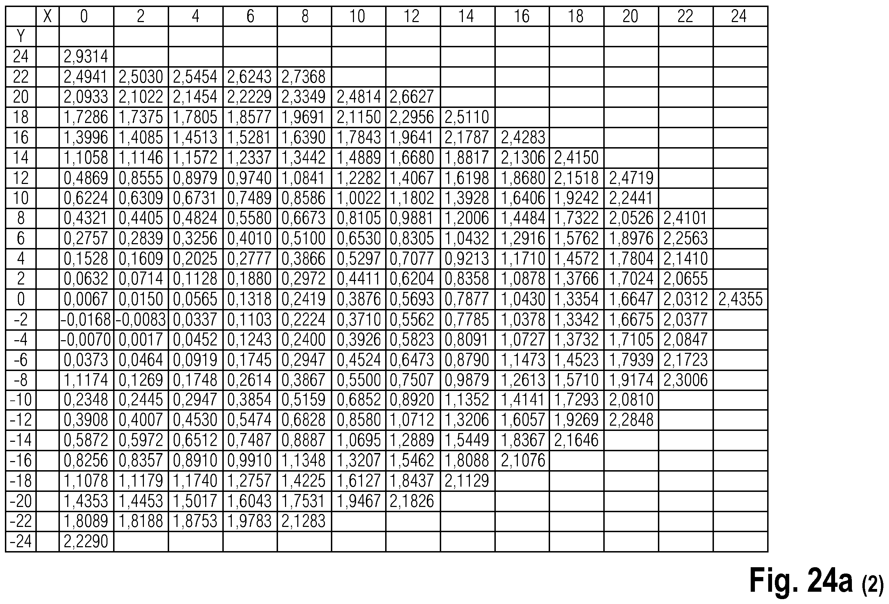

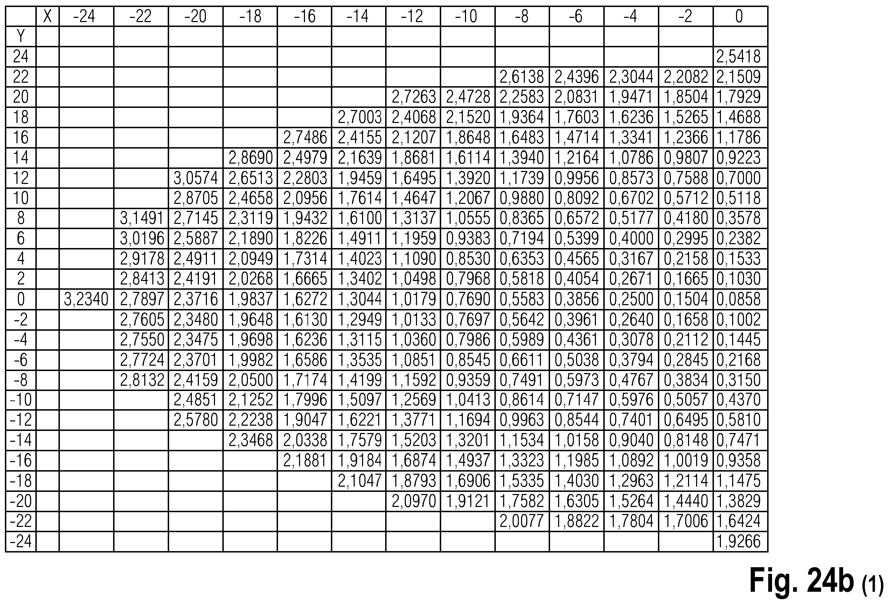

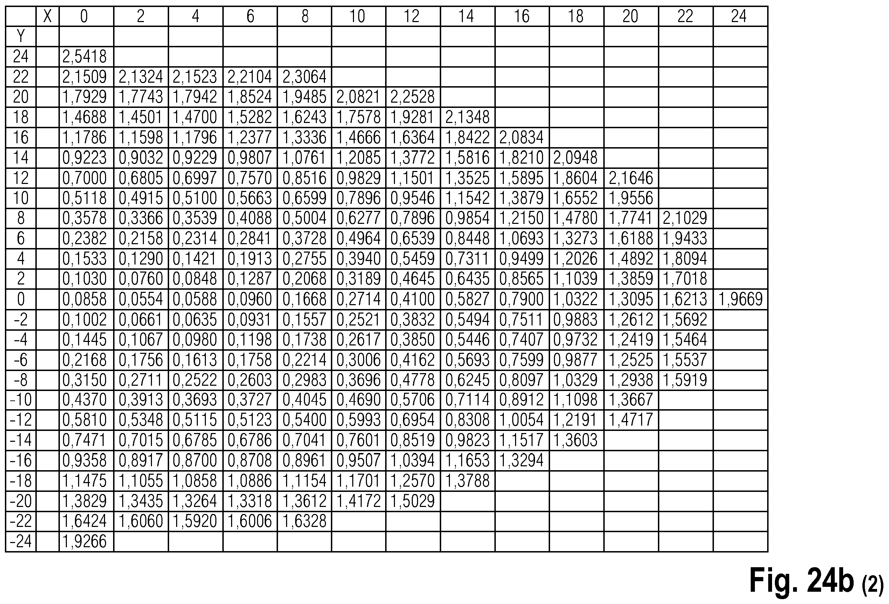

Figur 24 Vergleich der Kontur der Rückfläche des GRIN-Gleitsicht-Brillenglases nach dem vierten Ausführungsbeispiel mit der Kontur der Rückfläche des Vergleichs-Gleitsicht-Brillenglases

a: Pfeilhöhen der Rückfläche des Vergleichs-Gleitsicht-Brillenglases
b: Pfeilhöhen der Rückfläche des GRIN-Gleitsicht-Brillenglases nach dem vierten Ausführungsbeispiel

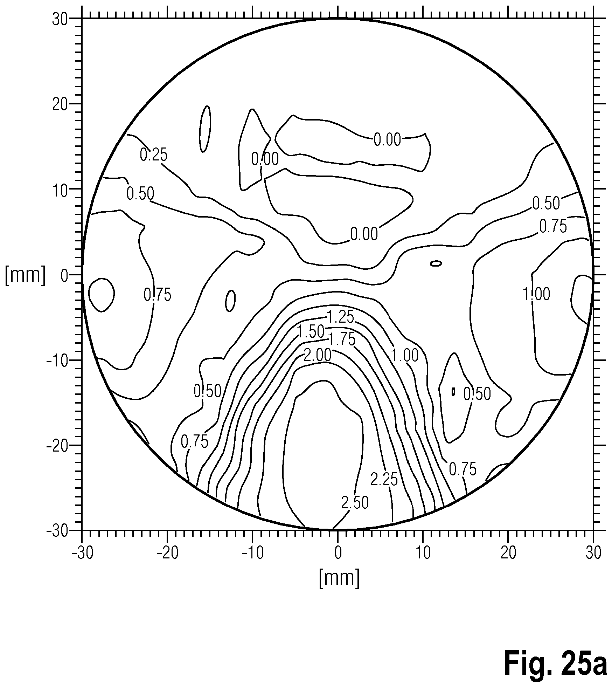

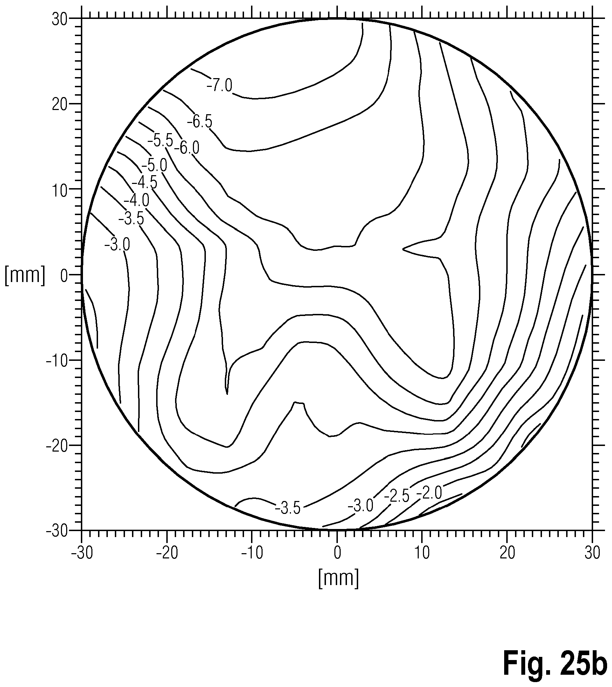

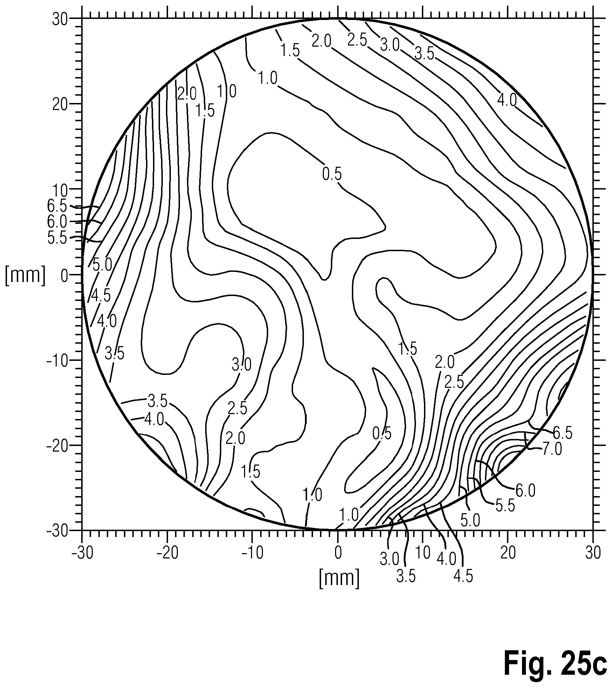

Figur 25 optische Eigenschaften des GRIN-Gleitsicht-Brillenglases ohne jede Symmetrie nach dem fünften Ausführungsbeispiel, ausgelegt für die Rezeptwerte Sphäre -4 dpt, Zylinder 2 dpt, Achslage 90 Grad

a: mittlere sphärische Wirkung

b: mittlerer Flächenbrechwert der augenseitigen Freiformfläche gerechnet für eine Brechzahl n=1.600

c: Flächenastigmatismus für n=1.600 der augenseitigen Freiformfläche des GRIN-Gleitsicht-Brillenglases der Figur 25a

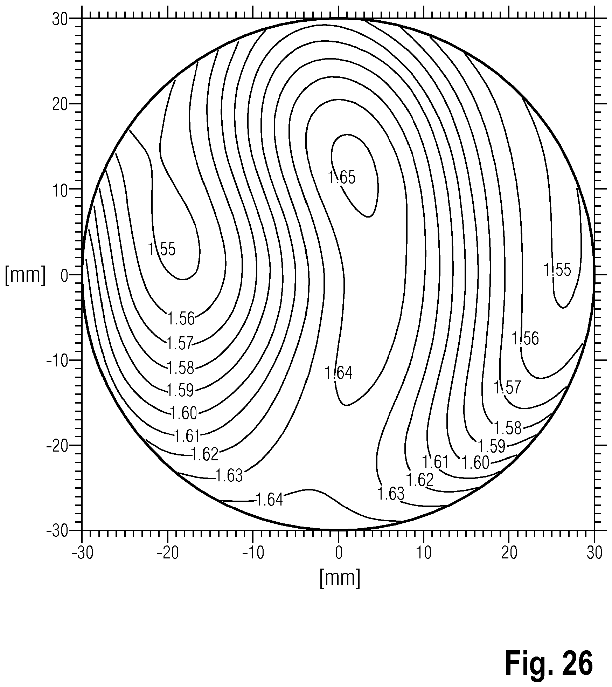

Figur 26 die Verteilung der Brechzahl des GRIN-Gleitsicht-Brillenglases nach dem fünften Ausführungsbeispiel

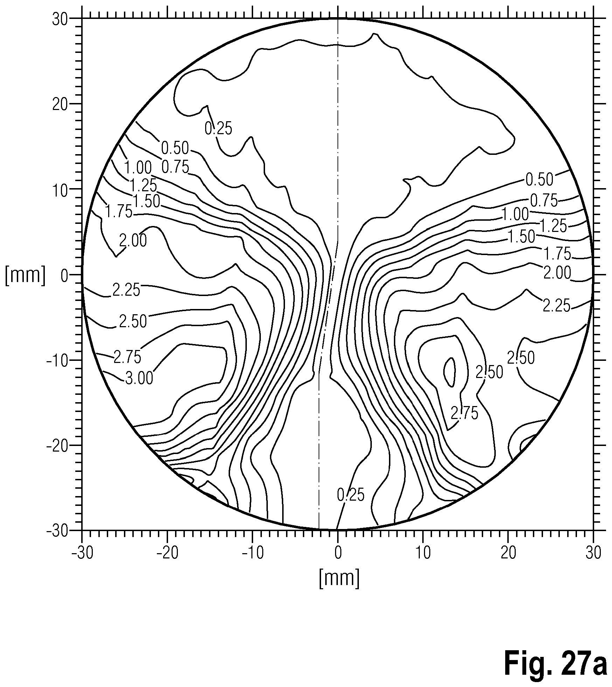

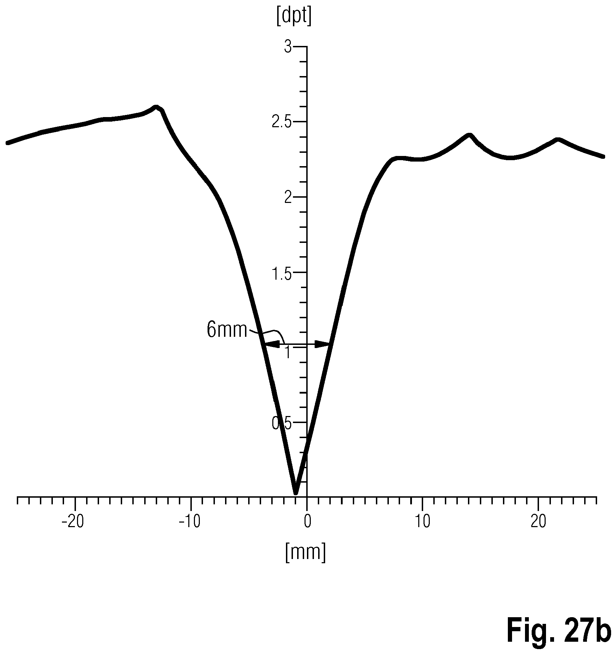

Figur 27 Restastigmatismus des GRIN-Gleitsicht-Brillenglases nach dem fünften Ausführungsbeispiel

a: Restastigmatismusverteilung des GRIN-Gleitsicht-Brillenglases nach dem fünften Ausführungsbeispiel
b: Restastigmatismusverlauf längs eines Schnitts bei y = -4 mm des GRIN-Gleitsicht-Brillenglases nach dem fünften Ausführungsbeispiel

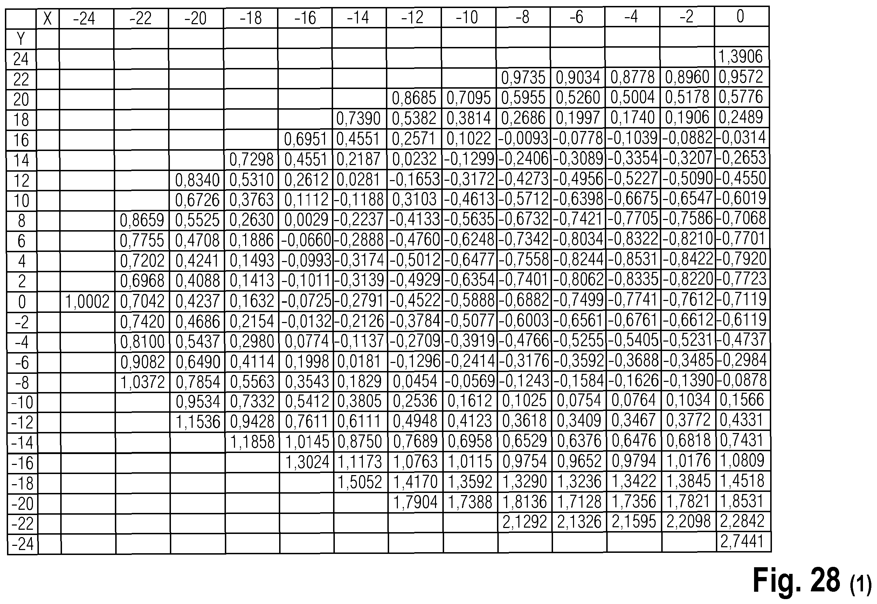

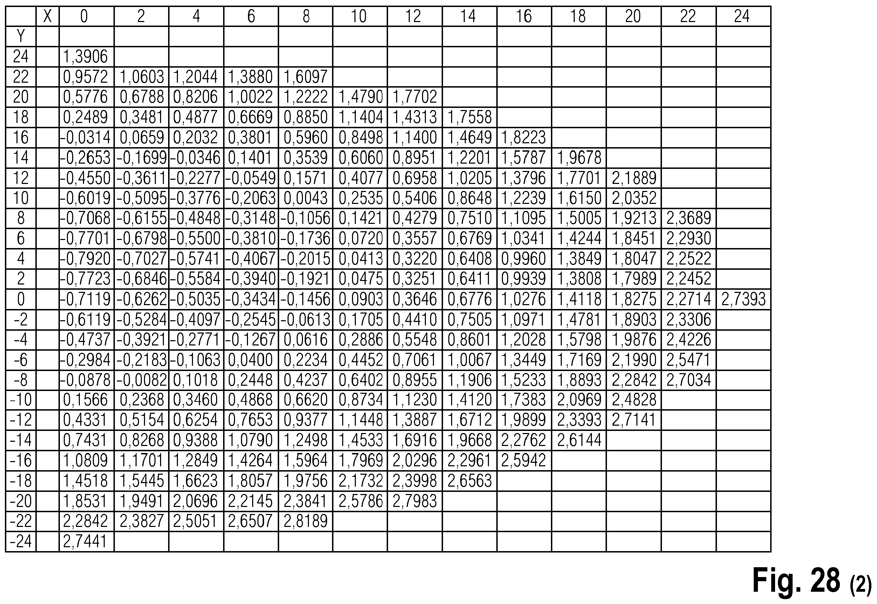

Figur 28 Pfeilhöhen der Rückfläche des GRIN-Gleitsicht-Brillenglases nach dem fünften Ausführungsbeispiel

Die fünf ersten Ausführungsbeispiele beziehen sich auf GRIN-Gleitsicht-Brillengläser bzw. deren Darstellung in einem Speicher eines Computers entsprechend einem Erzeugnis der erfindungsgemäßen Art. Das sechste Ausführungsbeispiel zeigt exemplarisch ein erfindungsgemäßes Verfahren zum Entwerfen eines GRIN-Gleitsicht-Brillenglases.

Erstes Ausführungsbeispiel

Im ersten Beispiel wird ein Gleitsicht-Brillenglas mit einer besonders einfachen Flächengeometrie gewählt. Es ist spiegelsymmetrisch zu einer auf der Zeichenebene senkrecht stehenden Ebene aufgebaut und besteht im Wesentlichen nur aus einer im mittleren Bereich angeordneten, senkrecht von oben nach unten verlaufenden Zone mit stetig zunehmender Wirkung.

Figur 1a zeigt die Verteilung der mittleren sphärischen Wirkung im Strahlengang für den Brillenträger für ein Gleitsicht-Brillenglas aus einem Standardmaterial (Brechzahl n=1.600) mit einer objektseitigen Freiformfläche, welche durch sogenannte bikubische Splines beschrieben ist. Dieses Gleitsicht-Brillenglas dient als Vergleichs-Gleitsicht-Brillenglas für ein erfindungsgemäß ausgebildetes Gleitsicht-Brillenglas, welches nachfolgend aufgrund dessen räumlich variierendem Brechungsindex als GRIN-Gleitsicht-Brillenglas bezeichnet wird.

Die Rückseite des Vergleichs-Gleitsicht-Brillenglases ist eine sphärische Fläche mit Radius 120 mm und der Augendrehpunkt liegt hinter der geometrischen Mitte des Glases mit einem Abstand von 25,5 mm zur Rückfläche. Das Glas hat eine Mittendicke von 2,5 mm und eine prismatische Wirkung 0 in der geometrischen Mitte. Die Rückfläche ist unverkippt, d.h. sowohl Vorderfläche als auch Rückfläche haben in der geometrischen Mitte eine Normale in Richtung der Blickrichtung horizontal geradeaus.

Die eingezeichneten Koordinatenachsen x und y dienen zur Bestimmung von Punkten auf dieser Fläche. Auf der senkrechten Mittelachse des Glases überschreitet die Wirkung die 0,00 Dioptrien in einer Höhe von etwa y = 25 mm, eine Wirkung von 2,25 dpt (Dioptrien) wird etwa bei y = -25 mm erreicht. Auf dieser Länge von 50 mm steigt demnach die Glaswirkung um 2,25 dpt an. Das Gleitsicht-Brillenglas hat demnach für den Brillenträger in vorgesehener Gebrauchsstellung keine sphärische Wirkung (Sphäre = 0) und keine astigmatische Wirkung (Zylinder = 0) im Fernteil und eine Addition von 2,25 dpt. Nach Abschnitt 11.1 der DIN EN ISO 13666:2013-10 ist ein Brillenglas mit sphärischer Wirkung ein Brillenglas, das ein paraxiales, paralleles Lichtbündel in einem einzelnen Brennpunkt vereinigt Nach Abschnitt 12.1 der DIN EN ISO 13666:2013-10 ist ein Brillenglas mit astigmatischer Wirkung ein Brillenglas, das ein paraxiales, paralleles Lichtbündel in zwei getrennten, zueinander senkrecht stehenden Brennlinien vereinigt, und das daher nur in den beiden Hauptschnitten einen Scheitelbrechwert besitzt. Abschnitt 14.2.1 dieser Norm definiert die Addition als Differenz zwischen dem Scheitelbrechwert des Nahteiles und dem Scheitelbrechwert des Fernteiles.

Figur 1b zeigt den mittleren Flächenbrechwert für n=1.600 der objektseitigen Freiformfläche des Vergleichs-Gleitsicht-Brillenglases der Figur 1a. Die Flächenkrümmung nimmt von oben nach unten stetig zu, der mittlere Flächenbrechwert steigt von etwa 5,3 dpt bei y = 15 mm auf etwa 7,0 dpt bei y = -25 mm.

Figur 1c zeigt den Flächenastigmatismus für n=1.600 der objektseitigen Freiformfläche des Vergleichs-Gleitsicht-Brillenglases der Figur 1a.

Die Figuren 2a, 2b und 2c zeigen die Nachbildung des Vergleichs-Gleitsicht-Brillenglases mit Verwendung eines GRIN-Materials. Figur 2a zeigt hierzu die Verteilung der mittleren sphärischen Wirkung. Dem Vergleich der Figur 1a und Figur 2a entnimmt man, dass die Wirkungsverteilung der beiden Gleitsicht-Brillengläser gleich ist. In Figur 2b ist der Verlauf des mittleren Flächenbrechwerts, in Figur 2c der Verlauf des Flächenastigmatismus der Vorderfläche des erfindungsgemäß ausgebildeten GRIN-Gleitsicht-Brillenglases dargestellt. Um einen Vergleich der mittleren Krümmungen mit der Figur 1b und des Flächenastigmatismus mit der Figur 1c zu ermöglichen, wurde bei der Berechnung des mittleren Flächenbrechwertes und des Flächenastigmatismus nicht das GRIN-Material, sondern wie vorher das Material mit der Brechzahl n=1.600 verwendet.

Nach Heinz Diepes, Ralf Blendowske: Optik und Technik der Brille; 2. Auflage, Heidelberg 2005, S. 256 sind der mittlere Flächenbrechwert und der Flächenastigmatismus definiert.

Der Vergleich der Figuren 2b und 2c mit den Figuren 1b und 1c zeigt, dass sich die Gestalt der Freiformfläche deutlich geändert hat: Der mittlere Flächenbrechwert (gerechnet mit n=1.600) nimmt jetzt von oben nach unten ab, d.h., die mittlere Krümmung der Fläche wird von oben nach unten geringer. Der Verlauf des Flächenastigmatismus zeigt keinen typischen Progressionskanal mehr.

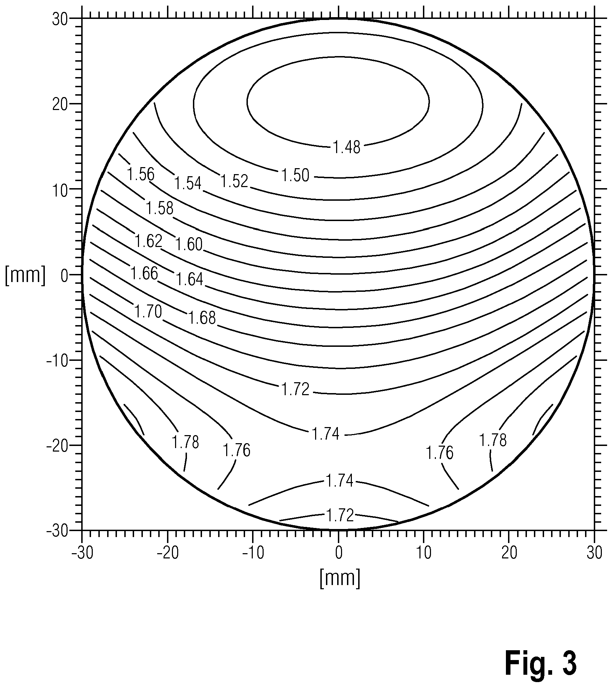

Figur 3 zeigt die Verteilung der Brechzahl über das erfindungsgemäße GRIN-Gleitsicht-Brillenglas. Die Brechzahl steigt hier von oben nach unten von etwa n = 1.48 auf etwa n = 1.75 im unteren Bereich an.

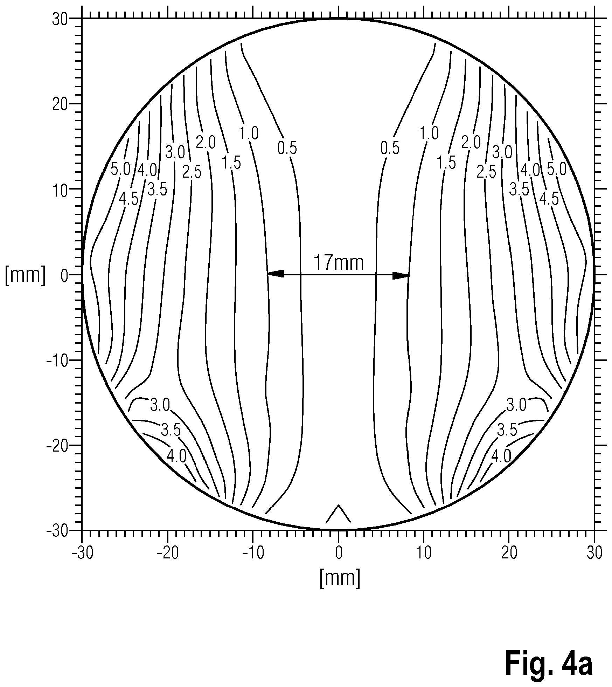

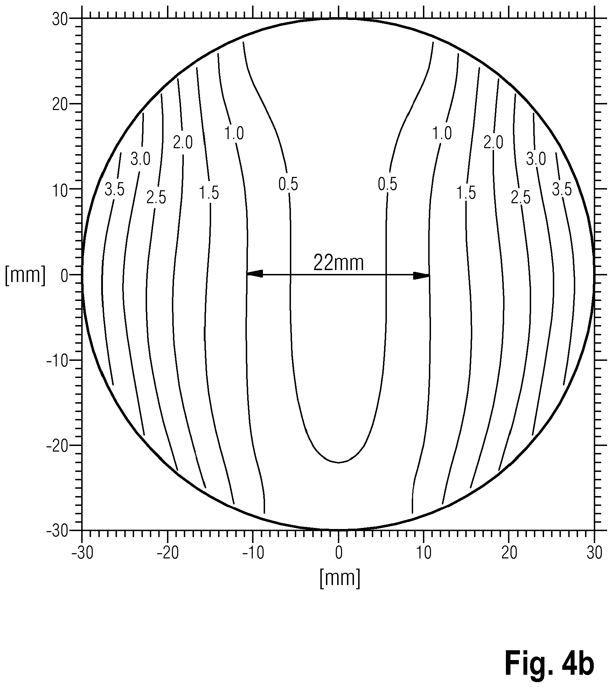

Die Figur 4a und Figur 4b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Standardglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 17 mm auf 22 mm, also um etwa 30 Prozent.

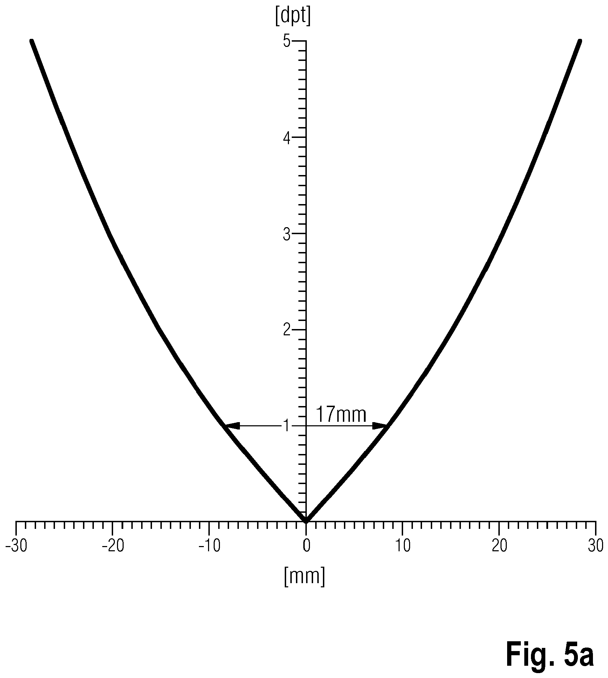

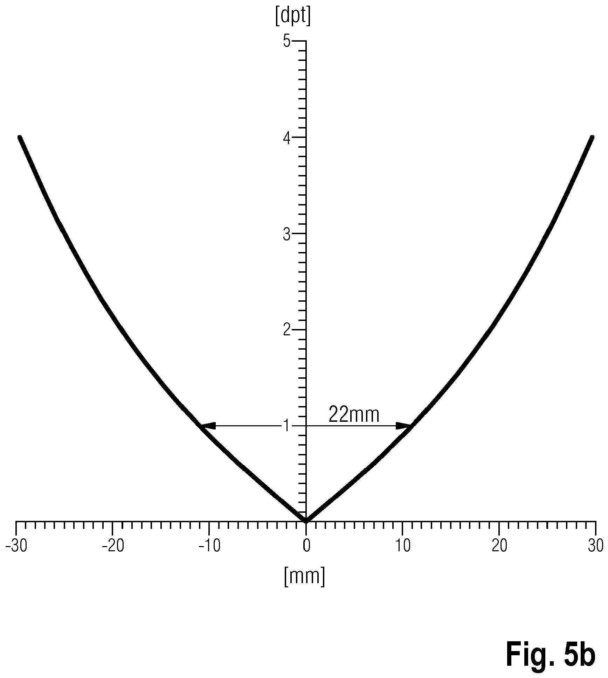

Die Figur 5a und Figur 5b zeigen Querschnitte durch die Restastigmatismusverteilungen aus Figur 4a und Figur 4b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = 0) ist für das GRIN-Glas deutlich geringer, obwohl derselbe

Wirkungsanstieg wie im Standardglas vorhanden ist. Gerade dieser Anstieg wird in der Theorie der Optik der Gleitsichtgläser mit Minkwitz' Aussage erklärt.

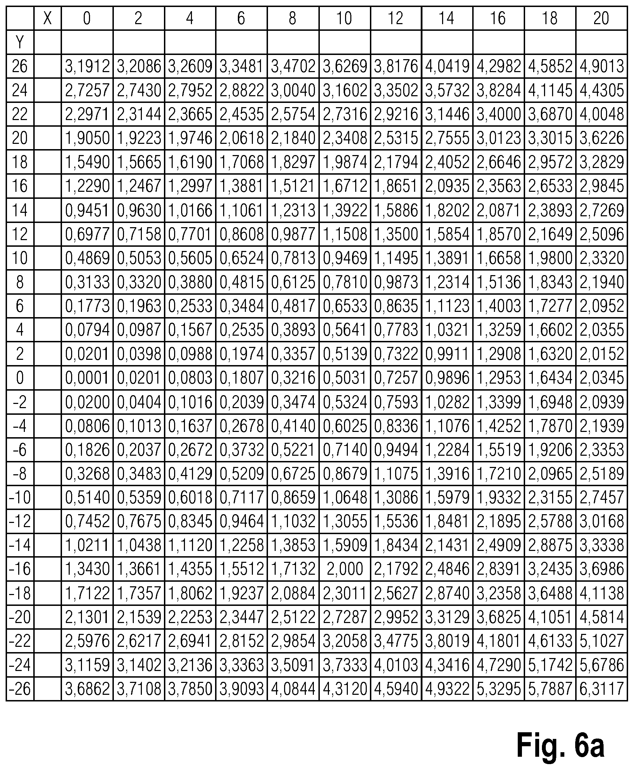

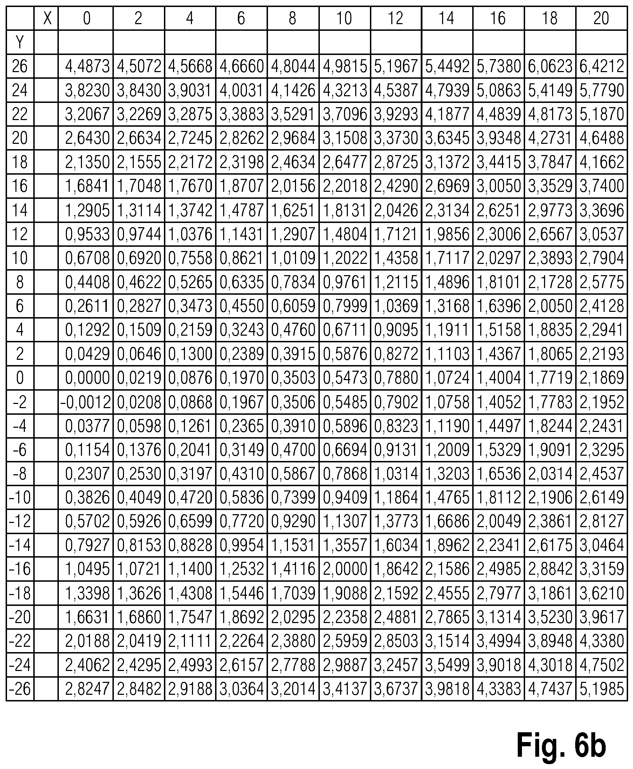

Die Figur 6 vergleicht die Kontur der Vorderfläche des GRIN-Gleitsicht-Brillenglases nach dem ersten Ausführungsbeispiel mit der Kontur der Vorderfläche des Vergleichs-Gleitsicht-Brillenglases mit Hilfe einer Pfeilhöhendarstellung. Die Figur 6b zeigt die Pfeilhöhen der Vorderfläche des erfindungsgemäßen GRIN-Gleitsicht-Brillenglases nach dem ersten Ausführungsbeispiel und im Vergleich dazu zeigt Figur 6a die Pfeilhöhen der Vorderfläche des Vergleichs-Gleitsicht-Brillenglases.

Zweites Ausführungsbeispiel

Alle folgenden Figuren entsprechen thematisch und in der Reihenfolge denjenigen zum ersten Ausführungsbeispiel.

Die Figur 7a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n=1.600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,8 mm zur Rückfläche. Das Vergleichs-Gleitsicht-Brillenglas hat eine Mittendicke von 2.6 mm und 2 mm unterhalb der geom. Mitte eine prismatische Wirkung 1.0 cm/m Basis 270° . Die Rückfläche ist um -8° um die horizontale Achse verkippt.

Die eingezeichneten Koordinatenachsen dienen zur Bestimmung von Punkten auf dieser Fläche. Auf der senkrechten Mittelachse des Vergleichs-Gleitsicht-Brillenglases überschreitet die Wirkung die 0,00 Dioptrie-Linie in einer Höhe von etwa y = 6 mm (d.h. der Brillenträger erhält beim Blick horizontal geradeaus nahezu eine Wirkung von 0 dpt), eine Wirkung von 2,00 Dioptrien wird etwa bei y = -14 mm erreicht. Auf dieser Länge von 20 mm steigt demnach die Glaswirkung um 2,00 dpt an

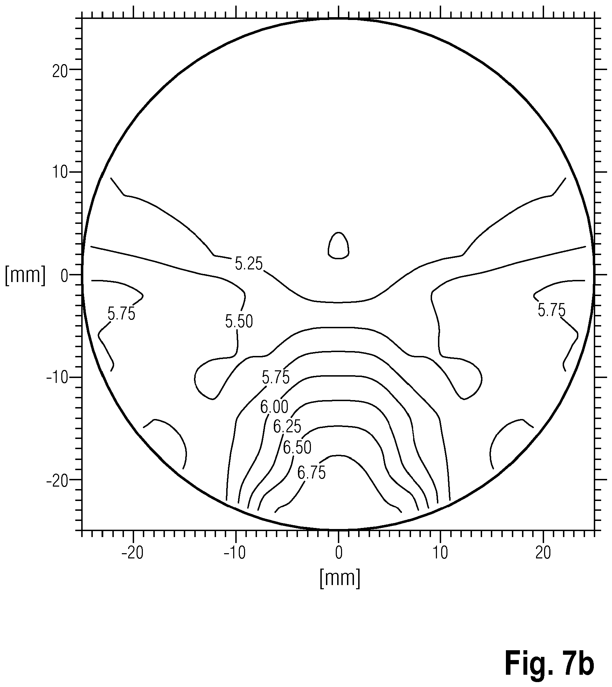

Figur 7b zeigt den mittleren Flächenbrechwert für n=1.600 der objektseitigen Freiformfläche des Vergleichs-Gleitsicht-Brillenglases der Figur 7a. Die Flächenkrümmung nimmt von oben nach unten stetig zu, der mittlere Flächenbrechwert steigt von 5,00 dpt bei y = 2 mm auf 6,75 dpt bei y = -18 mm.

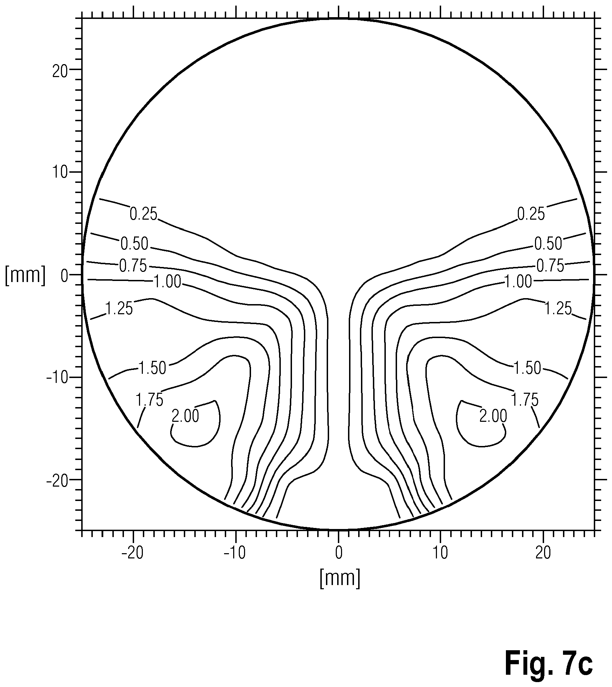

Figur 7c zeigt den Flächenastigmatismus für n=1.600 der objektseitigen Freiformfläche des Vergleichs-Gleitsicht-Brillenglases der Figur 7a.

Die Figuren 8a, 8b und 8c zeigen die Nachbildung des Vergleichs-Gleitsicht-Brillenglases unter Verwendung eines GRIN-Materials (erfindungsgemäßes Gleitsicht-Brillenglas). Figur 8a zeigt hierzu die Verteilung der mittleren sphärischen Wirkung. Dem Vergleich der Figuren 7a und 8a entnimmt man, dass der Wirkungsanstieg entlang der senkrechten Mittellinie der beiden Gläser gleich ist. In Figur 8b ist der Verlauf des mittleren Flächenbrechwerts, in Figur 8c der Verlauf des Flächenastigmatismus der Vorderfläche des erfindungsgemäßen GRIN-Gleitsicht-Brillenglases dargestellt. Um einen Vergleich der mittleren Krümmungen mit der Figur 7b und des Flächenastigmatismus mit der Figur 7c zu ermöglichen, wurde bei der Berechnung nicht das GRIN-Material, sondern wie vorher das Material mit der Brechzahl n=1.600 verwendet.

Der Vergleich der Figuren 8b und 8c mit den Figuren 7b und 7c zeigt, dass sich die Gestalt der Freiformfläche deutlich geändert hat: der mittlere Flächenbrechwert (gerechnet mit n=1.600) nimmt jetzt von der Glasmitte zum Rand hin in ungleichmäßiger Weise ab. Der Verlauf des Flächenastigmatismus zeigt keinen typischen Progressionskanal mehr.

Die Figur 9 zeigt die Verteilung der Brechzahl über das Brillenglas. Die Brechzahl steigt hier von ca. 1.60 von der Mitte des Glases auf etwa n = 1.70 im unteren Bereich an.

Die Figur 10a und die Figur 10b stellen die Auswirkungen des Einsatzes des GRIN-Materials mit seiner speziellen Brechzahlverteilung, sowie des Designs der Freiformfläche für dieses GRIN-Gleitsicht-Brillenglas, auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem Beispiel ergibt sich eine Verbreiterung des Progressionskanals, hier definiert durch die Isoastigmatismuslinie 1 dpt, von 8,5 mm auf 12 mm, also um etwa 41 Prozent.

Die Figur 11a und die Figur 11b zeigen Querschnitte durch die Restastigmatismusverteilungen aus Figur 10a und Figur 10b. Hier wird die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz) besonders deutlich. Der Anstieg des Astigmatismus in der Umgebung der Mitte des Progressionskanals (y = -5 mm) ist für das erfindungsgemäße GRIN-Gleitsicht-Brillenglas deutlich geringer, obwohl derselbe Wirkungsanstieg wie im Vergleichs-Gleitsicht-Brillenglas vorhanden ist. Analog zum ersten Ausführungsbeispiel ergibt sich eine deutliche Abweichung des Astigmatismusgradienten des GRIN- Gleitsicht-Brillenglases von dem von Minkwitz vorhergesagten Verhalten: Der Progressionskanal wird deutlich breiter.

Die Figur 12 vergleicht die Kontur der Vorderfläche des GRIN-Gleitsicht-Brillenglases nach dem zweiten Ausführungsbeispiel mit der Kontur der Vorderfläche des Vergleichs-Gleitsicht-Brillenglases mit Hilfe einer Pfeilhöhendarstellung. Die Figur 12b zeigt die Pfeilhöhen der Vorderfläche des erfindungsgemäßen GRIN-Gleitsicht-Brillenglases nach dem zweiten Ausführungsbeispiel und im Vergleich dazu zeigt Figur 12a die Pfeilhöhen der Vorderfläche des Vergleichs-Gleitsicht-Brillenglases jeweils bzgl. eines um -7.02 um eine horizontale Achse gekippten Koordinatensystems (d.h. die vertikale Y-Achse dieses Systems ist um -7.02° gegenüber der Raumvertikalen verkippt).

Drittes Ausführungsbeispiel

Alle folgenden Figuren entsprechen thematisch und in der Reihenfolge denjenigen zum zweiten Ausführungsbeispiel.

Das dritte Ausführungsbeispiel zeigt zwei Gleitsichtgläser, bei denen die Konvergenzbewegung des Auges beim Blick auf Objekte in den Zwischenentfernungen und in der Nähe, die geradeaus vor dem Auge des Brillenträgers liegen, berücksichtigt werden. Diese Konvergenzbewegung bewirkt, dass die Durchblickpunkte durch die Vorderfläche des Brillenglases beim Blick auf diese Punkte nicht auf einem exakt senkrechten Geradenstück, sondern auf einer zur Nase hin verschwenkten vertikalen Linie liegen, die als Hauptblicklinie bezeichnet wird.

Daher ist in diesen Beispielen auch die Mitte des Nahbereichs horizontal nasaler Richtung verschoben. Die Beispiele sind so gerechnet, dass diese Hauptblicklinie im Progressionsbereich mittig zwischen den Linien auf der Vorderfläche liegen, für die der astigmatische Restfehler 0,5 dpt beträgt (siehe dazu die Figuren 16a und 16b).

Die Figur 13a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n = 1.600) mit einer objektseitigen Freiformfläche. Die Rückseite ist wieder eine sphärische Fläche mit Radius 120 mm und der Augendrehpunkt liegt 4 mm über der geometrischen Mitte des Vergleichs-Gleitsicht-Brillenglases mit einem horizontalen Abstand von 25,5 mm zur Rückfläche. Das Vergleichs-Gleitsicht-Brillenglas hat eine Mittendicke von 2,5 mm und 2 mm unterhalb der geom. Mitte eine prismatische Wirkung 1,0 cm/m Basis 270°. Die Rückfläche ist so verkippt, dass beim Blick horizontal geradeaus der augenseitige Strahl senkrecht zur Rückfläche steht.

Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 13 mm unterhalb der geometrischen Mitte und -2,5 mm horizontal in nasaler Richtung eine mittlere Wirkung von 2,00 dpt. D.h. auf einer Länge von 17 mm steigt demnach die Glaswirkung um ca. 2,00 dpt an.

Figur 13b zeigt die Verteilung des mittleren Flächenbrechwertes für eine Brechzahl n=1.600 der objektseitigen Freiformfläche des Vergleichs-Gleitsicht-Brillenglases des dritten Ausführungsbeispiels, das eine Verteilung der mittleren Wirkung bewirkt, wie sie in Figur 13a dargestellt wird. Die Flächenkrümmung nimmt von oben nach unten stetig zu, der mittlere Flächenbrechwert steigt von 5,00 dpt bei y = ca. 2 mm auf 6,50 dpt bei y = -12 mm.

Figur 13c zeigt den Flächenastigmatismus für n=1.600 der objektseitigen Freiformfläche des Vergleichs-Gleitsicht-Brillenglases der Figur 13a.

Die Figuren 14a, 14b und 14c zeigen die Nachbildung des Vergleichs-Gleitsicht-Brillenglases unter Verwendung eines GRIN-Materials (erfindungsgemäßes Gleitsicht-Brillenglas). Figur 14a zeigt hierzu die Verteilung der mittleren sphärischen Wirkung. Dem Vergleich der Figuren 13a und 14a entnimmt man, dass der Wirkungsanstieg entlang der Hauptblicklinie im Progressionsbereich gleich ist. In Figur 14b ist der Verlauf des mittleren Flächenbrechwerts, in Figur 14c der Verlauf des Flächenastigmatismus der Vorderfläche des erfindungsgemäßen GRIN-Gleitsicht-Brillenglases dargestellt. Um einen Vergleich der mittleren Krümmungen mit der Figur 13b und des Flächenastigmatismus mit der Figur 13c zu ermöglichen, wurde bei der Berechnung nicht das GRIN-Material, sondern wie vorher das Material mit der Brechzahl n = 1.600 verwendet.

Der Vergleich der Figuren 13b und 13c mit den Figuren 14b und 14c zeigt, dass sich die Gestalt der Freiformfläche deutlich geändert hat: der mittlere Flächenbrechwert (gerechnet mit n = 1.600) nimmt jetzt von der Glasmitte zum Rand hin in ungleichmäßiger Weise ab, um in der Peripherie hin wieder anzusteigen. Der Verlauf des Flächenastigmatismus zeigt keinen typischen Progressionskanal mehr.

Die Figur 15 zeigt die Verteilung der Brechzahl über das Brillenglas. Die Brechzahl steigt hier von ca. 1,48 im oberen Bereich des Glases auf etwa 1,70 in Höhe y = -13 im unteren Bereich an.

Die Figuren 16a und 16b stellen die Auswirkungen des Einsatzes des GRIN-Materials mit seiner speziellen Brechzahlverteilung sowie des Designs der Freiformfläche für dieses GRIN-Gleitsicht-Brillenglas auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung.

In diesem dritten Beispiel ergibt sich eine Verbreiterung des Progressionskanals, hier definiert durch die Isoastigmatismuslinie 1 dpt, von 6 mm auf 9 mm, also etwa um 50 Prozent.

Die Figur 17a und die Figur 17b zeigen Querschnitte durch die Restastigmatismusverteilungen aus Figur 16a und Figur 16b. Diese Figuren verdeutlichen wieder die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz). Der Anstieg des astigmatischen Restfehlers in der Umgebung der Mitte des Progressionskanals (y = -5 mm) ist für das erfindungsgemäße GRIN-Gleitsicht-Brillenglas wieder deutlich geringer, obwohl derselbe Wirkungsanstieg wie im Vergleichs-Gleitsicht-Brillenglas vorhanden ist.

Die Figur 18 vergleicht die Kontur der Vorderfläche des GRIN-Gleitsicht-Brillenglases nach dem dritten Ausführungsbeispiel mit der Kontur der Vorderfläche des Vergleichs-Gleitsicht-Brillenglases mit Hilfe einer Pfeilhöhendarstellung. Die Figur 18b zeigt die Pfeilhöhen der Vorderfläche des erfindungsgemäßen GRIN-Gleitsicht-Brillenglases nach dem dritten Ausführungsbeispiel und im Vergleich dazu zeigt Figur 18a die Pfeilhöhen der Vorderfläche des Vergleichs-Gleitsicht-Brillenglases jeweils bzgl. einer Ebene, die senkrecht auf der Blickrichtung horizontal geradeaus steht.

Viertes Ausführungsbeispiel

Alle folgenden Figuren entsprechen thematisch und in der Reihenfolge denjenigen zum dritten Ausführungsbeispiel.

Das vierte Ausführungsbeispiel zeigt zwei Gleitsichtgläser, bei denen die Konvergenzbewegung des Auges beim Blick auf Objekte in den Zwischenentfernungen und in der Nähe, die geradeaus vor dem Auge des Brillenträgers liegen, berücksichtigt werden. Diese Konvergenzbewegung bewirkt, dass die Durchblickpunkte durch die Vorderfläche des Brillenglases beim Blick auf diese Punkte nicht auf einem exakt senkrechten Geradenstück, sondern auf einer zur Nase hin verschwenkten vertikalen Linie liegen, die als Hauptblicklinie bezeichnet wird.

Daher ist in diesen Beispielen auch die Mitte des Nahbereichs horizontal nasaler Richtung verschoben. Die Beispiele sind so gerechnet, dass diese Hauptblicklinie im Progressionsbereich mittig zwischen den Linien auf der Vorderfläche liegen, für die der astigmatische Restfehler 0,5 dpt beträgt (siehe dazu die Figuren 22a und 22b).

Die Figur 19a zeigt die Verteilung der mittleren sphärischen Wirkung im Strahlengang für den Gleitsicht-Brillenträger für ein Vergleichs-Gleitsicht-Brillenglas aus einem Standardmaterial (Brechzahl n = 1.600) mit einer augenseitigen Freiformfläche. Die Vorderseite ist eine sphärische Fläche mit Radius 109.49 mm und der Augendrehpunkt liegt 4 mm über der geometrischen Mitte des Vergleichs-Gleitsicht-Brillenglases mit einem horizontalen Abstand von 25,1 mm zur Rückfläche. Das Vergleichs-Gleitsicht-Brillenglas hat eine Mittendicke von 2,55 mm und 2 mm unterhalb der geom. Mitte eine prismatische Wirkung 1,5 cm/m Basis 270°. Die Vorneigung beträgt 9° und der Fassungsscheibenwinkel 5°.

Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 11 mm unterhalb der geometrischen Mitte und -2,5 mm horizontal in nasaler Richtung eine mittlere Wirkung von 2,50 dpt. D.h. auf einer Länge von 15 mm steigt demnach die Glaswirkung um ca. 2,50 dpt an.

Figur 19b zeigt die Verteilung des mittleren Flächenbrechwertes für eine Brechzahl n=1.600 der augenseitigen Freiformfläche des Vergleichs-Gleitsicht-Brillenglases des vierten

Ausführungsbeispiels, das eine Verteilung der mittleren Wirkung bewirkt, wie sie in Figur 19a dargestellt wird. Die Flächenkrümmung nimmt von oben nach unten stetig ab, der mittlere Flächenbrechwert steigt von -5,50 dpt bei y = ca. 2 mm auf -3,50 dpt bei y = -15 mm.

Figur 19c zeigt den Flächenastigmatismus für n=1.600 der augenseitigen Freiformfläche des Vergleichs-Gleitsicht-Brillenglases der Figur 19a.

Die Figuren 20a, 20b und 20c zeigen die Nachbildung des Vergleichs-Gleitsicht-Brillenglases unter Verwendung eines GRIN-Materials (erfindungsgemäßes Gleitsicht-Brillenglas). Figur 20a zeigt hierzu die Verteilung der mittleren sphärischen Wirkung. Dem Vergleich der Figuren 19a und 20a entnimmt man, dass der Wirkungsanstieg entlang der Hauptblicklinie im Progressionsbereich gleich ist. In Figur 20b ist der Verlauf des mittleren Flächenbrechwerts, in Figur 20c der Verlauf des Flächenastigmatismus der Rückfläche des erfindungsgemäßen GRIN-Gleitsicht-Brillenglases dargestellt. Um einen Vergleich der mittleren Krümmungen mit der Figur 19b und des Flächenastigmatismus mit der Figur 19c zu ermöglichen, wurde bei der Berechnung nicht das GRIN-Material, sondern wie vorher das Material mit der Brechzahl n = 1.600 verwendet.

Der Vergleich der Figuren 19b und 19c mit den Figuren 20b und 20c zeigt, dass sich die Gestalt der Freiformfläche deutlich geändert hat: sowohl die Verteilung des mittleren Flächenbrechwerts als auch die Verteilung des Flächenastigmatismus (gerechnet mit n = 1.600) lassen keinen typischen Progressionskanal mehr erkennen.

Die Figur 21 zeigt die Verteilung der Brechzahl über das Brillenglas. Die Brechzahl steigt hier von ca. 1,55 im oberen seitlichen Bereich des Glases auf etwa 1,64 im unteren Bereich an.

Die Figuren 22a und 22b stellen die Auswirkungen des Einsatzes des GRIN-Materials mit seiner speziellen Brechzahlverteilung sowie des Designs der Freiformfläche für dieses GRIN-Gleitsicht-Brillenglas auf die Breite des Progressionskanals im Vergleich zum Vergleichs-Gleitsicht-Brillenglas dar. Die Figuren zeigen die Verteilung der astigmatischen Restfehler im Strahlengang für den Brillenträger für einen Brillenträger mit rein sphärischer Verordnung. Die Hauptblicklinie ist in beiden Figuren eingezeichnet.

Die Figur 23a und die Figur 23b zeigen Querschnitte durch die Restastigmatismusverteilungen aus Figur 22a und Figur 22b. Diese Figuren verdeutlichen wieder die herkömmliche Beziehung zwischen Wirkungsanstieg und dem dadurch induzierten seitlichen Anstieg des astigmatischen Fehlers (ähnlich der Beziehung des mittleren Flächenbrechwertes zum Flächenastigmatismus nach dem Satz von Minkwitz). Der Anstieg des astigmatischen Restfehlers in der Umgebung der Mitte des Progressionskanals (y = -4 mm) ist für das erfindungsgemäße GRIN-Gleitsicht-Brillenglas wieder deutlich geringer, obwohl derselbe Wirkungsanstieg wie im Vergleichs-Gleitsicht-Brillenglas vorhanden ist. In diesem vierten Beispiel ergibt sich eine Verbreiterung des Progressionskanals, hier definiert durch die Isoastigmatismuslinie 1 dpt, von 4.5 mm auf 6 mm, also um etwa 33 Prozent.

Die Figur 24 vergleicht die Kontur der Rückfläche des GRIN-Gleitsicht-Brillenglases nach dem vierten Ausführungsbeispiel mit der Kontur der Rückfläche des Vergleichs-Gleitsicht-Brillenglases mit Hilfe einer Pfeilhöhendarstellung. Die Figur 24b zeigt die Pfeilhöhen der Rückfläche des erfindungsgemäßen GRIN-Gleitsicht-Brillenglases nach dem vierten Ausführungsbeispiel und im Vergleich dazu zeigt Figur 24a die Pfeilhöhen der Rückfläche des Vergleichs-Gleitsicht-Brillenglases jeweils bzgl. einer Ebene, die senkrecht auf der Blickrichtung horizontal geradeaus steht.

Fünftes Ausführungsbeispiel

Die folgenden Figuren entsprechen thematisch denjenigen zum vierten Ausführungsbeispiel. Das fünfte Ausführungsbeispiel zeigt ein Glas, das für die Rezeptwerte Sphäre -4 dpt, Zylinder 2 dpt, Achslage 90 Grad ausgelegt ist. Die in der Verordnung vorgegebenen Rezeptwerte dienen der Korrektur der Sehfehler des Brillenträgers.

Wie beim vierten Ausführungsbeispiel wird auch beim fünften Ausführungsbeispiel die Konvergenzbewegung des Auges beim Blick auf Objekte in den Zwischenentfernungen und in der Nähe, die geradeaus vor dem Auge des Brillenträgers liegen, berücksichtigt. Diese Konvergenzbewegung bewirkt, dass die Durchblickpunkte durch die Vorderfläche des Brillenglases beim Blick auf diese Punkte nicht auf einem exakt senkrechten Geradenstück, sondern auf einer zur Nase hin verschwenkten vertikalen Linie liegen, die als Hauptblicklinie bezeichnet wird.

Daher ist in diesen Beispielen auch die Mitte des Nahbereichs horizontal nasaler Richtung verschoben. Die Beispiele sind so gerechnet, dass diese Hauptblicklinie im Progressionsbereich mittig zwischen den Linien auf der Vorderfläche liegen, für die der astigmatische Restfehler 0,5 dpt beträgt (siehe dazu die Figur 27a).

Die Figur 25a zeigt die Verteilung der mittleren sphärischen Wirkung im Strahlengang für den Gleitsicht-Brillenträger für ein erfindungsgemäßes Gleitsicht-Brillenglas unter Verwendung eines GRIN-Materials mit einer augenseitigen Freiformfläche. Bei der Auslegung sind die Rezeptwerte Sphäre -4 dpt, Zylinder 2 dpt, Achslage 90 Grad berücksichtigt. Die Vorderseite ist eine sphärische Fläche mit Radius 109.49 mm und der Augendrehpunkt liegt 4 mm über der geometrischen Mitte des Gleitsicht-Brillenglases mit einem horizontalen Abstand von 25,5 mm zur Rückfläche. Das erfindungsgemäße Gleitsicht-Brillenglas hat eine Mittendicke von 2,00 mm und 2 mm unterhalb der geom. Mitte eine prismatische Wirkung 1,5 cm/m Basis 270°. Die Vorneigung beträgt 9° und der Fassungsscheibenwinkel 5°.

Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 11 mm unterhalb der geometrischen Mitte und -2,5 mm horizontal in nasaler Richtung eine mittlere Wirkung von 2,50 dpt. D.h. auf einer Länge von 15 mm steigt demnach die Glaswirkung um ca. 2,50 dpt an.

In Figur 25b ist der Verlauf des mittleren Flächenbrechwerts, in Figur 25c der Verlauf des Flächenastigmatismus der Rückfläche des erfindungsgemäßen GRIN-Gleitsicht-Brillenglases des fünften Ausführungsbeispiels dargestellt. Bei der Berechnung wurde nicht das GRIN-Material, sondern wie vorher das Material mit der Brechzahl n = 1.600 verwendet.

Die Figur 26 zeigt die Verteilung der Brechzahl über das Brillenglas. Die Brechzahl steigt hier von ca. 1,55 im oberen seitlichen Bereich des Glases auf etwa 1,64 im unteren Bereich an.

Die Figuren 27a und 27b zeigen die Verteilung der astigmatischen Restfehler im Strahlengang für den Brillenträger für einen Brillenträger mit der Verordnung Sphäre -4 dpt, Zylinder 2dpt, Achslage 90 Grad. Die Hauptblicklinie ist in Figur 27a eingezeichnet. Aus den Figuren lässt sich entnehmen, dass durch den Einsatz des GRIN-Materials mit seiner speziellen Brechzahlverteilung sowie des Designs der Freiformfläche für dieses GRIN-Gleitsicht-Brillenglas auch für eine astigmatische Verordnung die Breite des Progressionskanals im Vergleich zum Vergleichs-Gleitsicht-Brillenglas vergrößert werden kann.

Die Figur 27b zeigt den Querschnitt in der Mitte des Progressionskanals (y = -4 mm) durch die Restastigmatismusverteilung aus Figur 27a. Bei gleichem Wirkungsanstieg ergibt sich für das erfindungsgemäße GRIN-Gleitsicht-Brillenglas mit astigmatischer Verordnung eine Verbreiterung des Progressionskanals, hier definiert durch die Isoastigmatismuslinie 1 dpt, von 4.5 mm auf 6 mm, also um etwa 33 Prozent, gegenüber dem Vergleichs-Gleitsicht-Brillenglas mit rein sphärischer Verordnung.

Die Figur 28 zeigt die Pfeilhöhen der Rückfläche des erfindungsgemäßen GRIN-Gleitsicht-Brillenglases nach dem fünften Ausführungsbeispiel bzgl. einer Ebene, die senkrecht auf der Blickrichtung horizontal geradeaus steht.

Sechstes Ausführungsbeispiel

Nachfolgend werden die wesentlichen Schritte eines erfindungsgemäßen Verfahrens zum Entwerfen eines GRIN-Gleitsicht-Brillenglases skizziert:
In einem ersten Schritt werden individuelle Benutzerdaten bzw. Anwendungsdaten des Brillenträgers erfasst. Hierzu gehören die Erfassung von dem Brillenträger zuordenbaren (physiologischen) Daten und die Erfassung von Gebrauchsbedingungen, unter denen der Brillenträger die zu entwerfende Gleitsicht-Brille tragen wird.

Zu den physiologischen Daten des Brillenträgers gehören z.B. die Fehlsichtigkeit und die Akkommodationsfähigkeit, die mittels einer Refraktionsmessung festgestellt wird und regelmäßig in Form der Rezeptwerte für Sphäre, Zylinder, Achslage, Prisma und Basis sowie Addition in die Verordnung eingehen. Weiterhin werden z.B. die Pupillendistanz und die Pupillengröße bei unterschiedlichen Lichtverhältnissen festgestellt. Das Alter des Brillenträgers wird z.B. berücksichtigt, welches Einfluss auf die zu erwartende Akkommodationsfähigkeit und Pupillengröße hat. Das Konvergenzverhalten der Augen ergibt sich aus der Pupillendistanz für unterschiedliche Blickrichtungen und Objektentfernungen.

Zu den Gebrauchsbedingungen gehören der Sitz der Brillengläser vor dem Auge (üblicherweise in Bezug zum Augendrehpunkt) und die Objektabstände für unterschiedliche Blickrichtungen, unter denen der Brillenträger scharf sehen soll. Der Sitz der Brillenträger vor dem Auge kann z.B. über die Erfassung von Hornhautscheitelabstand, Vor- und Seitenneigung bestimmt werden. Diese Daten gehen in ein Objektabstandsmodell ein, für welches ein Strahldurchrechnungsverfahren durchgeführt werden kann.

In einem nachfolgenden Schritt wird auf Basis dieser erfassten Daten ein Designentwurf für das Brillenglas mit einer Vielzahl von Bewertungsstellen festgelegt. Der Designentwurf umfasst optische Soll-Eigenschaften für das Gleitsicht-Brillenglas an der jeweiligen Bewertungsstelle. Zu den Soll-Eigenschaften gehören z.B. die zulässige Abweichung von der verordneten sphärischen und astigmatischen Wirkung unter Berücksichtigung der Addition und zwar verteilt über das gesamte Gleitsicht-Brillenglas, wie dies durch die Anordnung des Brillenglases vor dem Auge und das zugrunde gelegte Abstandsmodell vorgegeben ist.

Weiterhin werden ein Entwurf von Flächengeometrien für die Vorder- und Rückfläche sowie ein Entwurf für eine Brechungsindexverteilung über das gesamte Brillenglas festgelegt. So kann z.B. die Vorderfläche als sphärische Fläche gewählt werden und die Rückfläche als Gleitsichtfläche. Es könnten auch beide Flächen zunächst als sphärische Flächen gewählt werden. Die Wahl der Flächengeometrie für den ersten Entwurf bestimmt nachfolgend im Allgemeinen lediglich die Konvergenz (Geschwindigkeit und Erfolg) des angewandten Optimierverfahrens. Es soll beispielsweise davon ausgegangen werden, dass die Vorderfläche die sphärische Gestalt beibehalten soll und die Rückfläche die Form einer Gleitsichtfläche erhält.

In einem weiteren Schritt wird der Verlauf von Hauptstrahlen durch die Vielzahl von Bewertungsstellen gemäß dem Brillenträgerstrahlengang bestimmt. Ggf. kann eine lokale Wellenfront zu jedem der Hauptstrahlen in einer Umgebung des jeweiligen Hauptstrahls festgelegt werden.

In einem nachfolgenden Schritt werden die o.a. optischen Eigenschaften des Brillenglases an den Bewertungsstellen durch Bestimmen eines Einflusses des Brillenglases auf den Strahlengang der Hauptstrahlen und die lokalen Wellenfronten in einer Umgebung des Hauptstrahls durch die jeweilige Bewertungsstelle ermittelt.

In einem weiteren Schritt wird der Entwurf des Brillenglases in Abhängigkeit von den ermittelten optischen Eigenschaften und den individuellen Benutzerdaten bewertet. Die Rückfläche und die Brechungsindexverteilung des Entwurfs des Brillenglases werden dann im Hinblick auf eine Minimierung einer Zielfunktion

$$F = \sum_m \sum_n W_n^m \left(T_n^m - A_n^m\right)^2$$

modifiziert, wobei $W_n^m$ die Gewichtung der optischen Eigenschaft n an der Bewertungsstelle m, $T_n^m$ den Soll-Wert der optischen Eigenschaft n an der Bewertungsstelle m und $A_n^m$ den Ist-Wert der optischen Eigenschaft n an der Bewertungsstelle m darstellt.

Anders ausgedrückt wird die lokale Flächengeometrie der Rückfläche und der lokale Brechungsindex des Gleitsicht-Brillenglases im jeweiligen Sehstrahlengang durch die Bewertungsstellen so lange modifiziert, bis ein Abbruchkriterium erfüllt ist.

Das auf diese in erfindungsgemäßer Weise entworfene GRIN-Gleitsichtbrillenglas kann dann nach diesem Entwurf gefertigt werden.

**Patentansprüche**

1. Computerimplementiertes Verfahren zum Entwerfen eines Gleitsicht-Brillenglases zum Zweck der Verwendung des Entwurfs für die Herstellung eines Gleitsicht-Brillenglases mit einer Vorderfläche und einer Rückfläche, einem räumlich variierenden Brechungsindex, wobei die Vorderfläche als Gleitsichtfläche ausgebildet ist und/oder die Rückfläche als Gleitsichtfläche ausgebildet ist, wobei

- mittels eines Strahldurchrechnungsverfahrens optische Eigenschaften des Gleitsicht-Brillenglases an einer Vielzahl von Bewertungsstellen, durch die Sehstrahlen das Gleitsicht-Brillenglas durchsetzen, berechnet werden, wobei
- wenigstens eine optische Soll-Eigenschaft für das Gleitsicht-Brillenglas an der jeweiligen Bewertungsstelle festgelegt wird,

**dadurch gekennzeichnet, dass**

- ein Entwurf für das Gleitsicht-Brillenglas festgelegt wird, wobei der Entwurf eine Repräsentation einer lokalen Flächengeometrie der Gleitsichtfläche und einen lokalen Brechungsindex des Gleitsicht-Brillenglases im jeweiligen Sehstrahlengang durch die Bewertungsstellen umfasst, wobei
- der Entwurf des Gleitsicht-Brillenglases im Hinblick auf eine Approximierung der wenigstens einen optischen Soll-Eigenschaft des Gleitsicht-Brillenglases modifiziert wird, wobei das Modifizieren ein Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen umfasst, wobei die wenigstens eine optische Soll-Eigenschaft einen Soll-Restastigmatismus des Gleitsicht-Brillenglases umfasst, wobei das Modifizieren der Gleitsichtfläche frei in einer oder in zwei Raumdimensionen erfolgt und das Modifizieren des lokalen Brechungsindex frei in wenigstens zwei Raumdimensionen erfolgt.

2. Verfahren nach Anspruch 1, **dadurch gekennzeichnet, dass**

- das Modifizieren der Gleitsichtfläche derart erfolgt, dass eine Freiformfläche entsteht, die weder eine Punkt- noch eine Achsensymmetrie aufweist und dass
- das Modifizieren des lokalen Brechungsindex derart erfolgt, dass

(a) sich der Brechungsindex nur in einer ersten Raumdimension und in einer zweiten Raumdimension verändert und in einer dritten Raumdimension konstant bleibt, so dass eine Verteilung des Brechungsindex in der ersten Raumdimension und der zweiten Raumdimension weder eine Punkt- noch eine Achsensymmetrie aufweist oder
(b) sich der Brechungsindex in einer ersten Raumdimension und in einer zweiten Raumdimension und in einer dritten Raumdimension verändert, so dass eine Verteilung des Brechungsindex in der ersten Raumdimension und der zweiten Raumdimension in allen Ebenen senkrecht zu der dritten Raumdimension weder eine Punkt- noch eine Achsensymmetrie aufweist oder
(c) sich der Brechungsindex in einer ersten Raumdimension und in einer zweiten Raumdimension und in einer dritten Raumdimension verändert, so dass eine Verteilung des Brechungsindex im Gleitsicht-Brillenglas überhaupt keine Punkt- und keine Achsensymmetrie aufweist.

3. Verfahren nach Anspruch 1 oder 2, **dadurch gekennzeichnet, dass** die wenigstens eine optische Soll-Eigenschaft des Gleitsicht-Brillenglases

(i) aus einer entsprechenden optischen Soll-Eigenschaft für ein Gleitsicht-Brillenglas mit räumlich nicht variierendem Brechungsindex und/oder
(ii) aus einer entsprechenden optischen Eigenschaft eines Gleitsicht-Brillenglases mit räumlich nicht variierendem Brechungsindex

abgeleitet wird oder dass
der Soll-Restastigmatismus des Gleitsicht-Brillenglases

(i) aus einem Soll-Restastigmatismus für ein Gleitsicht-Brillenglas mit räumlich nicht variierendem Brechungsindex und/oder
(ii) aus einem Restastigmatismus eines Gleitsicht-Brillenglases mit räumlich nicht variierendem Brechungsindex

abgeleitet wird.

4. Verfahren nach Anspruch 3, **dadurch gekennzeichnet, dass** die wenigstens eine optische Soll-Eigenschaft des Gleitsicht-Brillenglases in einem zentralen Zwischenteil zwischen Fernteil und Nahteil gegenüber

(i) der entsprechenden optischen Soll-Eigenschaft für das Gleitsicht-Brillenglas mit räumlich nicht variierendem Brechungsindex oder

(ii) der entsprechenden optischen Eigenschaft des Gleitsicht-Brillenglases mit räumlich nicht variierendem Brechungsindex

reduziert ist oder dass der Soll-Restastigmatismus des Gleitsicht-Brillenglases in einem zentralen Zwischenteil zwischen Fernteil und Nahteil gegenüber

( i) dem Soll-Restastigmatismus für das Gleitsicht-Brillenglas mit räumlich nicht variierendem Brechungsindex oder

( ii) dem Restastigmatismus des Gleitsicht-Brillenglases mit räumlich nicht variierendem Brechungsindex

reduziert ist.

5. Verfahren nach Anspruch 4, **dadurch gekennzeichnet, dass** der Soll-Restastigmatismus des Gleitsicht-Brillenglases in einem zentralen Zwischenteil zwischen Fernteil und Nahteil in einem Bereich um die Hauptblicklinie reduziert ist, wobei der Bereich einen beidseitigen horizontalen Abstand aus der Gruppe

(a) 5 mm von der Hauptblicklinie
(b) 10 mm von der Hauptblicklinie
(c) 20 mm von der Hauptblicklinie

umfasst.

6. Verfahren nach einem der Ansprüche 1 bis 5, **dadurch gekennzeichnet, dass** die Modifikation des Entwurfs des Gleitsicht-Brillenglases im Hinblick auf eine Minimierung einer Zielfunktion

$$ F = \sum_{m} \sum_{n} W_n^m \left( T_n^m - A_n^m \right)^2 $$

erfolgt, wobei $W_n^m$ die Gewichtung der optischen Eigenschaft n an der Bewertungsstelle m, $T_n^m$ den Soll-Wert der optischen Eigenschaft n an der Bewertungsstelle m und $A_n^m$ den Ist-Wert der optischen Eigenschaft n an der Bewertungsstelle m darstellt.

7. Verfahren nach einem der Ansprüche 1 bis 6, **dadurch gekennzeichnet, dass** für wenigstens eine Bewertungsstelle ein Soll-Restastigmatismus vorgegeben wird, der kleiner ist, als der theoretisch erreichbare Restastigmatismus an der wenigstens einen entsprechenden Bewertungsstelle bei einem Vergleichs-Gleitsicht-Brillenglas mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex und dass das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen erst dann abgebrochen wird, wenn der für das entworfene Gleitsicht-Brillenglas erreichte Restastigmatismus an der wenigstens einen Bewertungsstelle kleiner ist als der theoretisch erreichbare Restastigmatismus an der wenigstens einen entsprechenden Bewertungsstelle bei dem Vergleichs-Gleitsicht-Brillenglas.

8. Verfahren nach einem der Ansprüche 1 bis 7, **dadurch gekennzeichnet, dass** das Modifizieren der Repräsentation der lokalen Flächengeometrie der Gleitsichtfläche und des lokalen Brechungsindex des Gleitsicht-Brillenglases im jeweiligen Sehstrahlengang durch die Bewertungsstellen, mit der Maßgabe erfolgt, dass der Maximalwert des Restastigmatismus des Gleitsicht-Brillenglases kleiner ist, als der Maximalwert des Restastigmatismus eines Vergleichs-Gleitsicht-Brillenglases mit gleicher Verteilung des sphärischen Äquivalents und gleicher Anordnung des Vergleichs-Gleitsicht-Brillenglases vor dem Auge des Gleitsicht-Brillenträgers aber räumlich nicht variierendem Brechungsindex.

9. Computerprogramm mit Programmcode zur Durchführung aller Verfahrensschritte nach einem der Ansprüche 1 bis 8, wenn das Computerprogramm in einem Computer geladen und/oder in einem Computer ausgeführt wird.

**10.** Computerlesbares Medium mit einem Computerprogramm nach Anspruch 9.

**11.** Verfahren zum Herstellen eines unter Verwendung eines Verfahrens nach einem der Ansprüche 1 bis 8 entworfenen Gleitsicht-Brillenglases durch ein additives Verfahren.

**12.** Computer mit einem Prozessor, und mit einem Speicher, auf dem ein Computerprogramm nach Anspruch 9 abgespeichert ist und der eingerichtet ist, ein Verfahren nach einem der Ansprüche 1 bis 8 auszuführen.

**Claims**

**1.** Computer-implemented method for designing a progressive power spectacle lens for the purpose of using the design for the production of a progressive power spectacle lens with a front surface and a back surface, a spatially varying refractive index, wherein the front surface is embodied as a progressive surface and/or the back surface is embodied as a progressive surface, wherein

- optical properties of the progressive power spectacle lens are calculated by means of a ray tracing method at a plurality of evaluation points, at which visual rays pass through the progressive power spectacle lens, wherein
- at least one intended optical property for the progressive power spectacle lens is set at the respective evaluation point,

**characterized in that**

- a design for the progressive power spectacle lens is set, wherein the design comprises a representation of a local surface geometry of the progressive surface and a local refractive index of the progressive power spectacle lens in the respective visual beam path through the evaluation points, wherein
- the design of the progressive power spectacle lens is modified in view of an approximation of the at least one intended optical property of the progressive power spectacle lens, wherein the modifying comprises modifying the representation of the local surface geometry of the progressive surface and the local refractive index of the progressive power spectacle lens in the respective visual beam path through the evaluation points, wherein the at least one intended optical property comprises an intended residual astigmatism of the progressive power spectacle lens, wherein the progressive surface is modified freely in one or in two spatial dimensions and the local refractive index is modified freely in at least two spatial dimensions.

**2.** Method according to Claim 1, **characterized in that**

- the progressive surface is modified in such a way that a freeform surface arises which has neither point symmetry nor axial symmetry, and **in that**
- the local refractive index is modified in such a way that

(a) the refractive index varies only in a first spatial dimension and in a second spatial dimension and is constant in a third spatial dimension, such that a distribution of the refractive index in the first spatial dimension and the second spatial dimension has neither point symmetry nor axial symmetry, or
(b) the refractive index varies in a first spatial dimension and in a second spatial dimension and in a third spatial dimension, such that a distribution of the refractive index in the first spatial dimension and the second spatial dimension in all planes perpendicular to the third spatial dimension has neither point symmetry nor axial symmetry, or
(c) the refractive index varies in a first spatial dimension and in a second spatial dimension and in a third spatial dimension, such that a distribution of the refractive index in the progressive power spectacle lens has no point symmetry and no axial symmetry at all.

**3.** Method according to Claim 1 or 2, **characterized in that** the at least one intended optical property of the progressive power spectacle lens is derived

(i) from a corresponding intended optical property for a progressive power spectacle lens with a spatially non-varying refractive index and/or
(ii) from a corresponding optical property of a progressive power spectacle lens with a spatially non-varying refractive index,

or **in that**
the intended residual astigmatism of the progressive power spectacle lens is derived

(i) from an intended residual astigmatism for a progressive power spectacle lens with a spatially non-varying refractive index and/or
(ii) from a residual astigmatism of a progressive power spectacle lens with a spatially non-varying refractive index.

4. Method according to Claim 3, **characterized in that** the at least one intended optical property of the progressive power spectacle lens in a central intermediate portion between distance portion and near portion is reduced vis-à-vis

(i) the corresponding intended optical property for the progressive power spectacle lens with a spatially non-varying refractive index or
(ii) the corresponding optical property of the progressive power spectacle lens with a spatially non-varying refractive index,

or **in that** the intended residual astigmatism of the progressive power spectacle lens in a central intermediate portion between distance portion and near portion is reduced vis-à-vis

(i) the intended residual astigmatism for the progressive power spectacle lens with a spatially non-varying refractive index or
(ii) the residual astigmatism of the progressive power spectacle lens with a spatially non-varying refractive index.

5. Method according to Claim 4, **characterized in that** the intended residual astigmatism of the progressive power spectacle lens in a central intermediate portion between distance portion and near portion is reduced in a region around the principal line of sight, wherein the region comprises a horizontal distance on both sides from the group

(a) 5 mm from the principal line of sight
(b) 10 mm from the principal line of sight
(c) 20 mm from the principal line of sight.

6. Method according to any one of Claims 1 to 5, **characterized in that** the modification of the design of the progressive power spectacle lens is implemented in view of a minimization of a target function

$$F = \sum_{m} \sum_{n} W_n^m (T_n^m - A_n^m)^2$$

where $W_n^m$ represents the weighting of the optical property n at the evaluation point m, $T_n^m$ represents the intended value of the optical property n at the evaluation point m and $A_n^m$ represents the actual value of the optical property n at the evaluation point m.

7. Method according to any one of Claims 1 to 6, **characterized in that** an intended residual astigmatism is predetermined for at least one evaluation point, said intended residual astigmatism being less than the theoretically achievable residual astigmatism at the at least one corresponding evaluation point on a comparison progressive power spectacle lens with the same distribution of the spherical equivalent and the same arrangement of the comparison progressive power spectacle lens in front of the eye of the progressive power spectacle wearer, but with a spatially non-varying refractive index, and **in that** modifying the representation of the local surface geometry of the progressive surface and of the local refractive index of the progressive power spectacle lens in the respective visual beam path through the evaluation points is only terminated if the residual astigmatism at the at least one evaluation point, achieved for the designed progressive power spectacle lens, is less than the theoretically achievable residual astigmatism at the at least one corresponding evaluation point on the comparison progressive power spectacle lens.

8. Method according to any one of Claims 1 to 7, **characterized in that** modifying the representation of the local surface geometry of the progressive surface and of the local refractive index of the progressive power spectacle lens in the respective visual beam path through the evaluation points is implemented with the stipulation that the maximum value of the residual astigmatism of the progressive power spectacle lens is less than the maximum value of the residual astigmatism of a comparison progressive power spectacle lens with the same distribution of the spherical equivalent and the same arrangement of the comparison progressive power spectacle lens in front of the eye of the progressive power spectacle wearer, but with a spatially non-varying refractive index.

**9.** Computer program having program code for carrying out all method steps according to any of Claims 1 to 8 when the computer program is loaded on a computer and/or executed on a computer.

**10.** Computer-readable medium comprising a computer program according to Claim 9.

**11.** Method for producing, by way of an additive method, a progressive power spectacle lens designed using a method according to any one of Claims 1 to 8.

**12.** Computer comprising a processor and comprising a memory in which a computer program according to Claim 9 is stored, said computer being configured to carry out a method according to any one of Claims 1 to 8.

**Revendications**

**1.** Procédé mis en œuvre par ordinateur permettant d'ébaucher un verre de lunettes progressif dans le but d'utiliser l'ébauche pour la fabrication d'un verre de lunettes progressif pourvu d'une face avant et d'une face arrière et d'un indice de réfraction variant dans l'espace, dans lequel la face avant est réalisée comme une surface progressive et/ou la face arrière est réalisée comme une surface progressive, dans lequel

- un procédé de calcul complet de rayon permet de calculer des propriétés optiques du verre de lunettes progressif en une pluralité de points d'évaluation à travers lesquels des rayons visuels traversent le verre de lunettes progressif, dans lequel
- au moins une propriété optique de consigne est déterminée pour le verre de lunettes progressif au point d'évaluation respectif,

**caractérisé en ce que**

- une ébauche est déterminée pour le verre de lunettes progressif, dans lequel l'ébauche comprend une représentation d'une géométrie de surface locale de la surface progressive et un indice de réfraction local du verre de lunettes progressif sur la trajectoire de rayon visuel respective à travers les points d'évaluation, dans lequel
- l'ébauche du verre de lunettes progressif est modifiée en vue d'une approximation de ladite au moins une propriété optique de consigne du verre de lunettes progressif, dans lequel la modification comprend une modification de la représentation de la géométrie de surface locale de la surface progressive et de l'indice de réfaction local du verre de lunettes progressif sur la trajectoire de rayon visuel respective à travers les points d'évaluation, dans lequel ladite au moins une propriété optique de consigne comprend un astigmatisme résiduel de consigne du verre de lunettes progressif, dans lequel la modification de la surface progressive est effectuée librement dans une ou dans deux dimensions spatiales, et la modification de l'indice de réfraction local est effectuée librement dans au moins deux dimensions spatiales.

**2.** Procédé selon la revendication 1, **caractérisé en ce que**

- la modification de la surface progressive est effectuée de façon à créer une surface de forme libre qui ne présente ni symétrie centrale ni symétrie axiale, et **en ce que**
- la modification de l'indice de réfraction local est effectuée de telle sorte que

(a) l'indice de réfraction ne varie que dans une première dimension spatiale et dans une deuxième dimension spatiale et reste constant dans une troisième dimension spatiale, de sorte qu'une distribution de l'indice de réfraction dans la première dimension spatiale et la deuxième dimension spatiale ne présente ni symétrie centrale ni symétrie axiale, ou

(b) l'indice de réfraction varie dans une première dimension spatiale et dans une deuxième dimension spatiale et dans une troisième dimension spatiale, de sorte qu'une distribution de l'indice de réfraction dans la première dimension spatiale et la deuxième dimension spatiale ne présente ni symétrie centrale ni symétrie axiale dans tous les plans perpendiculaires à la troisième dimension spatiale, ou

(c) l'indice de réfraction varie dans une première dimension spatiale et dans une deuxième dimension spatiale et dans une troisième dimension spatiale, de sorte qu'une distribution de l'indice de réfraction dans le verre de lunettes progressif ne présente aucune symétrie centrale ni symétrie axiale.

3. Procédé selon la revendication 1 ou 2, **caractérisé en ce que** ladite au moins une propriété optique de consigne du verre de lunettes progressif est dérivée

(i) à partir d'une propriété optique de consigne correspondante pour un verre de lunettes progressif ayant un indice de réfraction ne variant pas dans l'espace, et/ou
(ii) à partir d'une propriété optique correspondante d'un verre de lunettes progressif ayant un indice de réfraction ne variant pas dans l'espace,

ou
**en ce que** l'astigmatisme résiduel de consigne du verre de lunettes progressif est dérivé

(i) à partir d'un astigmatisme résiduel de consigne pour un verre de lunettes progressif ayant un indice de réfraction ne variant pas dans l'espace, et/ou
(ii) à partir d'un astigmatisme résiduel d'un verre de lunettes progressif ayant un indice de réfraction ne variant pas dans l'espace.

4. Procédé selon la revendication 3, **caractérisé en ce que** ladite au moins une propriété optique de consigne du verre de lunettes progressif dans une partie intermédiaire centrale entre la partie de vision de loin et la partie de vision de près est réduite par rapport à

(i) la propriété optique de consigne correspondante pour le verre de lunettes progressif ayant un indice de réfraction ne variant pas dans l'espace, ou
(ii) la propriété optique correspondante du verre de lunettes progressif ayant un indice de réfraction ne variant pas dans l'espace,

ou **en ce que** l'astigmatisme résiduel de consigne du verre de lunettes progressif dans une partie intermédiaire centrale entre la partie de vision de loin et de vision de près est réduit par rapport à

(i) l'astigmatisme résiduel de consigne pour le verre de lunettes progressif ayant un indice de réfraction ne variant pas dans l'espace, ou
(ii) l'astigmatisme résiduel du verre de lunettes progressif ayant un indice de réfraction ne variant pas dans l'espace.

5. Procédé selon la revendication 4, **caractérisé en ce que** l'astigmatisme résiduel de consigne du verre de lunettes progressif dans une partie intermédiaire centrale entre la partie de vision de loin et la partie de vision de près est réduit dans une zone autour de la ligne de visée principale, dans lequel la zone comprend une distance horizontale bilatérale issue du groupe comprenant

(a) 5 mm de la ligne de visée principale,
(b) 10 mm de la ligne de visée principale,
(c) 20 mm de la ligne de visée principale.

6. Procédé selon l'une quelconque des revendications 1 à 5, **caractérisé en ce que** la modification de l'ébauche du verre de lunettes progressif est effectuée en vue de minimiser une fonction de performance

$$F = \sum_m \sum_n W_n^m (T_n^m - A_n^m)^2$$

dans lequel $W_n^m$ est la pondération de la propriété optique n au point d'évaluation m, $T_n^m$ est la valeur de consigne de la propriété optique n au point d'évaluation m, et $A_n^m$ est la valeur réelle de la propriété optique n au point d'évaluation m.

7.  Procédé selon l'une quelconque des revendications 1 à 6, **caractérisé en ce que** pour au moins un point d'évaluation, un astigmatisme résiduel de consigne est spécifié qui est inférieur à l'astigmatisme résiduel pouvant être atteint théoriquement audit au moins un point d'évaluation correspondant d'un verre de lunettes progressif de comparaison ayant la même distribution de l'équivalent sphérique et la même disposition du verre de lunettes progressif de comparaison devant l'œil du porteur de lunettes à verres progressifs mais un indice de réfraction ne variant pas dans l'espace, et **en ce que** la modification de la représentation de la géométrie de surface locale de la surface progressive et de l'indice de réfraction local du verre de lunettes progressif sur la trajectoire de rayon visuel respective à travers les points d'évaluation n'est abandonnée que si l'astigmatisme résiduel atteint pour le verre de lunettes progressif ébauché audit au moins un point d'évaluation est inférieur à l'astigmatisme résiduel pouvant être atteint théoriquement audit au moins un point d'évaluation correspondant sur le verre de lunettes progressif de comparaison.

8.  Procédé selon l'une quelconque des revendications 1 à 7, **caractérisé en ce que** la modification de la représentation de la géométrie de surface locale de la surface progressive et de l'indice de réfraction local du verre de lunettes progressif sur la trajectoire de rayon visuel respective à travers les points d'évaluation est effectuée à condition que la valeur maximale de l'astigmatisme résiduel du verre de lunettes progressif soit inférieure à la valeur maximale de l'astigmatisme résiduel d'un verre de lunettes progressif de comparaison ayant la même distribution de l'équivalent sphérique et la même disposition du verre de lunettes progressif de comparaison devant l'œil du porteur de lunettes à verres progressifs mais un indice de réfraction ne variant pas dans l'espace.

9.  Programme informatique, comprenant du code programme pour exécuter toutes les étapes de procédé selon l'une quelconque des revendications 1 à 8 lorsque le programme informatique est chargé sur un ordinateur et/ou est exécuté sur un ordinateur.

10. Support lisible par ordinateur, comprenant un programme informatique selon la revendication 9.

11. Procédé permettant de fabriquer un verre de lunettes progressif par un procédé additif en utilisant un procédé selon l'une quelconque des revendications 1 à 8.

12. Ordinateur, comprenant un processeur, et une mémoire dans laquelle est mémorisé un programme informatique selon la revendication 9, et qui est conçu pour exécuter un procédé selon l'une quelconque des revendications 1 à 8.

**Fig. 1a**

Fig. 1b

Fig. 1c

**Fig. 2a**

**Fig. 2b**

Fig. 2c

Fig. 3

Fig. 4a

Fig. 4b

Fig. 5a

Fig. 5b

| X / Y | 0 | 2 | 4 | 6 | 8 | 10 | 12 | 14 | 16 | 18 | 20 |
|---|---|---|---|---|---|---|---|---|---|---|---|
| 26 | 3,1912 | 3,2086 | 3,2609 | 3,3481 | 3,4702 | 3,6269 | 3,8176 | 4,0419 | 4,2982 | 4,5852 | 4,9013 |
| 24 | 2,7257 | 2,7430 | 2,7952 | 2,8822 | 3,0040 | 3,1602 | 3,3502 | 3,5732 | 3,8284 | 4,1145 | 4,4305 |
| 22 | 2,2971 | 2,3144 | 2,3665 | 2,4535 | 2,5754 | 2,7316 | 2,9216 | 3,1446 | 3,4000 | 3,6870 | 4,0048 |
| 20 | 1,9050 | 1,9223 | 1,9746 | 2,0618 | 2,1840 | 2,3408 | 2,5315 | 2,7555 | 3,0123 | 3,3015 | 3,6226 |
| 18 | 1,5490 | 1,5665 | 1,6190 | 1,7068 | 1,8297 | 1,9874 | 2,1794 | 2,4052 | 2,6646 | 2,9572 | 3,2829 |
| 16 | 1,2290 | 1,2467 | 1,2997 | 1,3881 | 1,5121 | 1,6712 | 1,8651 | 2,0935 | 2,3563 | 2,6533 | 2,9845 |
| 14 | 0,9451 | 0,9630 | 1,0166 | 1,1061 | 1,2313 | 1,3922 | 1,5886 | 1,8202 | 2,0871 | 2,3893 | 2,7269 |
| 12 | 0,6977 | 0,7158 | 0,7701 | 0,8608 | 0,9877 | 1,1508 | 1,3500 | 1,5854 | 1,8570 | 2,1649 | 2,5096 |
| 10 | 0,4869 | 0,5053 | 0,5605 | 0,6524 | 0,7813 | 0,9469 | 1,1495 | 1,3891 | 1,6658 | 1,9800 | 2,3320 |
| 8 | 0,3133 | 0,3320 | 0,3880 | 0,4815 | 0,6125 | 0,7810 | 0,9873 | 1,2314 | 1,5136 | 1,8343 | 2,1940 |
| 6 | 0,1773 | 0,1963 | 0,2533 | 0,3484 | 0,4817 | 0,6533 | 0,8635 | 1,1123 | 1,4003 | 1,7277 | 2,0952 |
| 4 | 0,0794 | 0,0987 | 0,1567 | 0,2535 | 0,3893 | 0,5641 | 0,7783 | 1,0321 | 1,3259 | 1,6602 | 2,0355 |
| 2 | 0,0201 | 0,0398 | 0,0988 | 0,1974 | 0,3357 | 0,5139 | 0,7322 | 0,9911 | 1,2908 | 1,6320 | 2,0152 |
| 0 | 0,0001 | 0,0201 | 0,0803 | 0,1807 | 0,3216 | 0,5031 | 0,7257 | 0,9896 | 1,2953 | 1,6434 | 2,0345 |
| -2 | 0,0200 | 0,0404 | 0,1016 | 0,2039 | 0,3474 | 0,5324 | 0,7593 | 1,0282 | 1,3399 | 1,6948 | 2,0939 |
| -4 | 0,0806 | 0,1013 | 0,1637 | 0,2678 | 0,4140 | 0,6025 | 0,8336 | 1,1076 | 1,4252 | 1,7870 | 2,1939 |
| -6 | 0,1826 | 0,2037 | 0,2672 | 0,3732 | 0,5221 | 0,7140 | 0,9494 | 1,2284 | 1,5519 | 1,9206 | 2,3353 |
| -8 | 0,3268 | 0,3483 | 0,4129 | 0,5209 | 0,6725 | 0,8679 | 1,1075 | 1,3916 | 1,7210 | 2,0965 | 2,5189 |
| -10 | 0,5140 | 0,5359 | 0,6018 | 0,7117 | 0,8659 | 1,0648 | 1,3086 | 1,5979 | 1,9332 | 2,3155 | 2,7457 |
| -12 | 0,7452 | 0,7675 | 0,8345 | 0,9464 | 1,1032 | 1,3055 | 1,5536 | 1,8481 | 2,1895 | 2,5788 | 3,0168 |
| -14 | 1,0211 | 1,0438 | 1,1120 | 1,2258 | 1,3853 | 1,5909 | 1,8434 | 2,1431 | 2,4909 | 2,8875 | 3,3338 |
| -16 | 1,3430 | 1,3661 | 1,4355 | 1,5512 | 1,7132 | 2,000 | 2,1792 | 2,4846 | 2,8391 | 3,2435 | 3,6986 |
| -18 | 1,7122 | 1,7357 | 1,8062 | 1,9237 | 2,0884 | 2,3011 | 2,5627 | 2,8740 | 3,2358 | 3,6488 | 4,1138 |
| -20 | 2,1301 | 2,1539 | 2,2253 | 2,3447 | 2,5122 | 2,7287 | 2,9952 | 3,3129 | 3,6825 | 4,1051 | 4,5814 |
| -22 | 2,5976 | 2,6217 | 2,6941 | 2,8152 | 2,9854 | 3,2058 | 3,4775 | 3,8019 | 4,1801 | 4,6133 | 5,1027 |
| -24 | 3,1159 | 3,1402 | 3,2136 | 3,3363 | 3,5091 | 3,7333 | 4,0103 | 4,3416 | 4,7290 | 5,1742 | 5,6786 |
| -26 | 3,6862 | 3,7108 | 3,7850 | 3,9093 | 4,0844 | 4,3120 | 4,5940 | 4,9322 | 5,3295 | 5,7887 | 6,3117 |

## Fig. 6a

| X | 0 | 2 | 4 | 6 | 8 | 10 | 12 | 14 | 16 | 18 | 20 |
|---|---|---|---|---|---|---|---|---|---|---|---|
| Y | | | | | | | | | | | |
| 26 | 4,4873 | 4,5072 | 4,5668 | 4,6660 | 4,8044 | 4,9815 | 5,1967 | 5,4492 | 5,7380 | 6,0623 | 6,4212 |
| 24 | 3,8230 | 3,8430 | 3,9031 | 4,0031 | 4,1426 | 4,3213 | 4,5387 | 4,7939 | 5,0863 | 5,4149 | 5,7790 |
| 22 | 3,2067 | 3,2269 | 3,2875 | 3,3883 | 3,5291 | 3,7096 | 3,9293 | 4,1877 | 4,4839 | 4,8173 | 5,1870 |
| 20 | 2,6430 | 2,6634 | 2,7245 | 2,8262 | 2,9684 | 3,1508 | 3,3730 | 3,6345 | 3,9348 | 4,2731 | 4,6488 |
| 18 | 2,1350 | 2,1555 | 2,2172 | 2,3198 | 2,4634 | 2,6477 | 2,8725 | 3,1372 | 3,4415 | 3,7847 | 4,1662 |
| 16 | 1,6841 | 1,7048 | 1,7670 | 1,8707 | 2,0156 | 2,2018 | 2,4290 | 2,6969 | 3,0050 | 3,3529 | 3,7400 |
| 14 | 1,2905 | 1,3114 | 1,3742 | 1,4787 | 1,6251 | 1,8131 | 2,0426 | 2,3134 | 2,6251 | 2,9773 | 3,3696 |
| 12 | 0,9533 | 0,9744 | 1,0376 | 1,1431 | 1,2907 | 1,4804 | 1,7121 | 1,9856 | 2,3006 | 2,6567 | 3,0537 |
| 10 | 0,6708 | 0,6920 | 0,7558 | 0,8621 | 1,0109 | 1,2022 | 1,4358 | 1,7117 | 2,0297 | 2,3893 | 2,7904 |
| 8 | 0,4408 | 0,4622 | 0,5265 | 0,6335 | 0,7834 | 0,9761 | 1,2115 | 1,4896 | 1,8101 | 2,1728 | 2,5775 |
| 6 | 0,2611 | 0,2827 | 0,3473 | 0,4550 | 0,6059 | 0,7999 | 1,0369 | 1,3168 | 1,6396 | 2,0050 | 2,4128 |
| 4 | 0,1292 | 0,1509 | 0,2159 | 0,3243 | 0,4760 | 0,6711 | 0,9095 | 1,1911 | 1,5158 | 1,8835 | 2,2941 |
| 2 | 0,0429 | 0,0646 | 0,1300 | 0,2389 | 0,3915 | 0,5876 | 0,8272 | 1,1103 | 1,4367 | 1,8065 | 2,2193 |
| 0 | 0,0000 | 0,0219 | 0,0876 | 0,1970 | 0,3503 | 0,5473 | 0,7880 | 1,0724 | 1,4004 | 1,7719 | 2,1869 |
| -2 | -0,0012 | 0,0208 | 0,0868 | 0,1967 | 0,3506 | 0,5485 | 0,7902 | 1,0758 | 1,4052 | 1,7783 | 2,1952 |
| -4 | 0,0377 | 0,0598 | 0,1261 | 0,2365 | 0,3910 | 0,5896 | 0,8323 | 1,1190 | 1,4497 | 1,8244 | 2,2431 |
| -6 | 0,1154 | 0,1376 | 0,2041 | 0,3149 | 0,4700 | 0,6694 | 0,9131 | 1,2009 | 1,5329 | 1,9091 | 2,3295 |
| -8 | 0,2307 | 0,2530 | 0,3197 | 0,4310 | 0,5867 | 0,7868 | 1,0314 | 1,3203 | 1,6536 | 2,0314 | 2,4537 |
| -10 | 0,3826 | 0,4049 | 0,4720 | 0,5836 | 0,7399 | 0,9409 | 1,1864 | 1,4765 | 1,8112 | 2,1906 | 2,6149 |
| -12 | 0,5702 | 0,5926 | 0,6599 | 0,7720 | 0,9290 | 1,1307 | 1,3773 | 1,6686 | 2,0049 | 2,3861 | 2,8127 |
| -14 | 0,7927 | 0,8153 | 0,8828 | 0,9954 | 1,1531 | 1,3557 | 1,6034 | 1,8962 | 2,2341 | 2,6175 | 3,0464 |
| -16 | 1,0495 | 1,0721 | 1,1400 | 1,2532 | 1,4116 | 2,0000 | 1,8642 | 2,1586 | 2,4985 | 2,8842 | 3,3159 |
| -18 | 1,3398 | 1,3626 | 1,4308 | 1,5446 | 1,7039 | 1,9088 | 2,1592 | 2,4555 | 2,7977 | 3,1861 | 3,6210 |
| -20 | 1,6631 | 1,6860 | 1,7547 | 1,8692 | 2,0295 | 2,2358 | 2,4881 | 2,7865 | 3,1314 | 3,5230 | 3,9617 |
| -22 | 2,0188 | 2,0419 | 2,1111 | 2,2264 | 2,3880 | 2,5959 | 2,8503 | 3,1514 | 3,4994 | 3,8948 | 4,3380 |
| -24 | 2,4062 | 2,4295 | 2,4993 | 2,6157 | 2,7788 | 2,9887 | 3,2457 | 3,5499 | 3,9018 | 4,3018 | 4,7502 |
| -26 | 2,8247 | 2,8482 | 2,9188 | 3,0364 | 3,2014 | 3,4137 | 3,6737 | 3,9818 | 4,3383 | 4,7437 | 5,1985 |

# Fig. 6b

**Fig. 7a**

**Fig. 7b**

Fig. 7c

**Fig. 8a**

Fig. 8b

Fig. 8c

**Fig. 9**

**Fig. 10a**

Fig. 10b

Fig. 11a

**Fig. 11b**

| | X | 0 | 2 | 4 | 6 | 8 | 10 | 12 | 14 | 16 | 18 | 20 |
|---|---|---|---|---|---|---|---|---|---|---|---|---|
| Y | | | | | | | | | | | | |
| 20 | | 1,6118 | 1,6289 | 1,6802 | 1,7658 | 1,8860 | 2,0408 | 2,2305 | 2,4552 | 2,7153 | 3,0110 | 3,3427 |
| 18 | | 1,2747 | 1,2916 | 1,3427 | 1,4280 | 1,5476 | 1,7018 | 1,8907 | 2,1145 | 2,3736 | 2,6683 | 2,9988 |
| 16 | | 0,9732 | 0,9900 | 1,0409 | 1,1258 | 1,2450 | 1,3986 | 1,5868 | 1,8098 | 2,0681 | 2,3618 | 2,6914 |
| 14 | | 0,7068 | 0,7236 | 0,7743 | 0,8590 | 0,9778 | 1,1308 | 1,3184 | 1,5407 | 1,7982 | 2,0911 | 2,4198 |
| 12 | | 0,4753 | 0,4921 | 0,5426 | 0,6270 | 0,7455 | 0,8981 | 1,0852 | 1,3069 | 1,5636 | 1,8557 | 2,1837 |
| 10 | | 0,2783 | 0,2951 | 0,3455 | 0,4297 | 0,5478 | 0,7001 | 0,8867 | 1,1079 | 1,3641 | 1,6556 | 1,9831 |
| 8 | | 0,1155 | 0,1323 | 0,1826 | 0,2666 | 0,3845 | 0,5365 | 0,7228 | 0,9436 | 1,1994 | 1,4908 | 1,8182 |
| 6 | | -0,0132 | 0,0035 | 0,0537 | 0,1375 | 0,2552 | 0,4070 | 0,5931 | 0,8139 | 1,0697 | 1,3612 | 1,6889 |
| 4 | | -0,1082 | -0,0916 | -0,0414 | 0,0424 | 0,1601 | 0,3119 | 0,4982 | 0,7192 | 0,9754 | 1,2676 | 1,5960 |
| 2 | | -0,1697 | -0,1530 | -0,1028 | -0,0187 | 0,0992 | 0,2515 | 0,4383 | 0,6602 | 0,9175 | 1,2109 | 1,5406 |
| 0 | | -0,1978 | -0,1810 | -0,1303 | -0,0457 | 0,0731 | 0,2263 | 0,4144 | 0,6379 | 0,8971 | 1,1922 | 1,5238 |
| -2 | | -0,1922 | -0,1749 | -0,1231 | -0,0370 | 0,0835 | 0,2386 | 0,4288 | 0,6545 | 0,9162 | 1,2138 | 1,5477 |
| -4 | | -0,1520 | -0,1341 | -0,0804 | 0,0086 | 0,1322 | 0,2901 | 0,4832 | 0,7120 | 0,9767 | 1,2773 | 1,6141 |
| -6 | | -0,0759 | -0,0572 | -0,0013 | 0,0912 | 0,2189 | 0,3810 | 0,5782 | 0,8108 | 1,0790 | 1,3830 | 1,7229 |
| -8 | | 0,0375 | 0,0569 | 0,1151 | 0,2113 | 0,3437 | 0,5113 | 0,7137 | 0,9509 | 1,2231 | 1,5308 | 1,8743 |
| -10 | | 0,1896 | 0,2098 | 0,2703 | 0,3702 | 0,5077 | 0,6810 | 0,8894 | 1,1319 | 1,4091 | 1,7212 | 2,0688 |
| -12 | | 0,3821 | 0,4031 | 0,4658 | 0,5695 | 0,7118 | 0,8910 | 1,1054 | 1,3540 | 1,6368 | 1,9543 | 2,3068 |
| -14 | | 0,6165 | 0,6382 | 0,7033 | 0,8106 | 0,9578 | 1,1425 | 1,3630 | 1,6179 | 1,9070 | 2,2303 | 2,5881 |
| -16 | | 0,8944 | 0,9169 | 0,9842 | 1,0951 | 1,2468 | 1,4368 | 1,6633 | 1,9245 | 2,2200 | 2,5494 | 2,9128 |
| -18 | | 1,2174 | 1,2405 | 1,3096 | 1,4235 | 1,5794 | 1,7748 | 2,0071 | 2,2745 | 2,5761 | 2,9118 | 3,2814 |
| -20 | | 1,5870 | 1,6104 | 1,6805 | 1,7965 | 1,9562 | 2,1568 | 2,3952 | 2,6684 | 2,9759 | 3,3178 | 3,6942 |

Fig. 12a

| X \ Y | 0 | 2 | 4 | 6 | 8 | 10 | 12 | 14 | 16 | 18 | 20 |
|---|---|---|---|---|---|---|---|---|---|---|---|
| 20 | 2,7057 | 2,7241 | 2,7791 | 2,8707 | 2,9986 | 3,1625 | 3,3620 | 3,5972 | 3,8676 | 4,1738 | 4,5159 |
| 18 | 2,2603 | 2,2790 | 2,3348 | 2,4277 | 2,5570 | 2,7221 | 2,9226 | 3,1579 | 3,4278 | 3,7324 | 4,0722 |
| 16 | 1,8478 | 1,8670 | 1,9243 | 2,0192 | 2,1511 | 2,3189 | 2,5217 | 2,7586 | 3,0295 | 3,3341 | 3,6728 |
| 14 | 1,4648 | 1,4847 | 1,5441 | 1,6421 | 1,7777 | 1,9495 | 2,1560 | 2,3960 | 2,6690 | 2,9748 | 3,3137 |
| 12 | 1,1096 | 1,1303 | 1,1923 | 1,2943 | 1,4348 | 1,6117 | 1,8232 | 2,0676 | 2,3440 | 2,6522 | 2,9922 |
| 10 | 0,7816 | 0,8034 | 0,8684 | 0,9753 | 1,1216 | 1,3047 | 1,5222 | 1,7721 | 2,0531 | 2,3648 | 2,7073 |
| 8 | 0,4826 | 0,5055 | 0,5740 | 0,6862 | 0,8391 | 1,0291 | 1,2533 | 1,5096 | 1,7961 | 2,1123 | 2,4581 |
| 6 | 0,2157 | 0,2399 | 0,3119 | 0,4298 | 0,5896 | 0,7868 | 1,0182 | 1,2813 | 1,5740 | 1,8951 | 2,2447 |
| 4 | -0,0145 | 0,0108 | 0,0864 | 0,2098 | 0,3764 | 0,5809 | 0,8194 | 1,0893 | 1,3882 | 1,7145 | 2,0681 |
| 2 | -0,2030 | -0,1765 | -0,0976 | 0,0311 | 0,2041 | 0,4155 | 0,6606 | 0,9367 | 1,2413 | 1,5725 | 1,9298 |
| 0 | -0,3444 | -0,3169 | -0,2349 | -0,1016 | 0,0772 | 0,2945 | 0,5454 | 0,8266 | 1,1357 | 1,4707 | 1,8310 |
| -2 | -0,4341 | -0,4057 | -0,3214 | -0,1846 | -0,0015 | 0,2204 | 0,4756 | 0,7605 | 1,0725 | 1,4098 | 1,7718 |
| -4 | -0,4691 | -0,4403 | -0,3548 | -0,2163 | -0,0310 | 0,1935 | 0,4512 | 0,7382 | 1,0516 | 1,3896 | 1,7520 |
| -6 | -0,4494 | -0,4206 | -0,3351 | -0,1967 | -0,0113 | 0,2136 | 0,4720 | 0,7593 | 1,0725 | 1,4099 | 1,7715 |
| -8 | -0,3768 | -0,3482 | -0,2638 | -0,1269 | 0,0567 | 0,2802 | 0,5373 | 0,8232 | 1,1348 | 1,4704 | 1,8299 |
| -10 | -0,2544 | -0,2263 | -0,1435 | -0,0092 | 0,1713 | 0,3919 | 0,6460 | 0,9288 | 1,2374 | 1,5703 | 1,9267 |
| -12 | -0,0859 | -0,0586 | 0,0222 | 0,1531 | 0,3297 | 0,5460 | 0,7959 | 1,0744 | 1,3790 | 1,7083 | 2,0612 |
| -14 | 0,1244 | 0,1508 | 0,2290 | 0,3560 | 0,5280 | 0,7396 | 0,9847 | 1,2583 | 1,5585 | 1,8838 | 2,2330 |
| -16 | 0,3729 | 0,3983 | 0,4734 | 0,5960 | 0,7631 | 0,9699 | 1,2101 | 1,4791 | 1,7747 | 2,0961 | 2,4419 |
| -18 | 0,6566 | 0,6808 | 0,7528 | 0,8709 | 1,0330 | 1,2350 | 1,4708 | 1,7355 | 2,0273 | 2,3452 | 2,6885 |
| -20 | 0,9729 | 0,9962 | 1,0655 | 1,1796 | 1,3370 | 1,5344 | 1,7661 | 2,0274 | 2,3165 | 2,6323 | 2,9735 |

Fig. 12b

**Fig. 13a**

**Fig. 13b**

**Fig. 13c**

**Fig. 14a**

Fig. 14b

Fig. 14c

Fig. 15

**Fig. 16a**

**Fig. 16b**

Fig. 17a

**Fig. 17b**

| X | -24 | -22 | -20 | -18 | -16 | -14 | -12 | -10 | -8 | -6 | -4 | -2 | 0 |
|---|---|---|---|---|---|---|---|---|---|---|---|---|---|
| Y | | | | | | | | | | | | | |
| 24 | | | | | | | | | | | | | 2,9314 |
| 22 | | | | | | | | | 2,8026 | 2,6737 | 2,5794 | 2,5195 | 2,4941 |
| 20 | | | | | | | 2,7611 | 2,5634 | 2,4004 | 2,2720 | 2,1782 | 2,1187 | 2,0933 |
| 18 | | | | | | 2,6252 | 2,3934 | 2,1966 | 2,0344 | 1,9066 | 1,9131 | 1,7538 | 1,7285 |
| 16 | | | | | 2,5584 | 2,2925 | 2,0617 | 1,8557 | 1,7042 | 1,5769 | 1,4838 | 1,4247 | 1,3995 |
| 14 | | | | 2,5605 | 2,2604 | 1,9955 | 1,7655 | 1,5702 | 1,4093 | 1,2825 | 1,1897 | 1,1309 | 1,1058 |
| 12 | | | 2,6319 | 2,2970 | 1,9977 | 1,7337 | 1,5045 | 1,3098 | 1,1494 | 1,0230 | 0,9306 | 0,8719 | 0,8459 |
| 10 | | | 2,4028 | 2,0585 | 1,7700 | 1,5067 | 1,2782 | 1,0840 | 0,9240 | 0,7981 | 0,7060 | 0,6475 | 0,6224 |
| 8 | | 2,5791 | 2,2089 | 1,8751 | 1,5771 | 1,3143 | 1,0853 | 0,8926 | 0,7329 | 0,6073 | 0,5155 | 0,4572 | 0,4321 |
| 6 | | 2,4204 | 2,0503 | 1,7167 | 1,4188 | 1,1562 | 0,9285 | 0,7351 | 0,5758 | 0,4505 | 0,3590 | 0,3008 | 0,2757 |
| 4 | | 2,2975 | 1,9271 | 1,5932 | 1,2951 | 1,0324 | 0,8047 | 0,6115 | 0,4525 | 0,3274 | 0,2360 | 0,1778 | 0,1528 |
| 2 | | 2,2105 | 1,8394 | 1,5048 | 1,2052 | 0,9430 | 0,7150 | 0,5217 | 0,3526 | 0,2376 | 0,1463 | 0,0882 | 0,0632 |
| 0 | 2,5695 | 2,1600 | 1,7877 | 1,4520 | 1,1524 | 0,8885 | 0,6598 | 0,4659 | 0,3065 | 0,1812 | 0,0897 | 0,0316 | 0,0067 |
| -2 | | 2,1475 | 1,7737 | 1,4367 | 1,1358 | 0,8705 | 0,6407 | 0,4457 | 0,2853 | 0,1591 | 0,0668 | 0,0083 | -0,0168 |
| -4 | | 2,1745 | 1,7993 | 1,4607 | 1,1582 | 0,8913 | 0,6595 | 0,4527 | 0,3004 | 0,1723 | 0,0785 | 0,0187 | -0,0070 |
| -6 | | 2,2424 | 1,8555 | 1,5251 | 1,2205 | 0,9513 | 0,7172 | 0,5178 | 0,3529 | 0,2222 | 0,1257 | 0,0640 | 0,0373 |
| -8 | | 2,3521 | 1,9732 | 1,6305 | 1,3236 | 1,0517 | 0,8145 | 0,6121 | 0,4438 | 0,3096 | 0,2099 | 0,1455 | 0,1174 |
| -10 | | | 2,1235 | 1,7783 | 1,4683 | 1,1931 | 0,9525 | 0,7453 | 0,5742 | 0,4358 | 0,3320 | 0,2644 | 0,2348 |
| -12 | | | 2,3169 | 1,9586 | 1,6552 | 1,3763 | 1,1318 | 0,9214 | 0,7449 | 0,6018 | 0,4933 | 0,4222 | 0,3908 |
| -14 | | | | 2,2018 | 1,8845 | 1,6016 | 1,3527 | 1,1377 | 0,9564 | 0,8083 | 0,6950 | 0,6203 | 0,5872 |
| -16 | | | | | 2,1555 | 1,8691 | 1,6155 | 1,3956 | 1,2092 | 1,0561 | 0,9383 | 0,8602 | 0,8256 |
| -18 | | | | | | 2,1791 | 1,9205 | 1,6955 | 1,5038 | 1,3459 | 1,2243 | 1,1436 | 1,1078 |
| -20 | | | | | | | 2,2684 | 2,0378 | 1,8409 | 1,6788 | 1,5542 | 1,4718 | 1,4353 |
| -22 | | | | | | | | | 2,2219 | 2,0559 | 1,9292 | 1,8457 | 1,8089 |
| -24 | | | | | | | | | | | | | 2,2290 |

**Fig. 18a** (1)

EP 3 740 814 B1

| X | 0 | 2 | 4 | 6 | 8 | 10 | 12 | 14 | 16 | 18 | 20 | 22 | 24 |
|---|---|---|---|---|---|---|---|---|---|---|---|---|---|
| **Y** | | | | | | | | | | | | | |
| 24 | 2,9314 | | | | | | | | | | | | |
| 22 | 2,4941 | 2,5030 | 2,5454 | 2,6243 | | | | | | | | | |
| 20 | 2,0933 | 2,1022 | 2,1454 | 2,2229 | 2,3349 | 2,4814 | | | | | | | |
| 18 | 1,7285 | 1,7375 | 1,7805 | 1,8577 | 1,9591 | 2,1150 | 2,2956 | 2,5110 | | | | | |
| 16 | 1,3995 | 1,4085 | 1,4513 | 1,5281 | 1,6390 | 1,7843 | 1,9641 | 2,1787 | 2,4283 | | | | |
| 14 | 1,1058 | 1,1145 | 1,1572 | 1,2337 | 1,3442 | 1,4889 | 1,6680 | 1,8817 | 2,1305 | 2,4150 | | | |
| 12 | 0,8459 | 0,8555 | 0,8979 | 0,9740 | 1,0841 | 1,2282 | 1,4067 | 1,6198 | 1,8580 | 2,1518 | 2,4719 | | |
| 10 | 0,6224 | 0,6309 | 0,6731 | 0,7489 | 0,8586 | 1,0022 | 1,1802 | 1,3928 | 1,6406 | 1,9242 | 2,2441 | | |
| 8 | 0,4321 | 0,4405 | 0,4824 | 0,5580 | 0,6673 | 0,8105 | 0,9881 | 1,2005 | 1,4484 | 1,7322 | 2,0526 | 2,4101 | |
| 6 | 0,2757 | 0,2839 | 0,3256 | 0,4010 | 0,5100 | 0,6530 | 0,8305 | 1,0432 | 1,2916 | 1,5762 | 1,8976 | 2,2563 | |
| 4 | 0,1528 | 0,1609 | 0,2025 | 0,2777 | 0,3856 | 0,5297 | 0,7077 | 0,9123 | 1,1710 | 1,4572 | 1,7804 | 2,1410 | |
| 2 | 0,0632 | 0,0714 | 0,1128 | 0,1880 | 0,2972 | 0,4411 | 0,6204 | 0,8358 | 1,0878 | 1,3766 | 1,7024 | 2,0655 | |
| 0 | 0,0067 | 0,0150 | 0,0565 | 0,1318 | 0,2419 | 0,3876 | 0,5693 | 0,7877 | 1,0430 | 1,3354 | 1,6547 | 2,0312 | 2,4355 |
| -2 | -0,0168 | -0,0083 | 0,0337 | 0,1103 | 0,2224 | 0,3710 | 0,5562 | 0,7785 | 1,0378 | 1,3342 | 1,6675 | 2,0377 | |
| -4 | -0,0070 | 0,0017 | 0,0452 | 0,1243 | 0,2400 | 0,3925 | 0,5823 | 0,8091 | 1,0727 | 1,3732 | 1,7105 | 2,0847 | |
| -6 | 0,0373 | 0,0464 | 0,0919 | 0,1745 | 0,2947 | 0,4524 | 0,5473 | 0,8790 | 1,1473 | 1,4523 | 1,7939 | 2,1723 | |
| -8 | 0,1174 | 0,1269 | 0,1748 | 0,2614 | 0,3867 | 0,5500 | 0,7507 | 0,9879 | 1,2613 | 1,5710 | 1,9174 | 2,3006 | |
| -10 | 0,2348 | 0,2445 | 0,2947 | 0,3854 | 0,5159 | 0,6852 | 0,8920 | 1,1352 | 1,4141 | 1,7293 | 2,0810 | | |
| -12 | 0,3908 | 0,4007 | 0,4530 | 0,5474 | 0,6828 | 0,8580 | 1,0712 | 1,3205 | 1,6057 | 1,9269 | 2,2848 | | |
| -14 | 0,5872 | 0,5972 | 0,5512 | 0,7487 | 0,8887 | 1,0695 | 1,2889 | 1,5449 | 1,8367 | 2,1645 | | | |
| -16 | 0,8256 | 0,8357 | 0,8910 | 0,9910 | 1,1348 | 1,3207 | 1,5452 | 1,8088 | 2,1076 | | | | |
| -18 | 1,1078 | 1,1179 | 1,1740 | 1,2757 | 1,4225 | 1,6127 | 1,8437 | 2,1129 | | | | | |
| -20 | 1,4353 | 1,4453 | 1,5017 | 1,6043 | 1,7531 | 1,9467 | 2,1826 | | | | | | |
| -22 | 1,8089 | 1,8188 | 1,8753 | 1,9783 | 2,1283 | | | | | | | | |
| -24 | 2,2290 | | | | | | | | | | | | |

**Fig. 18a (2)**

| X | -24 | -22 | -20 | -18 | -16 | -14 | -12 | -10 | -8 | -6 | -4 | -2 | 0 |
|---|---|---|---|---|---|---|---|---|---|---|---|---|---|
| Y | | | | | | | | | | | | | |
| 24 | | | | | | | | | | | | | 3,1026 |
| 22 | | | | | | | | | 2,8724 | 2,7320 | 2,6330 | 2,5738 | 2,5534 |
| 20 | | | | | | | 2,7827 | 2,5634 | 2,3882 | 2,2544 | 2,1599 | 2,1033 | 2,0839 |
| 18 | | | | | | 2,6118 | 2,3574 | 2,1477 | 1,9794 | 1,8501 | 1,7581 | 1,7028 | 1,6838 |
| 16 | | | | | 2,5386 | 2,2475 | 2,0029 | 1,7995 | 1,6345 | 1,5053 | 1,4143 | 1,3585 | 1,3395 |
| 14 | | | | 2,5589 | 2,2289 | 1,9474 | 1,7083 | 1,5071 | 1,3416 | 1,2111 | 1,1165 | 1,0590 | 1,0393 |
| 12 | | | 2,6704 | 2,2981 | 1,9774 | 1,7012 | 1,4537 | 1,2609 | 1,0914 | 0,9552 | 0,8573 | 0,7958 | 0,7762 |
| 10 | | | 2,4540 | 2,0905 | 1,7756 | 1,5013 | 1,2622 | 1,0551 | 0,8797 | 0,7381 | 0,6338 | 0,5698 | 0,5481 |
| 8 | | 2,6982 | 2,2875 | 1,9300 | 1,6175 | 1,3426 | 1,1001 | 0,8874 | 0,7051 | 0,5566 | 0,4455 | 0,3787 | 0,3558 |
| 6 | | 2,5712 | 2,1661 | 1,8117 | 1,4996 | 1,2227 | 0,9760 | 0,7574 | 0,5683 | 0,4131 | 0,2985 | 0,2263 | 0,2021 |
| 4 | | 2,4881 | 2,0854 | 1,7331 | 1,4200 | 1,1405 | 0,8895 | 0,6656 | 0,4705 | 0,3096 | 0,1895 | 0,1154 | 0,0902 |
| 2 | | 2,4452 | 2,0457 | 1,6921 | 1,3775 | 1,0952 | 0,8406 | 0,6122 | 0,4125 | 0,2477 | 0,1244 | 0,0483 | 0,0225 |
| 0 | 2,8981 | 2,4431 | 2,0421 | 1,6871 | 1,3705 | 1,0858 | 0,8284 | 0,5971 | 0,3948 | 0,2278 | 0,1030 | 0,0260 | 0,0000 |
| -2 | | 2,4768 | 2,0735 | 1,7162 | 1,3975 | 1,1107 | 0,8515 | 0,6189 | 0,4160 | 0,2489 | 0,1242 | 0,0475 | 0,0218 |
| -4 | | 2,5457 | 2,1385 | 1,7779 | 1,4565 | 1,1679 | 0,9078 | 0,6755 | 0,4738 | 0,3083 | 0,1853 | 0,1098 | 0,0850 |
| -6 | | 2,6487 | 2,2358 | 1,8706 | 1,5459 | 1,2554 | 0,9950 | 0,7638 | 0,5646 | 0,4020 | 0,2816 | 0,2033 | 0,1847 |
| -8 | | 2,7847 | 2,3644 | 1,9930 | 1,6640 | 1,3710 | 1,1103 | 0,8807 | 0,6842 | 0,5251 | 0,4081 | 0,3373 | 0,3154 |
| -10 | | | 2,5236 | 2,1444 | 1,8096 | 1,5131 | 1,2512 | 1,0227 | 0,8290 | 0,6733 | 0,5597 | 0,4917 | 0,4714 |
| -12 | | | 2,7138 | 2,3248 | 1,9821 | 1,6803 | 1,4159 | 1,1873 | 0,9955 | 0,8429 | 07325 | 0,6672 | 0,6484 |
| -14 | | | | 2,5353 | 2,1822 | 1,8725 | 1,6032 | 1,3729 | 1,1818 | 1,0314 | 0,9238 | 0,8607 | 0,8431 |
| -16 | | | | | 2,4118 | 2,0911 | 1,8140 | 1,5793 | 1,3870 | 1,2375 | 1,1317 | 1,0702 | 1,0535 |
| -18 | | | | | | 2,0000 | 2,0507 | 1,8086 | 1,6122 | 1,4514 | 1,3558 | 1,2951 | 1,2788 |
| -20 | | | | | | | 2,3168 | 2,0542 | 1,8606 | 1,7054 | 1,5978 | 1,5364 | 1,5204 |
| -22 | | | | | | | | | 2,1364 | 1,9740 | 1,8618 | 1,7982 | 1,7820 |
| -24 | | | | | | | | | | | | | 2,0697 |

**Fig. 18b** (1)

| X / Y | 0 | 2 | 4 | 6 | 8 | 10 | 12 | 14 | 16 | 18 | 20 | 22 | 24 |
|---|---|---|---|---|---|---|---|---|---|---|---|---|---|
| 24 | 3,1026 | | | | | | | | | | | | |
| 22 | 2,5534 | 2,5715 | 2,6284 | 2,7245 | 2,8513 | | | | | | | | |
| 20 | 2,0839 | 2,1013 | 2,1557 | 2,2475 | 2,3778 | 2,5486 | 2,7623 | | | | | | |
| 18 | 1,6838 | 1,7010 | 1,7542 | 1,8436 | 1,9697 | 2,1337 | 2,3379 | 2,5866 | | | | | |
| 16 | 1,3395 | 1,3570 | 1,4107 | 1,5003 | 1,6254 | 1,7853 | 1,9843 | 2,2224 | 2,5050 | | | | |
| 14 | 1,0393 | 1,0576 | 1,1134 | 1,2056 | 1,3329 | 1,4945 | 1,6904 | 1,9229 | 2,1960 | 2,5158 | | | |
| 12 | 0,7762 | 0,7958 | 0,8547 | 0,9513 | 1,0833 | 1,2487 | 1,4453 | 1,6771 | 1,9445 | 2,2548 | 2,6151 | | |
| 10 | 0,5481 | 0,5590 | 0,6316 | 0,7336 | 0,8718 | 1,0431 | 1,2450 | 1,4772 | 1,7426 | 2,0468 | 2,3977 | | |
| 8 | 0,3558 | 0,3781 | 0,4444 | 0,5521 | 0,6971 | 0,8751 | 1,0826 | 1,3182 | 1,5840 | 1,8854 | 2,2300 | 2,6266 | |
| 6 | 0,2021 | 0,2256 | 0,2954 | 0,4083 | 0,5598 | 0,7444 | 0,9576 | 1,1972 | 1,4649 | 1,7656 | 2,1058 | 2,4974 | |
| 4 | 0,0902 | 0,1147 | 0,1873 | 0,3047 | 0,4616 | 0,6518 | 0,8599 | 1,1134 | 1,3834 | 1,6848 | 2,0246 | 2,4114 | |
| 2 | 0,0225 | 0,0478 | 0,1225 | 0,2431 | 0,4039 | 0,5982 | 0,8199 | 1,0664 | 1,3387 | 1,6414 | 1,9812 | 2,3652 | |
| 0 | 0,0000 | 0,0258 | 0,1019 | 0,2244 | 0,3873 | 0,5837 | 0,8075 | 1,0559 | 1,3300 | 1,6343 | 1,9750 | 2,3559 | 2,7981 |
| -2 | 0,0218 | 0,0481 | 0,1245 | 0,2475 | 0,4107 | 0,6073 | 0,8314 | 1,0805 | 1,3560 | 1,6618 | 2,0041 | 2,3905 | |
| -4 | 0,0850 | 0,1116 | 0,1879 | 0,3099 | 0,4718 | 0,6668 | 0,8899 | 1,1388 | 1,4150 | 1,7224 | 2,0668 | 2,4559 | |
| -6 | 0,1847 | 0,2116 | 0,2872 | 0,4074 | 0,5668 | 0,7592 | 0,9802 | 1,2284 | 1,5051 | 1,8142 | 2,1616 | 2,5549 | |
| -8 | 0,3154 | 0,3426 | 0,4172 | 0,5353 | 0,6916 | 0,8810 | 1,0999 | 1,3472 | 1,6248 | 1,9364 | 2,2881 | 2,6872 | |
| -10 | 0,4714 | 0,4990 | 0,5727 | 0,6886 | 0,8422 | 1,0291 | 1,2454 | 1,4937 | 1,7731 | 2,0888 | 2,4457 | | |
| -12 | 0,6484 | 0,6763 | 0,7490 | 0,8633 | 1,0151 | 1,2007 | 1,4178 | 1,6667 | 1,9499 | 2,2719 | 2,6382 | | |
| -14 | 0,8431 | 0,8710 | 0,9430 | 1,0554 | 1,2078 | 1,3940 | 1,6132 | 1,8562 | 2,1560 | 2,4872 | | | |
| -16 | 1,0535 | 1,0814 | 1,1531 | 1,2668 | 1,4196 | 1,6088 | 1,8331 | 2,0935 | 2,3935 | | | | |
| -18 | 1,2788 | 1,3070 | 1,3794 | 1,4948 | 1,6513 | 1,8465 | 2,0796 | 2,3516 | | | | | |
| -20 | 1,5204 | 1,5495 | 1,6238 | 1,7432 | 1,9060 | 2,1107 | 2,3553 | | | | | | |
| -22 | 1,7820 | 1,8128 | 1,8908 | 2,0161 | 2,1882 | | | | | | | | |
| -24 | 2,0697 | | | | | | | | | | | | |

**Fig. 18b (2)**

Fig. 19a

Fig. 19b

**Fig. 19c**

Fig. 20a

Fig. 20b

**Fig. 20c**

Fig. 21

**Fig. 22a**

Fig. 22b

Fig. 23a

Fig. 23b

| X \ Y | -24 | -22 | -20 | -18 | -16 | -14 | -12 | -10 | -8 | -6 | -4 | -2 | 0 |
|---|---|---|---|---|---|---|---|---|---|---|---|---|---|
| 24 | | | | | | | | | | | | | 2,4507 |
| 22 | | | | | | | | | 2,4904 | 2,3300 | 2,2065 | 2,1177 | 2,0639 |
| 20 | | | | | | | 2,5760 | 2,3389 | 2,1403 | 1,9801 | 1,8568 | 1,7682 | 1,7146 |
| 18 | | | | | | 2,5368 | 2,2619 | 2,0251 | 1,8267 | 1,6667 | 1,5435 | 1,4550 | 1,4016 |
| 16 | | | | | 2,5709 | 2,2587 | 1,9840 | 1,7475 | 1,5493 | 1,3894 | 1,2662 | 1,1778 | 1,1244 |
| 14 | | | | 2,6774 | 2,3288 | 2,0168 | 1,7423 | 1,5060 | 1,3079 | 1,1148 | 1,0248 | 0,9363 | 0,8830 |
| 12 | | | 2,8548 | 2,4708 | 2,1228 | 1,8111 | 1,5369 | 1,3006 | 1,1025 | 0,9425 | 0,8192 | 0,7307 | 0,6774 |
| 10 | | | 2,6824 | 2,2994 | 1,9522 | 1,6412 | 1,3672 | 1,1310 | 0,9328 | 0,7727 | 0,6494 | 0,5609 | 0,5075 |
| 8 | | 2,9614 | 2,5437 | 2,1620 | 1,8159 | 1,5058 | 1,2325 | 0,9965 | 0,7984 | 0,6384 | 0,5150 | 0,4265 | 0,3732 |
| 6 | | 2,8533 | 2,4373 | 2,0571 | 1,7125 | 1,4038 | 1,1316 | 0,8966 | 0,6991 | 0,5395 | 0,4162 | 0,3276 | 0,2742 |
| 4 | | 2,7783 | 2,3640 | 1,9855 | 1,6426 | 1,3356 | 1,0653 | 0,8320 | 0,6362 | 0,4778 | 0,3553 | 0,2672 | 0,2138 |
| 2 | | 2,7382 | 2,3251 | 1,9482 | 1,6070 | 1,3019 | 1,0340 | 0,8036 | 0,6107 | 0,4551 | 0,3349 | 0,2482 | 0,1949 |
| 0 | 3,1780 | 2,7295 | 2,3176 | 1,9420 | 1,6025 | 1,2998 | 1,0347 | 0,8080 | 0,6192 | 0,4677 | 0,3510 | 0,2665 | 0,2133 |
| -2 | | 2,7482 | 2,3374 | 1,9632 | 1,6257 | 1,3255 | 1,0639 | 0,8414 | 0,6573 | 0,5108 | 0,3984 | 0,3165 | 0,2633 |
| -4 | | 2,7906 | 2,3808 | 2,0083 | 1,6730 | 1,3759 | 1,1181 | 0,9000 | 0,7211 | 0,5799 | 0,4722 | 0,3930 | 0,3399 |
| -6 | | 2,8554 | 2,4468 | 2,0761 | 1,7435 | 1,4498 | 1,1961 | 0,9828 | 0,8090 | 0,6732 | 0,5700 | 0,4932 | 0,4401 |
| -8 | | 2,9428 | 2,5356 | 2,1671 | 1,8374 | 1,5473 | 1,2980 | 1,0896 | 0,9210 | 0,7900 | 0,6906 | 0,6158 | 0,5624 |
| -10 | | | 2,6475 | 2,2813 | 1,9547 | 1,6685 | 1,4238 | 1,2205 | 1,0567 | 0,9296 | 0,8328 | 0,7590 | 0,7054 |
| -12 | | | 2,7825 | 2,4189 | 2,0955 | 1,8133 | 1,5733 | 1,3751 | 1,2157 | 1,0911 | 0,9953 | 0,9216 | 0,8676 |
| -14 | | | | 2,5791 | 2,2591 | 1,9808 | 1,7453 | 1,5518 | 1,3959 | 1,2728 | 1,1769 | 1,1026 | 1,0481 |
| -16 | | | | | 2,4446 | 2,1699 | 1,9383 | 1,7482 | 1,5948 | 1,4724 | 1,3762 | 1,3013 | 1,2464 |
| -18 | | | | | | 2,3804 | 2,1517 | 1,9638 | 1,8115 | 1,6895 | 1,5931 | 1,5178 | 1,4625 |
| -20 | | | | | | | 2,3861 | 2,1995 | 2,0477 | 1,9257 | 1,8290 | 1,7535 | 1,6978 |
| -22 | | | | | | | | | 2,3050 | 2,1828 | 2,0856 | 2,0069 | 1,9536 |
| -24 | | | | | | | | | | | | | 2,2315 |

**Fig. 24a (1)**

EP 3 740 814 B1

| X / Y | 0 | 2 | 4 | 6 | 8 | 10 | 12 | 14 | 16 | 18 | 20 | 22 | 24 |
|---|---|---|---|---|---|---|---|---|---|---|---|---|---|
| 24 | 2,9314 | | | | | | | | | | | | |
| 22 | 2,4941 | 2,5030 | 2,5454 | 2,6243 | 2,7368 | | | | | | | | |
| 20 | 2,0933 | 2,1022 | 2,1454 | 2,2229 | 2,3349 | 2,4814 | 2,6627 | | | | | | |
| 18 | 1,7286 | 1,7375 | 1,7805 | 1,8577 | 1,9691 | 2,1150 | 2,2956 | 2,5110 | | | | | |
| 16 | 1,3996 | 1,4085 | 1,4513 | 1,5281 | 1,6390 | 1,7843 | 1,9641 | 2,1787 | 2,4283 | | | | |
| 14 | 1,1058 | 1,1146 | 1,1572 | 1,2337 | 1,3442 | 1,4889 | 1,6680 | 1,8817 | 2,1306 | 2,4150 | | | |
| 12 | 0,4869 | 0,8555 | 0,8979 | 0,9740 | 1,0841 | 1,2282 | 1,4067 | 1,6198 | 1,8680 | 2,1518 | 2,4719 | | |
| 10 | 0,6224 | 0,6309 | 0,6731 | 0,7489 | 0,8586 | 1,0022 | 1,1802 | 1,3928 | 1,6406 | 1,9242 | 2,2441 | | |
| 8 | 0,4321 | 0,4405 | 0,4824 | 0,5580 | 0,6673 | 0,8105 | 0,9881 | 1,2006 | 1,4484 | 1,7322 | 2,0526 | 2,4101 | |
| 6 | 0,2757 | 0,2839 | 0,3256 | 0,4010 | 0,5100 | 0,6530 | 0,8305 | 1,0432 | 1,2916 | 1,5762 | 1,8976 | 2,2563 | |
| 4 | 0,1528 | 0,1609 | 0,2025 | 0,2777 | 0,3866 | 0,5297 | 0,7077 | 0,9213 | 1,1710 | 1,4572 | 1,7804 | 2,1410 | |
| 2 | 0,0632 | 0,0714 | 0,1128 | 0,1880 | 0,2972 | 0,4411 | 0,6204 | 0,8358 | 1,0878 | 1,3766 | 1,7024 | 2,0655 | |
| 0 | 0,0067 | 0,0150 | 0,0565 | 0,1318 | 0,2419 | 0,3876 | 0,5693 | 0,7877 | 1,0430 | 1,3354 | 1,6647 | 2,0312 | 2,4355 |
| -2 | -0,0168 | -0,0083 | 0,0337 | 0,1103 | 0,2224 | 0,3710 | 0,5562 | 0,7785 | 1,0378 | 1,3342 | 1,6675 | 2,0377 | |
| -4 | -0,0070 | 0,0017 | 0,0452 | 0,1243 | 0,2400 | 0,3926 | 0,5823 | 0,8091 | 1,0727 | 1,3732 | 1,7105 | 2,0847 | |
| -6 | 0,0373 | 0,0464 | 0,0919 | 0,1745 | 0,2947 | 0,4524 | 0,6473 | 0,8790 | 1,1473 | 1,4523 | 1,7939 | 2,1723 | |
| -8 | 1,1174 | 0,1269 | 0,1748 | 0,2614 | 0,3867 | 0,5500 | 0,7507 | 0,9879 | 1,2613 | 1,5710 | 1,9174 | 2,3006 | |
| -10 | 0,2348 | 0,2445 | 0,2947 | 0,3854 | 0,5159 | 0,6852 | 0,8920 | 1,1352 | 1,4141 | 1,7293 | 2,0810 | | |
| -12 | 0,3908 | 0,4007 | 0,4530 | 0,5474 | 0,6828 | 0,8580 | 1,0712 | 1,3206 | 1,6057 | 1,9269 | 2,2848 | | |
| -14 | 0,5872 | 0,5972 | 0,6512 | 0,7487 | 0,8887 | 1,0695 | 1,2889 | 1,5449 | 1,8367 | 2,1646 | | | |
| -16 | 0,8256 | 0,8357 | 0,8910 | 0,9910 | 1,1348 | 1,3207 | 1,5462 | 1,8088 | 2,1076 | | | | |
| -18 | 1,1078 | 1,1179 | 1,1740 | 1,2757 | 1,4225 | 1,6127 | 1,8437 | 2,1129 | | | | | |
| -20 | 1,4353 | 1,4453 | 1,5017 | 1,6043 | 1,7531 | 1,9467 | 2,1826 | | | | | | |
| -22 | 1,8089 | 1,8188 | 1,8753 | 1,9783 | 2,1283 | | | | | | | | |
| -24 | 2,2290 | | | | | | | | | | | | |

**Fig. 24a (2)**

| X | -24 | -22 | -20 | -18 | -16 | -14 | -12 | -10 | -8 | -6 | -4 | -2 | 0 |
|---|---|---|---|---|---|---|---|---|---|---|---|---|---|
| **Y** | | | | | | | | | | | | | |
| 24 | | | | | | | | | | | | | 2,5418 |
| 22 | | | | | | | | | 2,6138 | 2,4396 | 2,3044 | 2,2082 | 2,1509 |
| 20 | | | | | | | 2,7263 | 2,4728 | 2,2583 | 2,0831 | 1,9471 | 1,8504 | 1,7929 |
| 18 | | | | | | 2,7003 | 2,4068 | 2,1520 | 1,9364 | 1,7603 | 1,6236 | 1,5265 | 1,4688 |
| 16 | | | | | 2,7486 | 2,4155 | 2,1207 | 1,8648 | 1,6483 | 1,4714 | 1,3341 | 1,2366 | 1,1786 |
| 14 | | | | 2,8690 | 2,4979 | 2,1639 | 1,8681 | 1,6114 | 1,3940 | 1,2164 | 1,0786 | 0,9807 | 0,9223 |
| 12 | | | 3,0574 | 2,6513 | 2,2803 | 1,9459 | 1,6495 | 1,3920 | 1,1739 | 0,9956 | 0,8573 | 0,7588 | 0,7000 |
| 10 | | | 2,8705 | 2,4658 | 2,0956 | 1,7614 | 1,4647 | 1,2067 | 0,9880 | 0,8092 | 0,6702 | 0,5712 | 0,5118 |
| 8 | | 3,1491 | 2,7145 | 2,3119 | 1,9432 | 1,6100 | 1,3137 | 1,0555 | 0,8365 | 0,6572 | 0,5177 | 0,4180 | 0,3578 |
| 6 | | 3,0196 | 2,5887 | 2,1890 | 1,8226 | 1,4911 | 1,1959 | 0,9383 | 0,7194 | 0,5399 | 0,4000 | 0,2995 | 0,2382 |
| 4 | | 2,9178 | 2,4911 | 2,0949 | 1,7314 | 1,4023 | 1,1090 | 0,8530 | 0,6353 | 0,4565 | 0,3167 | 0,2158 | 0,1533 |
| 2 | | 2,8413 | 2,4191 | 2,0268 | 1,6665 | 1,3402 | 1,0498 | 0,7968 | 0,5818 | 0,4054 | 0,2671 | 0,1665 | 0,1030 |
| 0 | 3,2340 | 2,7897 | 2,3716 | 1,9837 | 1,6272 | 1,3044 | 1,0179 | 0,7690 | 0,5583 | 0,3856 | 0,2500 | 0,1504 | 0,0858 |
| -2 | | 2,7605 | 2,3480 | 1,9648 | 1,6130 | 1,2949 | 1,0133 | 0,7697 | 0,5642 | 0,3961 | 0,2640 | 0,1658 | 0,1002 |
| -4 | | 2,7550 | 2,3475 | 1,9698 | 1,6236 | 1,3115 | 1,0360 | 0,7986 | 0,5989 | 0,4361 | 0,3078 | 0,2112 | 0,1445 |
| -6 | | 2,7724 | 2,3701 | 1,9982 | 1,6586 | 1,3535 | 1,0851 | 0,8545 | 0,6611 | 0,5038 | 0,3794 | 0,2845 | 0,2168 |
| -8 | | 2,8132 | 2,4159 | 2,0500 | 1,7174 | 1,4199 | 1,1592 | 0,9359 | 0,7491 | 0,5973 | 0,4767 | 0,3834 | 0,3150 |
| -10 | | | 2,4851 | 2,1252 | 1,7996 | 1,5097 | 1,2569 | 1,0413 | 0,8614 | 0,7147 | 0,5976 | 0,5057 | 0,4370 |
| -12 | | | 2,5780 | 2,2238 | 1,9047 | 1,6221 | 1,3771 | 1,1694 | 0,9963 | 0,8544 | 0,7401 | 0,6495 | 0,5810 |
| -14 | | | | 2,3468 | 2,0338 | 1,7579 | 1,5203 | 1,3201 | 1,1534 | 1,0158 | 0,9040 | 0,8148 | 0,7471 |
| -16 | | | | | 2,1881 | 1,9184 | 1,6874 | 1,4937 | 1,3323 | 1,1985 | 1,0892 | 1,0019 | 0,9358 |
| -18 | | | | | | 2,1047 | 1,8793 | 1,6906 | 1,5335 | 1,4030 | 1,2963 | 1,2114 | 1,1475 |
| -20 | | | | | | | 2,0970 | 1,9121 | 1,7582 | 1,6305 | 1,5264 | 1,4440 | 1,3829 |
| -22 | | | | | | | | | 2,0077 | 1,8822 | 1,7804 | 1,7006 | 1,6424 |
| -24 | | | | | | | | | | | | | 1,9266 |

## Fig. 24b (1)

EP 3 740 814 B1

| X \ Y | 0 | 2 | 4 | 6 | 8 | 10 | 12 | 14 | 16 | 18 | 20 | 22 | 24 |
|---|---|---|---|---|---|---|---|---|---|---|---|---|---|
| 24 | 2,5418 | | | | | | | | | | | | |
| 22 | 2,1509 | 2,1324 | 2,1523 | 2,2104 | 2,3064 | | | | | | | | |
| 20 | 1,7929 | 1,7743 | 1,7942 | 1,8524 | 1,9485 | 2,0821 | 2,2528 | | | | | | |
| 18 | 1,4688 | 1,4501 | 1,4700 | 1,5282 | 1,6243 | 1,7578 | 1,9281 | 2,1348 | | | | | |
| 16 | 1,1786 | 1,1598 | 1,1796 | 1,2377 | 1,3336 | 1,4666 | 1,6364 | 1,8422 | 2,0834 | | | | |
| 14 | 0,9223 | 0,9032 | 0,9229 | 0,9807 | 1,0761 | 1,2085 | 1,3772 | 1,5816 | 1,8210 | 2,0948 | | | |
| 12 | 0,7000 | 0,6805 | 0,6997 | 0,7570 | 0,8516 | 0,9829 | 1,1501 | 1,3525 | 1,5895 | 1,8604 | 2,1646 | | |
| 10 | 0,5118 | 0,4915 | 0,5100 | 0,5663 | 0,6599 | 0,7896 | 0,9546 | 1,1542 | 1,3879 | 1,6552 | 1,9556 | | |
| 8 | 0,3578 | 0,3366 | 0,3539 | 0,4088 | 0,5004 | 0,6277 | 0,7896 | 0,9854 | 1,2150 | 1,4780 | 1,7741 | 2,1029 | |
| 6 | 0,2382 | 0,2158 | 0,2314 | 0,2841 | 0,3728 | 0,4964 | 0,6539 | 0,8448 | 1,0693 | 1,3273 | 1,6188 | 1,9433 | |
| 4 | 0,1533 | 0,1290 | 0,1421 | 0,1913 | 0,2755 | 0,3940 | 0,5459 | 0,7311 | 0,9499 | 1,2026 | 1,4892 | 1,8094 | |
| 2 | 0,1030 | 0,0760 | 0,0848 | 0,1287 | 0,2068 | 0,3189 | 0,4645 | 0,6435 | 0,8565 | 1,1039 | 1,3859 | 1,7018 | |
| 0 | 0,0858 | 0,0554 | 0,0588 | 0,0960 | 0,1668 | 0,2714 | 0,4100 | 0,5827 | 0,7900 | 1,0322 | 1,3095 | 1,6213 | 1,9669 |
| -2 | 0,1002 | 0,0661 | 0,0635 | 0,0931 | 0,1557 | 0,2521 | 0,3832 | 0,5494 | 0,7511 | 0,9883 | 1,2612 | 1,5692 | |
| -4 | 0,1445 | 0,1067 | 0,0980 | 0,1198 | 0,1738 | 0,2617 | 0,3850 | 0,5446 | 0,7407 | 0,9732 | 1,2419 | 1,5464 | |
| -6 | 0,2168 | 0,1756 | 0,1613 | 0,1758 | 0,2214 | 0,3006 | 0,4162 | 0,5693 | 0,7599 | 0,9877 | 1,2525 | 1,5537 | |
| -8 | 0,3150 | 0,2711 | 0,2522 | 0,2603 | 0,2983 | 0,3696 | 0,4778 | 0,6245 | 0,8097 | 1,0329 | 1,2938 | 1,5919 | |
| -10 | 0,4370 | 0,3913 | 0,3693 | 0,3727 | 0,4045 | 0,4690 | 0,5706 | 0,7114 | 0,8912 | 1,1098 | 1,3667 | | |
| -12 | 0,5810 | 0,5348 | 0,5115 | 0,5123 | 0,5400 | 0,5993 | 0,6954 | 0,8308 | 1,0054 | 1,2191 | 1,4717 | | |
| -14 | 0,7471 | 0,7015 | 0,6785 | 0,6786 | 0,7041 | 0,7601 | 0,8519 | 0,9823 | 1,1517 | 1,3603 | | | |
| -16 | 0,9358 | 0,8917 | 0,8700 | 0,8708 | 0,8961 | 0,9507 | 1,0394 | 1,1653 | 1,3294 | | | | |
| -18 | 1,1475 | 1,1055 | 1,0858 | 1,0886 | 1,1154 | 1,1701 | 1,2570 | 1,3788 | | | | | |
| -20 | 1,3829 | 1,3435 | 1,3264 | 1,3318 | 1,3612 | 1,4172 | 1,5029 | | | | | | |
| -22 | 1,6424 | 1,6060 | 1,5920 | 1,6006 | 1,6328 | | | | | | | | |
| -24 | 1,9266 | | | | | | | | | | | | |

**Fig. 24b (2)**

**Fig. 25a**

**Fig. 25b**

Fig. 25c

Fig. 26

Fig. 27a

Fig. 27b

| X | -24 | -22 | -20 | -18 | -16 | -14 | -12 | -10 | -8 | -6 | -4 | -2 | 0 |
|---|---|---|---|---|---|---|---|---|---|---|---|---|---|
| Y | | | | | | | | | | | | | |
| 24 | | | | | | | | | | | | | 1,3906 |
| 22 | | | | | | | | | 0,9735 | 0,9034 | 0,8778 | 0,8960 | 0,9572 |
| 20 | | | | | | | 0,8685 | 0,7095 | 0,5955 | 0,5260 | 0,5004 | 0,5178 | 0,5776 |
| 18 | | | | | | 0,7390 | 0,5382 | 0,3814 | 0,2686 | 0,1997 | 0,1740 | 0,1906 | 0,2489 |
| 16 | | | | | 0,6951 | 0,4551 | 0,2571 | 0,1022 | -0,0093 | -0,0778 | -0,1039 | -0,0882 | -0,0314 |
| 14 | | | | 0,7298 | 0,4551 | 0,2187 | 0,0232 | -0,1299 | -0,2406 | -0,3089 | -0,3354 | -0,3207 | -0,2653 |
| 12 | | | 0,8340 | 0,5310 | 0,2612 | 0,0281 | -0,1653 | -0,3172 | -0,4273 | -0,4956 | -0,5227 | -0,5090 | -0,4550 |
| 10 | | | 0,6726 | 0,3763 | 0,1112 | -0,1188 | 0,3103 | -0,4613 | -0,5712 | -0,6398 | -0,6675 | -0,6547 | -0,6019 |
| 8 | | 0,8659 | 0,5525 | 0,2630 | 0,0029 | -0,2237 | -0,4133 | -0,5635 | -0,6732 | -0,7421 | -0,7705 | -0,7586 | -0,7068 |
| 6 | | 0,7755 | 0,4708 | 0,1886 | -0,0660 | -0,2888 | -0,4760 | -0,6248 | -0,7342 | -0,8034 | -0,8322 | -0,8210 | -0,7701 |
| 4 | | 0,7202 | 0,4241 | 0,1493 | -0,0993 | -0,3174 | -0,5012 | -0,6477 | -0,7558 | -0,8244 | -0,8531 | -0,8422 | -0,7920 |
| 2 | | 0,6968 | 0,4088 | 0,1413 | -0,1011 | -0,3139 | -0,4929 | -0,6354 | -0,7401 | -0,8062 | -0,8335 | -0,8220 | -0,7723 |
| 0 | 1,0002 | 0,7042 | 0,4237 | 0,1632 | -0,0725 | -0,2791 | -0,4522 | -0,5888 | -0,6882 | -0,7499 | -0,7741 | -0,7612 | -0,7119 |
| -2 | | 0,7420 | 0,4686 | 0,2154 | -0,0132 | -0,2126 | -0,3784 | -0,5077 | -0,6003 | -0,6561 | -0,6761 | -0,6612 | -0,6119 |
| -4 | | 0,8100 | 0,5437 | 0,2980 | 0,0774 | -0,1137 | -0,2709 | -0,3919 | -0,4766 | -0,5255 | -0,5405 | -0,5231 | -0,4737 |
| -6 | | 0,9082 | 0,6490 | 0,4114 | 0,1998 | 0,0181 | -0,1296 | -0,2414 | -0,3176 | -0,3592 | -0,3688 | -0,3485 | -0,2984 |
| -8 | | 1,0372 | 0,7854 | 0,5563 | 0,3543 | 0,1829 | 0,0454 | -0,0569 | -0,1243 | -0,1584 | -0,1626 | -0,1390 | -0,0878 |
| -10 | | | 0,9534 | 0,7332 | 0,5412 | 0,3805 | 0,2536 | 0,1612 | 0,1025 | 0,0754 | 0,0764 | 0,1034 | 0,1566 |
| -12 | | | 1,1536 | 0,9428 | 0,7611 | 0,6111 | 0,4948 | 0,4123 | 0,3618 | 0,3409 | 0,3467 | 0,3772 | 0,4331 |
| -14 | | | | 1,1858 | 1,0145 | 0,8750 | 0,7689 | 0,6958 | 0,6529 | 0,6376 | 0,6476 | 0,6818 | 0,7431 |
| -16 | | | | | 1,3024 | 1,1173 | 1,0763 | 1,0115 | 0,9754 | 0,9652 | 0,9794 | 1,0176 | 1,0809 |
| -18 | | | | | | 1,5052 | 1,4170 | 1,3592 | 1,3290 | 1,3236 | 1,3422 | 1,3845 | 1,4518 |
| -20 | | | | | | | 1,7904 | 1,7388 | 1,8136 | 1,7128 | 1,7356 | 1,7821 | 1,8531 |
| -22 | | | | | | | | | 2,1292 | 2,1326 | 2,1595 | 2,2098 | 2,2842 |
| -24 | | | | | | | | | | | | | 2,7441 |

Fig. 28 (1)

EP 3 740 814 B1

| | X | 0 | 2 | 4 | 6 | 8 | 10 | 12 | 14 | 16 | 18 | 20 | 22 | 24 |
|---|---|---|---|---|---|---|---|---|---|---|---|---|---|---|
| Y | | | | | | | | | | | | | | |
| 24 | | 1,3906 | | | | | | | | | | | | |
| 22 | | 0,9572 | 1,0603 | 1,2044 | 1,3880 | 1,6097 | | | | | | | | |
| 20 | | 0,5776 | 0,6788 | 0,8206 | 1,0022 | 1,2222 | 1,4790 | 1,7702 | | | | | | |
| 18 | | 0,2489 | 0,3481 | 0,4877 | 0,6669 | 0,8850 | 1,1404 | 1,4313 | 1,7558 | | | | | |
| 16 | | -0,0314 | 0,0659 | 0,2032 | 0,3801 | 0,5960 | 0,8498 | 1,1400 | 1,4649 | 1,8223 | | | | |
| 14 | | -0,2653 | -0,1699 | -0,0346 | 0,1401 | 0,3539 | 0,6060 | 0,8951 | 1,2201 | 1,5787 | 1,9678 | | | |
| 12 | | -0,4550 | -0,3611 | -0,2277 | -0,0549 | 0,1571 | 0,4077 | 0,6958 | 1,0205 | 1,3796 | 1,7701 | 2,1889 | | |
| 10 | | -0,6019 | -0,5095 | -0,3776 | -0,2063 | 0,0043 | 0,2535 | 0,5406 | 0,8648 | 1,2239 | 1,6150 | 2,0352 | | |
| 8 | | -0,7068 | -0,6155 | -0,4848 | -0,3148 | -0,1056 | 0,1421 | 0,4279 | 0,7510 | 1,1095 | 1,5005 | 1,9213 | 2,3689 | |
| 6 | | -0,7701 | -0,6798 | -0,5500 | -0,3810 | -0,1736 | 0,0720 | 0,3557 | 0,6769 | 1,0341 | 1,4244 | 1,8451 | 2,2930 | |
| 4 | | -0,7920 | -0,7027 | -0,5741 | -0,4067 | -0,2015 | 0,0413 | 0,3220 | 0,6408 | 0,9960 | 1,3849 | 1,8047 | 2,2522 | |
| 2 | | -0,7723 | -0,6846 | -0,5584 | -0,3940 | -0,1921 | 0,0475 | 0,3251 | 0,6411 | 0,9939 | 1,3808 | 1,7989 | 2,2452 | |
| 0 | | -0,7119 | -0,6262 | -0,5035 | -0,3434 | -0,1456 | 0,0903 | 0,3646 | 0,6776 | 1,0276 | 1,4118 | 1,8275 | 2,2714 | 2,7393 |
| -2 | | -0,6119 | -0,5284 | -0,4097 | -0,2545 | -0,0613 | 0,1705 | 0,4410 | 0,7505 | 1,0971 | 1,4781 | 1,8903 | 2,3306 | |
| -4 | | -0,4737 | -0,3921 | -0,2771 | -0,1267 | 0,0616 | 0,2886 | 0,5548 | 0,8601 | 1,2028 | 1,5798 | 1,9876 | 2,4226 | |
| -6 | | -0,2984 | -0,2183 | -0,1063 | 0,0400 | 0,2234 | 0,4452 | 0,7061 | 1,0067 | 1,3449 | 1,7169 | 2,1990 | 2,5471 | |
| -8 | | -0,0878 | -0,0082 | 0,1018 | 0,2448 | 0,4237 | 0,6402 | 0,8955 | 1,1906 | 1,5233 | 1,8893 | 2,2842 | 2,7034 | |
| -10 | | 0,1566 | 0,2368 | 0,3460 | 0,4868 | 0,6620 | 0,8734 | 1,1230 | 1,4120 | 1,7383 | 2,0969 | 2,4828 | | |
| -12 | | 0,4331 | 0,5154 | 0,6254 | 0,7653 | 0,9377 | 1,1448 | 1,3887 | 1,6712 | 1,9899 | 2,3393 | 2,7141 | | |
| -14 | | 0,7431 | 0,8268 | 0,9388 | 1,0790 | 1,2498 | 1,4533 | 1,6916 | 1,9668 | 2,2762 | 2,6144 | | | |
| -16 | | 1,0809 | 1,1701 | 1,2849 | 1,4264 | 1,5964 | 1,7969 | 2,0296 | 2,2961 | 2,5942 | | | | |
| -18 | | 1,4518 | 1,5445 | 1,6623 | 1,8057 | 1,9756 | 2,1732 | 2,3998 | 2,6563 | | | | | |
| -20 | | 1,8531 | 1,9491 | 2,0696 | 2,2145 | 2,3841 | 2,5786 | 2,7983 | | | | | | |
| -22 | | 2,2842 | 2,3827 | 2,5051 | 2,6507 | 2,8189 | | | | | | | | |
| -24 | | 2,7441 | | | | | | | | | | | | |

**Fig. 28 (2)**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8904986 A1
- WO 9913361 A1
- US 2010238400 A1
- WO 10109154 A1
- WO 0155752 A1
- DE 102008041869 A1
- EP 2177943 A1
- EP 3352001 B1
- EP 3591458 B1
- EP 2115527 B1
- DE 102015205721 A1
- EP 2383603 B1
- EP 0857993 B2
- EP 2878989 A1
- EP 16195139

**In der Beschreibung aufgeführte Nicht-Patentliteratur**

- **YUKI SHITANOKI et al.** Application of Graded-Index for Astigmatism Reduction in Progressive Addition Lens. *Applied Physics Express,* 01. Marz 2009, vol. 2, 032401
- **ALBERT J. AUGUSTIN.** Augenheilkunde. 3., komplett überarbeitete und erweiterte Auflage. Springer, 2007, 1272
- **HEINZ DIEPES ; RALF BLENDOWSKE.** Optik und Technik der Brille. 1. Auflage, Optische Fachveröffentlichung GmbH. Heidelberg, 2002, 482
- **WERNER KÖPPEN.** Konzeption und Entwicklung von Progressivgläsern. *Deutsche Optiker Zeitung DOZ,* vol. 10/95, 42-46
- **NACH HEINZ DIEPES ; RALF BLENDOWSKE.** Optik und Technik der Brille. Heidelberg, 2005, 256